# EUROPEAN PATENT APPLICATION

(11) **EP 4 290 790 A1**
(43) Date of publication of application: **13.12.2023**
(21) Application number: 21927307.5
(22) Date of filing: 26.02.2021

(54) **KEY ACQUISITION METHOD AND APPARATUS, AND KEY MANAGEMENT SYSTEM**

(71) Applicant: Huawei Technologies Co., Ltd., Shenzhen, Guangdong 518129 (CN)
(72) Inventor: SHENG, De, Shenzhen, Guangdong 518129 (CN); GENG, Feng, Shenzhen, Guangdong 518129 (CN); YIN, Xinxing, Shenzhen, Guangdong 518129 (CN)
(74) Representative: Pfenning, Meinig & Partner mbB
(86) International application number: PCT/CN2021/078283
(87) International publication number: WO 2022/178871

(57) **Abstract**

This application discloses a key obtaining method and apparatus, and a key management system, and relates to the field of intelligent vehicle technologies. This not only can improve communication security, but also can update a key at any time, which is quite convenient. The key management system includes a key server and a first node in a communication connection to the key server, where the first node is a key client or a key proxy. The key server is configured to: obtain first key information, and send the first key information to the first node. The first node is configured to: receive the first key information from the key server, and generate a first key based on the first key information, where the first key information includes a first key material and an identifier of a first communication domain. The identifier of the first communication domain is used to indicate the first communication domain, the first key is applied to the first communication domain, the first communication domain includes at least two nodes in the key management system, and the at least two nodes include the first node.

## Description

### TECHNICAL FIELD

This application relates to the field of intelligent vehicle and internet-connected vehicle technologies, and in particular, relates to a key obtaining method and apparatus, and a key management system.

### BACKGROUND

At present, internet of vehicles is considered to be one of fields with the most industry potential and the clearest market requirement in an internet of things system, and is featured by wide application space, great industry potential, and high social benefits. It is of great significance to promote innovation and development of the automobile and information communication industry, build new models and new industrial types of automobile and transportation services, facilitate innovation and application of autonomous driving technologies, and improve transportation efficiency and safety levels. Therefore, increasing attention has been paid to the internet of vehicles.

In the internet of vehicles, information security is always a focus of concern. The information security may be classified into in-vehicle information security and out-vehicle information security. For the in-vehicle information security, a key is installed in a key installing manner in a production line before in-vehicle devices are delivered, and then the in-vehicle devices are assembled on a vehicle. Subsequently, the in-vehicle devices communicate with each other through the installed key, to ensure the in-vehicle information security. The foregoing key is managed by a key management system of a vehicle manufacturer. In an aspect, if a keystore of the vehicle manufacturer is leaked, in-vehicle security of all vehicles in the vehicle manufacturer is greatly threatened. In another aspect, to improve in-vehicle security, the key used by the in-vehicle device needs to be periodically updated. However, each time the key is updated, the key needs to be updated in the vehicle manufacturer for the in-vehicle device, which is quite inconvenient.

### SUMMARY

This application provides a key obtaining method and apparatus, and a key management system, so that the key management system can be deployed in an intelligent vehicle, in a smart home scenario, or in a data center. This not only can improve communication security, but also can update a key at any time, which is quite convenient.

To achieve the foregoing objective, the following technical solutions are used in embodiments of this application.

According to a first aspect, an embodiment of this application provides a key obtaining method. The method is applied to a key management system, the key management system includes a key server and a first node in a communication connection to the key server, the first node is a key client or a key proxy, and the method includes: The key server obtains first key information, where the first key information includes a first key material and an identifier of a first communication domain, the first key material is used to generate a first key, the identifier of the first communication domain is used to indicate the first communication domain, the first key is applied to the first communication domain, the first communication domain includes at least two nodes in the key management system, and the at least two nodes include the first node; and the key server sends the first key information to the first node.

According to the key obtaining method provided in the first aspect, the key server may configure a first key for each node in the first communication domain, and subsequently the node in the first communication domain may perform communication by using the first key. In an aspect, the first key is stored by the node in the first communication domain, and is not easily leaked. Even if the first key is leaked, security of another communication domain is not affected. Therefore, communication security can be improved. In another aspect, the key server can update the key at any time, which is quite convenient. In addition, the first key occupies small storage space, and does not increase software and hardware costs of a node in the key management system. The first key does not need to be managed by a vehicle manufacturer, and management costs of the vehicle manufacturer are not increased.

In a possible implementation, the first communication domain is determined based on at least one of the following information: a connection manner of a node in the key management system, a function of the node in the key management system, or a type of communication information in the key management system. Based on the foregoing method, communication domains may be obtained through division based on different granularities. This improves diversity and flexibility of communication domain division. In addition, the communication domains obtained through division based on different granularities may cover a plurality of scenarios of communication between nodes in the key management system, for example, communication scenarios between nodes with a same connection manner, communication scenarios between nodes with a same function, or communication scenarios between nodes with a same type of communication information. Any one of the plurality of scenarios may correspond to one or more keys, so that communication security is improved.

In a possible implementation, the method further includes: The key server generates a first verification code based on first verification information, where the first verification information includes at least one of the following information: the first key, the first key material, first information, or an identifier of the key server, and the first information includes at least one of the following information: the identifier of the first communication domain, an identifier of the first key, or a first random number; and the key server sends the first information and the first verification code to the first node. Based on the foregoing method, the key server may send the first information and the first verification code to the first node, so that the first node verifies availability of the first key between the first node and the key server by using the first verification code, to avoid that normal communication cannot be performed between the first node and the key server due to a failure or an error in generating the first key.

In a possible implementation, the method further includes: The key server receives second information and a second verification code from the first node, where the second verification code is generated based on second verification information, the second verification information includes at least one of the following information: the first key, the first key material, the second information, an identifier of the first node, or the first random number, and the second information includes the identifier of the first communication domain and/or the identifier of the first key; and the key server verifies the second verification code. Based on the foregoing method, the key server may verify availability of the first key between the first node and the key server by using the second verification code, to avoid that normal communication cannot be performed between the first node and the key server due to a failure or an error in generating the first key.

In a possible implementation, the method further includes: The key server establishes a first secure channel with the first node based on a first protocol, where the first secure channel is used to transmit information between the key server and the first node. Based on the foregoing method, the first secure channel may be established between the key server and the first node, to improve security of communication between the key server and the first node.

In a possible implementation, a quantity of first nodes is greater than 1, and the first secure channel includes a point-to-point secure channel between the key server and each first node; the first secure channel includes a point-to-multipoint secure channel between the key server and each first node; or the first secure channel includes a point-to-point secure channel between the key server and a part of first nodes and a point-to-multipoint secure channel between the key server and the other part of first nodes. Based on the foregoing method, the first secure channel may include a plurality of forms. This increases diversity and flexibility of communication between the first node and the key server.

In a possible implementation, the first protocol includes a transport layer security protocol, an internet key exchange protocol, a hypertext transfer protocol secure protocol, a datagram transport layer security protocol, or a user-defined protocol. Based on the foregoing method, nodes in the key management system may support a plurality of protocols, so that flexibility and diversity of communication between the nodes in the key management system can be improved.

In a possible implementation, the first node is the key proxy, the key management system further includes a second node in a communication connection to the first node, and the second node is a key client. Based on the foregoing method, in addition to directly communicating with the key client, the key server may communicate with the key client through the key proxy.

In a possible implementation, the second node is included in the first communication domain. Based on the foregoing method, the key client in a communication connection to the key proxy may alternatively be included in the first communication domain, and the key server may alternatively configure the first key for the key client in the first communication domain through the key proxy. Subsequently, the key client may communicate with a node in the first communication domain by using the first key.

In a possible implementation, the method further includes: The key server receives first notification information from the first node, where the first notification information is used to notify a verification result of a node in the first communication domain. Based on the foregoing method, the first node may notify the key server of the verification result of the node in the first communication domain, so that the key server makes a response. For example, if the verification fails, the key server re-configures a key for the node in the first communication domain. For another example, if the verification succeeds, the key server may enable the first key.

In a possible implementation, the method further includes: The key server obtains first configuration information, where the first configuration information is used to indicate at least one of the following information: an identifier of the node in the key management system, the connection manner of the node in the key management system, or information about another node that communicates with the node in the key management system. Based on the foregoing method, the key server may obtain the first configuration information, so that the key server allocates configuration information corresponding to the node to the node in the key management system, and the node in the key management system may determine, based on the configuration information corresponding to the node, information about a communication domain in which the node is located.

In a possible implementation, the method further includes: The key server sends second configuration information to the first node, where the second configuration information is used to indicate at least one of the following information: the identifier of the first node, a connection manner of the first node, or information about another node that communicates with the first node. Based on the foregoing method, the key server may send the second configuration information to the first node, so that the first node may determine, based on the second configuration information, information about a communication domain in which the first node is located.

In a possible implementation, the first node is the key proxy, the key management system further includes the second node in a communication connection to the first node, the second node is the key client, and the second configuration information is further used to indicate at least one of the following information: an identifier of the second node, a connection manner of the second node, or information about another node that communicates with the second node. Based on the foregoing method, the second configuration information may alternatively include related configuration information of the second node, for example, the identifier of the second node, the connection manner of the second node, or the information about the another node that communicates with the second node, so that the first node allocates the related configuration information to the second node, and the second node may determine, based on the configuration information, information about a communication domain in which the second node is located.

In a possible implementation, the method further includes: The key server determines, based on the first configuration information, information about a communication domain in which the key server is located, where the information about the communication domain in which the key server is located is used to indicate at least one of the following information: an identifier of the communication domain in which the key server is located, a communication manner of a node in the communication domain in which the key server is located, a connection manner between the key server and a node other than the key server in the communication domain in which the key server is located, information about the node other than the key server in the communication domain in which the key server is located, or key information for building a key of the communication domain in which the key server is located. Based on the foregoing method, the key server may determine, based on the first configuration information, related information of the communication domain in which the key server is located, to subsequently configure the key for the communication domain in which the key server is located.

In a possible implementation, the method further includes: The key server receives first acknowledgment information from a key manager tool; the key server receives first acknowledgment information from a first terminal; or the key server receives first acknowledgment information from a second terminal, where the first acknowledgment information is used to trigger the key server to obtain the first key information. Based on the foregoing method, the key server may be triggered by using a plurality of methods to configure the key for the key proxy or the key client.

According to a second aspect, an embodiment of this application provides a key obtaining method. The method is applied to a key management system, the key management system includes a key server and a first node in a communication connection to the key server, the first node is a key client or a key proxy, and the method includes: The first node receives first key information from the key server, where the first key information includes a first key material and an identifier of a first communication domain, and the identifier of the first communication domain is used to indicate the first communication domain; and the first node generates a first key based on the first key material, where the first key is applied to the first communication domain, the first communication domain includes at least two nodes in the key management system, and the at least two nodes include the first node.

According to the key obtaining method provided in the second aspect, the first node may receive the first key information from the key server, and generate the first key based on the first key material included in the first key information. Subsequently, the first node may communicate with another node in the first communication domain by using the first key. In an aspect, the first key is stored by the node in the first communication domain, and is not easily leaked. Even if the first key is leaked, security of another communication domain is not affected. Therefore, communication security can be improved. In another aspect, the key server can update the key at any time, which is quite convenient. In addition, the first key occupies small storage space, and does not increase software and hardware costs of a node in the key management system. The first key does not need to be managed by a vehicle manufacturer, and management costs of the vehicle manufacturer are not increased.

In a possible implementation, the first communication domain is determined based on at least one of the following information: a connection manner of a node in the key management system, a function of the node in the key management system, or a type of communication information in the key management system. Based on the foregoing method, communication domains may be obtained through division based on different granularities. This improves diversity and flexibility of communication domain division. In addition, the communication domains obtained through division based on different granularities may cover a plurality of scenarios of communication between nodes in the key management system. Any one of the plurality of scenarios may correspond to one or more keys, so that communication security is improved.

In a possible implementation, the method further includes: The first node receives first information and a first verification code from the key server, where the first verification code is generated based on first verification information, the first verification information includes at least one of the following information: the first key, the first key material, the first information, or an identifier of the key server, and the first information includes at least one of the following information: the identifier of the first communication domain, an identifier of the first key, or a first random number; and the first node verifies the first verification code. Based on the foregoing method, the first node may verify availability of the first key between the first node and the key server by using the first verification code, to avoid that normal communication cannot be performed between the first node and the key server due to a failure or an error in generating the first key.

In a possible implementation, the method further includes: The first node generates a second verification code based on second verification information, where the second verification information includes at least one of the following information: the first key, the first key material, second information, an identifier of the first node, or the first random number, and the second information includes the identifier of the first communication domain and/or the identifier of the first key; and the first node sends the second information and the second verification code to the key server. Based on the foregoing method, the first node may send the second information and the second verification code to the key server, so that the key server verifies availability of the first key between the first node and the key server by using the second verification code, to avoid that normal communication cannot be performed between the first node and the key server due to a failure or an error in generating the first key.

In a possible implementation, the method further includes: The first node establishes a first secure channel with the key server based on a first protocol, where the first secure channel is used to transmit information between the key server and the first node. Based on the foregoing method, the first secure channel may be established between the key server and the first node, to improve security of communication between the key server and the first node.

In a possible implementation, a quantity of first nodes is greater than 1, and the first secure channel includes a point-to-point secure channel between the key server and each first node; the first secure channel includes a point-to-multipoint secure channel between the key server and each first node; or the first secure channel includes a point-to-point secure channel between the key server and a part of first nodes and a point-to-multipoint secure channel between the key server and the other part of first nodes. Based on the foregoing method, the first secure channel may include a plurality of forms. This increases diversity and flexibility of communication between the first node and the key server.

In a possible implementation, the first node is the key proxy, the key management system further includes a second node in a communication connection to the first node, and the second node is a key client. Based on the foregoing method, in addition to directly communicating with the key client, the key server may communicate with the key client through the key proxy.

In a possible implementation, the second node is included in the first communication domain, and the method further includes: The first node sends the first key material and the identifier of the first communication domain to the second node. Based on the foregoing method, if the second node is included in the first communication domain, the key server may further configure the first key for the second node through the first node. Subsequently, the second node may also communicate with a node in the first communication domain by using the first key.

In a possible implementation, the method further includes: The first node generates a third verification code based on third verification information, where the third verification information includes at least one of the following information: the first key, the first key material, third information, or the identifier of the first node, and the third information includes at least one of the following information: the identifier of the first communication domain, the identifier of the first key, or a second random number; and the first node sends the third information and the third verification code to the second node. Based on the foregoing method, the first node may send the third information and the third verification code to the second node, so that the second node verifies availability of the first key between the first node and the second node by using the third verification code, to avoid that normal communication cannot be performed between the first node and the second node due to a failure or an error in generating the first key.

In a possible implementation, the method further includes: The first node receives fourth information and a fourth verification code from the second node, where the fourth verification code is obtained based on fourth verification information, the fourth verification information includes at least one of the following information: the first key, the first key material, the fourth information, an identifier of the second node, or the second random number, and the fourth information includes the identifier of the first communication domain and/or the identifier of the first key; and the first node verifies the fourth verification code. Based on the foregoing method, the first node may verify availability of the first key between the first node and the second node by using the fourth verification code, to avoid that normal communication cannot be performed between the first node and the second node due to a failure or an error in generating the first key.

In a possible implementation, the method further includes: The first node sends first notification information to the key server, where the first notification information is used to notify a verification result of a node in the first communication domain. Based on the foregoing method, the first node may notify the key server of the verification result of the node in the first communication domain, so that the key server makes a response. For example, if the verification fails, the key server re-configures a key for the node in the first communication domain. For another example, if the verification succeeds, the key server may enable the first key.

In a possible implementation, the method further includes: The first node establishes a second secure channel with the second node based on the first protocol, where the second secure channel is used to transmit information between the first node and the second node. Based on the foregoing method, the second secure channel may be established between the first node and the second node, to improve security of communication between the first node and the second node.

In a possible implementation, a quantity of second nodes is greater than 1, and the second secure channel includes a point-to-point secure channel between the first node and each second node; the second secure channel includes a point-to-multipoint secure channel between the first node and each second node; or the second secure channel includes a point-to-point secure channel between the first node and a part of second nodes and a point-to-multipoint secure channel between the first node and the other part of second nodes. Based on the foregoing method, the second secure channel may include a plurality of forms. This increases diversity and flexibility of communication between the first node and the second node.

In a possible implementation, the first protocol includes a transport layer security protocol, an internet key exchange protocol, a hypertext transfer protocol secure protocol, a datagram transport layer security protocol, or a user-defined protocol. Based on the foregoing method, nodes in the key management system may support a plurality of protocols, so that flexibility and diversity of communication between the nodes in the key management system can be improved.

In a possible implementation, the method further includes: The first node receives second configuration information from the key server, where the second configuration information is used to indicate at least one of the following information: the identifier of the first node, a connection manner of the first node, or information about another node that communicates with the first node. Based on the foregoing method, the first node may receive the second configuration information from the key server, so that the first node may determine, based on the second configuration information, information about a communication domain in which the first node is located.

In a possible implementation, the first node is the key proxy, the key management system further includes the second node in a communication connection to the first node, the second node is the key client, and the second configuration information is further used to indicate at least one of the following information: the identifier of the second node, a connection manner of the second node, or information about another node that communicates with the second node; and the method further includes: The first node sends third configuration information to the second node, where the third configuration information is used to indicate at least one of the following information: the identifier of the second node, the connection manner of the second node, or the information about the another node that communicates with the second node. Based on the foregoing method, the first node may send the third configuration information to the second node, so that the second node may determine, based on the third configuration information, information about a communication domain in which the second node is located.

In a possible implementation, the method further includes: The first node determines, based on the second configuration information, information about a communication domain in which the first node is located, where the information about the communication domain in which the first node is located is used to indicate at least one of the following information: an identifier of the communication domain in which the first node is located, a communication manner of a node in the communication domain in which the first node is located, a connection manner between the first node and a node other than the first node in the communication domain in which the first node is located, information about the node other than the first node in the communication domain in which the first node is located, or key information for building a key of the communication domain in which the first node is located. Based on the foregoing method, the first node may determine, based on the second configuration information, related information of the communication domain in which the first node is located, so that the key server subsequently configures the key for the communication domain in which the first node is located.

According to a third aspect, an embodiment of this application provides a key obtaining method. The method is applied to a key management system, the key management system includes a key server, a key proxy in a communication connection to the key server, and a key client in a communication connection to the key proxy, and the method includes: The key client receives a first key material and an identifier of a first communication domain from the key proxy, where the identifier of the first communication domain is used to indicate the first communication domain; and the key client generates a first key based on the first key material, where the first key is applied to the first communication domain, the first communication domain includes at least two nodes in the key management system, and the at least two nodes include the key client.

According to the key obtaining method provided in the third aspect, the key client may receive first key information from the key proxy, and generate the first key based on the first key material included in the first key information. Subsequently, the key client may communicate with another node in the first communication domain by using the first key. In an aspect, the first key is stored by the node in the first communication domain, and is not easily leaked. Even if the first key is leaked, security of another communication domain is not affected. Therefore, communication security can be improved. In another aspect, the key server can update the key at any time, which is quite convenient. In addition, the first key occupies small storage space, and does not increase software and hardware costs of a node in the key management system. The first key does not need to be managed by a vehicle manufacturer, and management costs of the vehicle manufacturer are not increased.

In a possible implementation, the first communication domain is determined based on at least one of the following information: a connection manner of a node in the key management system, a function of the node in the key management system, or a type of communication information in the key management system. Based on the foregoing method, communication domains may be obtained through division based on different granularities. This improves diversity and flexibility of communication domain division. In addition, the communication domains obtained through division based on different granularities may cover a plurality of scenarios of communication between nodes in the key management system. Any one of the plurality of scenarios may correspond to one or more keys, so that communication security is improved.

In a possible implementation, the method further includes: The key client receives third information and a third verification code from the key proxy, where the third verification code is obtained based on third verification information, the third verification information includes at least one of the following information: the first key, the first key material, the third information, or an identifier of the key proxy, and the third information includes at least one of the following information: the identifier of the first communication domain, an identifier of the first key, or a second random number; and the key client verifies the third verification code. Based on the foregoing method, the key client may verify availability of the first key between the key client and the key proxy by using the third verification code, to avoid that normal communication cannot be performed between the key client and the key proxy due to a failure or an error in generating the first key.

In a possible implementation, the method further includes: The key client generates a fourth verification code based on fourth verification information, where the fourth verification information includes at least one of the following information: the first key, the first key material, fourth information, an identifier of the key client, or the second random number, and the fourth information includes the identifier of the first communication domain and/or the identifier of the first key; and the key client sends the fourth information and the fourth verification code to the key proxy. Based on the foregoing method, the key client may send the fourth information and the fourth verification code to the key proxy, so that the key proxy verifies availability of the first key between the key client and the key proxy by using the fourth verification code, to avoid that normal communication cannot be performed between the key client and the key proxy due to a failure or an error in generating the first key.

In a possible implementation, the method further includes: The key client establishes a second secure channel with the key proxy based on a first protocol, where the second secure channel is used to transmit information between the key client and the key proxy. Based on the foregoing method, the second secure channel may be established between the key proxy and the key client, to improve security of communication between the key proxy and the key client.

In a possible implementation, a quantify of key clients is greater than 1, and the second secure channel includes a point-to-point secure channel between the key proxy and each key client; the second secure channel includes a point-to-multipoint secure channel between the key proxy and each key client; or the second secure channel includes a point-to-point secure channel between the key proxy and a part of key clients and a point-to-multipoint secure channel between the key proxy and the other part of key clients. Based on the foregoing method, the second secure channel may include a plurality of forms. This increases diversity and flexibility of communication between the first node and the second node.

In a possible implementation, the first protocol includes a transport layer security protocol, an internet key exchange protocol, a hypertext transfer protocol secure protocol, a datagram transport layer security protocol, or a user-defined protocol. Based on the foregoing method, nodes in the key management system may support a plurality of protocols, so that flexibility and diversity of communication between the nodes in the key management system can be improved.

In a possible implementation, the method further includes: The key client receives third configuration information from the key proxy, where the third configuration information is used to indicate at least one of the following information: the identifier of the key client, a connection manner of the key client, or information about another node that communicates with the key client. Based on the foregoing method, the key client may receive the third configuration information from the key proxy, so that the key client determines, based on the third configuration information, information about a communication domain in which the key client is located.

In a possible implementation, the method further includes: The key client determines, based on the third configuration information, information about a communication domain in which the key client is located, where the information about the communication domain in which the key client is located is used to indicate at least one of the following information: an identifier of the communication domain in which the key client is located, a communication manner of a node in the communication domain in which the key client is located, a connection manner between the key client and a node other than the key client in the communication domain in which the key client is located, information about the node other than the key client in the communication domain in which the key client is located, or key information for building a key of the communication domain in which the key client is located. Based on the foregoing method, the key client may determine, based on the third configuration information, related information of the communication domain in which the key client is located, so that the key server subsequently configures the key for the communication domain in which the key client is located.

According to a fourth aspect, an embodiment of this application provides a key obtaining apparatus. The apparatus may implement the method according to any one of the first aspect or the possible implementations of the first aspect. The apparatus includes a corresponding unit or component configured to perform the foregoing method. The unit included in the apparatus may be implemented by software and/or hardware. For example, the apparatus may be a key server, or a chip, a chip system, a processor, or the like that can support the key server in implementing the foregoing method.

According to a fifth aspect, an embodiment of this application provides a key obtaining apparatus, to implement the method according to any one of the second aspect or the possible implementations of the second aspect. The apparatus includes a corresponding unit or component configured to perform the foregoing method. The unit included in the apparatus may be implemented by software and/or hardware. For example, the apparatus may be a first node, or a chip, a chip system, a processor, or the like that can support the first node in implementing the foregoing method.

According to a sixth aspect, an embodiment of this application provides a key obtaining apparatus. The apparatus may implement the method according to any one of the third aspect or the possible implementations of the third aspect. The apparatus includes a corresponding unit or component configured to perform the foregoing method. The unit included in the apparatus may be implemented by software and/or hardware. For example, the apparatus may be a key client, or a chip, a chip system, a processor, or the like that can support the key client in implementing the foregoing method.

According to a seventh aspect, an embodiment of this application provides a key obtaining apparatus. The apparatus includes a processor. The processor is coupled to a memory. The memory is configured to store a program or instructions. When the program or the instructions are executed by the processor, the apparatus is enabled to implement the method according to any one of the first aspect or the possible implementations of the first aspect.

According to an eighth aspect, an embodiment of this application provides a key obtaining apparatus. The apparatus includes a processor. The processor is coupled to a memory. The memory is configured to store a program or instructions. When the program or the instructions are executed by the processor, the apparatus is enabled to implement the method according to any one of the second aspect or the possible implementations of the second aspect.

According to a ninth aspect, an embodiment of this application provides a key obtaining apparatus. The apparatus includes a processor. The processor is coupled to a memory. The memory is configured to store a program or instructions. When the program or the instructions are executed by the processor, the apparatus is enabled to implement the method according to any one of the third aspect or the possible implementations of the third aspect.

According to a tenth aspect, an embodiment of this application provides a computer-readable medium. The computer-readable medium stores a computer program or instructions. When the computer program or the instructions are executed, a computer is enabled to perform the method according to any one of the first aspect or the possible implementations of the first aspect.

According to an eleventh aspect, an embodiment of this application provides a computer-readable medium. The computer-readable medium stores a computer program or instructions. When the computer program or the instructions are executed, a computer is enabled to perform the method according to any one of the second aspect or the possible implementations of the second aspect.

According to a twelfth aspect, an embodiment of this application provides a computer-readable medium. The computer-readable medium stores a computer program or instructions. When the computer program or the instructions are executed, a computer is enabled to perform the method according to any one of the third aspect or the possible implementations of the third aspect.

According to a thirteenth aspect, an embodiment of this application provides a computer program product. The computer program product includes computer program code. When the computer program code is run on a computer, the computer is enabled to perform the method according to any one of the first aspect or the possible implementations of the first aspect.

According to a fourteenth aspect, an embodiment of this application provides a computer program product. The computer program product includes computer program code. When the computer program code is run on a computer, the computer is enabled to perform the method according to any one of the second aspect or the possible implementations of the second aspect.

According to a fifteenth aspect, an embodiment of this application provides a computer program product. The computer program product includes computer program code. When the computer program code is run on a computer, the computer is enabled to perform the method according to any one of the third aspect or the possible implementations of the third aspect.

According to a sixteenth aspect, an embodiment of this application provides a chip system. The chip system includes at least one processor, configured to support implementation of functions according to any one of the first aspect or the possible implementations of the first aspect, for example, receiving, sending, or processing data and/or information in the foregoing method.

According to a seventeenth aspect, an embodiment of this application provides a chip system. The chip system includes at least one processor, configured to support implementation of functions according to any one of the second aspect or the possible implementations of the second aspect, for example, receiving, sending, or processing data and/or information in the foregoing method.

According to an eighteenth aspect, an embodiment of this application provides a chip system. The chip system includes at least one processor, configured to support implementation of functions according to any one of the third aspect or the possible implementations of the third aspect, for example, receiving, sending, or processing data and/or information in the foregoing method.

In a possible implementation of the sixteenth aspect, the seventeenth aspect, or the eighteenth aspect, the chip system further includes a memory. The memory is configured to store program instructions and data, and the memory is located inside the processor or outside the processor. The chip system may include a chip, or may include a chip and another discrete component.

According to a nineteenth aspect, an embodiment of this application provides a key management system. The system includes the apparatus according to the fourth aspect and/or the fifth aspect and/or the sixth aspect. Alternatively, the system includes the apparatus according to the seventh aspect and/or the eighth aspect and/or the ninth aspect. Alternatively, the system includes the computer-readable medium according to the tenth aspect and/or the eleventh aspect and/or the twelfth aspect. Alternatively, the system includes the computer program product according to the thirteenth aspect and/or the fourteenth aspect and/or the fifteenth aspect. Alternatively, the system includes the chip system according to the sixteenth aspect and/or the seventeenth aspect and/or the eighteenth aspect.

It may be understood that any key obtaining apparatus, chip system, computer-readable medium, computer program product, key management system, or the like provided above is configured to perform a corresponding method provided above. Therefore, for beneficial effects that can be achieved by the key obtaining apparatus, the chip system, the computer-readable medium, the computer program product, the key management system, or the like, refer to beneficial effects in the corresponding method. Details are not described herein again.

### BRIEF DESCRIPTION OF DRAWINGS

FIG. 1A is a schematic diagram 1 of an architecture of a key management system according to an embodiment of this application;
FIG. 1B is a schematic diagram 2 of an architecture of a key management system according to an embodiment of this application;
FIG. 2A is a schematic diagram 1 of an architecture of an intelligent vehicle according to an embodiment of this application;
FIG. 2B is a schematic diagram 2 of an architecture of an intelligent vehicle according to an embodiment of this application;
FIG. 2C is a schematic deployment diagram of a key management system according to an embodiment of this application;
FIG. 3 is a schematic diagram of a hardware structure of a key obtaining apparatus according to an embodiment of this application;
FIG. 4 to FIG. 12A and FIG. 12B are schematic flowcharts of key obtaining methods according to embodiments of this application;
FIG. 13 is a schematic diagram of a message format of first-type information and a message format of second-type information according to an embodiment of this application;
FIG. 14 is a schematic diagram of a TLV (type, length, value) format according to an embodiment of this application; and
FIG. 15 and FIG. 16 are schematic diagrams of structures of key obtaining apparatuses according to embodiments of this application.

### DESCRIPTION OF EMBODIMENTS

It may be understood that, to improve in-vehicle information security, for example, but not limited to, the following two manners may be used to perform communication between in-vehicle devices:
1. A key is installed in a key installing manner in a production line before in-vehicle devices are delivered, and then the in-vehicle devices are assembled on a vehicle. Subsequently, the in-vehicle devices communicate with each other through the installed key, to ensure the in-vehicle information security. However, the foregoing key is managed by a key management system of a vehicle manufacturer. If a keystore of the vehicle manufacturer is leaked, in-vehicle security of all vehicles in the vehicle manufacturer is greatly threatened. In addition, to improve in-vehicle security, the key used by the in-vehicle device needs to be periodically updated. However, each time the key is updated, the key needs to be updated in the vehicle manufacturer for the in-vehicle device, which is quite inconvenient.
2. A certificate is required for authentication before communication between in-vehicle devices is performed, and communication can be performed only after the authentication is successful. In this manner, at least one certificate needs to be deployed on the in-vehicle device. This increases software and hardware costs of the in-vehicle device and costs of managing the certificate by the vehicle manufacturer.

To resolve the foregoing problem, embodiments of this application provide a key obtaining method. The method may be applied to a key management system. A key server in the key management system may configure a first key for each node in a first communication domain. Subsequently, the node in the first communication domain may perform communication by using the first key. In an aspect, the first key is stored by the node in the first communication domain, and is not easily leaked. Even if the first key is leaked, security of another communication domain is not affected. Therefore, communication security can be improved. In addition, the key management system of the vehicle manufacturer does not need to manage a key of each vehicle. This reduces a burden of the key management system of the vehicle manufacturer. In another aspect, the key server can update the key at any time, which is quite convenient. In addition, the first key occupies small storage space, and does not increase software and hardware costs of the node in the key management system. The first key does not need to be managed by the vehicle manufacturer, and management costs of the vehicle manufacturer are not increased.

It may be understood that the key obtaining method provided in embodiments of this application may be applied to various short-range communication scenarios or communication scenarios between devices in closed space, for example, an intelligent vehicle, an intelligent home, or a data center.

For example, the key obtaining method provided in embodiments of this application may be applied to communication between different devices in the intelligent home or the data center. The key obtaining method provided in embodiments of this application may alternatively be applied to an intelligent cockpit of a vehicle, an intelligent cockpit of a train, an intelligent cockpit of an aircraft, or the like. In the following embodiments of this application, an intelligent vehicle is used as an example for description. For descriptions of other cases, refer to the descriptions of the intelligent vehicle in embodiments of this application. Details are not described.

First, to facilitate understanding of the solutions in embodiments of this application, related concepts are briefly described as follows:

### 1. Basic key

The basic key may be a key (for example, a long-term key or a temporary key) on which a process of identity authentication or key agreement performed based on a security protocol is relied. It may be understood that the basic key is not lost after a device is powered off, and is not invalid after a session is disconnected.

### 2. Temporary key

The temporary key may be a key temporarily derived or agreed on in the process of identity authentication or key agreement based on the security protocol. Optionally, the temporary key is lost after the device is powered off, and is invalid after the session is disconnected.

### 3. Fixed key

The fixed key usually is not updated. An intelligent vehicle is used as an example. The fixed key may be installed in devices in the intelligent vehicle when the devices in the intelligent vehicle are delivered or when the devices in the intelligent vehicle need to be replaced, so that the devices in the intelligent vehicle communicate with each other by using the fixed key, to improve communication security. The fixed key may alternatively be used as a basic key to derive another key, like a long-term key. It should be understood that, during specific application, if fixed secure storage allows, the fixed key may also be updated.

### 4. Long-term key

The long-term key is usually updated periodically or irregularly to improve security of the basic key that derives the long-term key. It may be understood that the long-term key may alternatively be used as a basic key to derive another key.

It may be understood that the basic key and the temporary key are obtained through division based on properties of the keys. The basic key is not easy to lose and can be used in one or more communications. The temporary key is easily lost and is usually derived for one communication. The fixed key and the long-term key are obtained through division based on a validity period of the key, and use time of the fixed key is generally longer than that of the long-term key.

It may be understood that in embodiments of this application, storage requirements for different types of keys are different. For the fixed key, update may be disabled, or resetting or update may only be performed through a dedicated tool. The fixed key may be stored in a non-volatile secure area. For the long-term key or the temporary key, update may be supported, and no dedicated tool is required in a process of configuring or updating the long-term key. The long-term key may be stored in the non-volatile secure area.

If the non-volatile secure area storing the long-term key or the temporary key does not support a key update function, that is, in a case in which information stored in the non-volatile secure area cannot be updated, the basic key of the long-term key or the temporary key may be stored in the non-volatile secure area (where the basic key may not be updated), and a derivation material of the long-term key or the temporary key is encrypted and stored in a common area outside the non-volatile secure area. If the long-term key or the temporary key needs to be updated, the derivation material may be updated, to implement update of the long-term key or the temporary key.

### 5. Use scope of the key

The use scope of the key may also be referred to as a protection scope of the key or a sharing scope of the key. An intelligent vehicle is used as an example, the use scope of the key includes a vehicle manufacturer, an entire vehicle, or a communication domain. For example, in a case in which the use scope of the key includes the vehicle manufacturer, all intelligent vehicles belonging to the vehicle manufacturer can use the key. In a case in which the use scope of the key includes the entire vehicle, all devices in the entire vehicle can use the key. In a case in which the use scope of the key includes the communication domain, all devices included in the communication domain can use the key. The communication domain may include all or a part of devices in the intelligent vehicle.

The following describes implementations of embodiments of this application in detail with reference to the accompanying drawings.

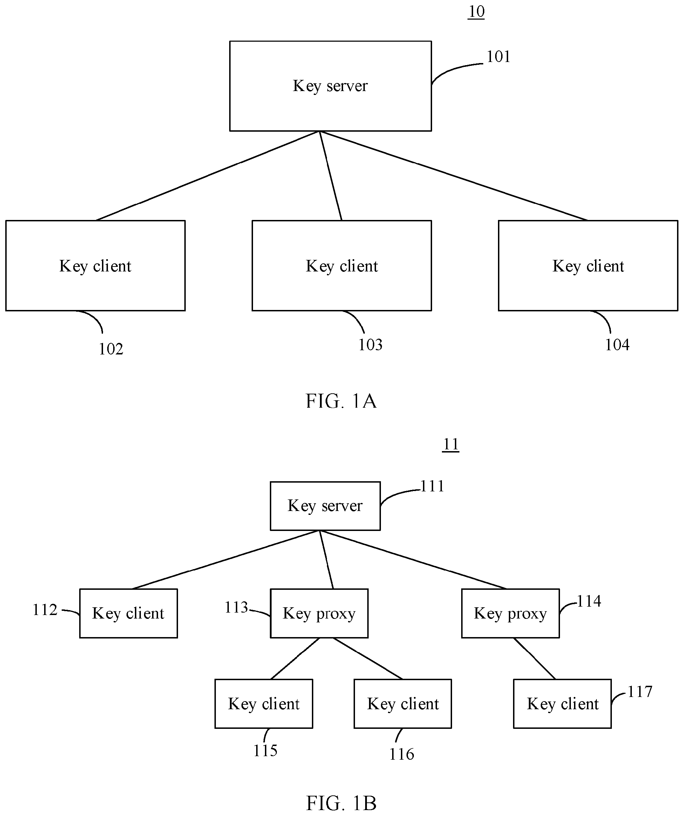

FIG. 1A shows a key management system according to an embodiment of this application. FIG. 1A is only a schematic diagram, and does not constitute a limitation on the key management system provided in this application.

In FIG. 1A, the key management system 10 includes a key server 101 and a key client 102 to a key client 104 that are in a communication connection to the key server 101. Optionally, the key client 102 to the key client 104 are in a communication connection. The key server 101 may be configured to configure a key for a node in the key management system 10, for example, the key client 102. Optionally, the key server 101 may alternatively allocate configuration information related to the node to the node in the key management system 10, for example, an identifier of the node or a connection manner of the node. The key clients in FIG. 1A, for example, the key client 102 to the key client 104, may be configured to generate a key of a communication domain in which the key clients are located.

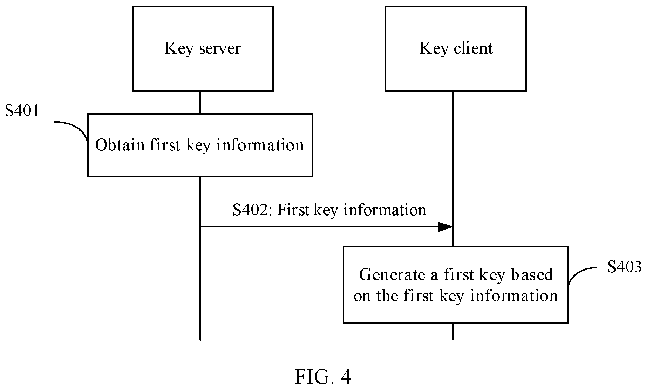

For example, the key server 101 may be configured to: obtain first key information, and send the first key information to a first node in a first communication domain. The first node may be the key client 102, the key client 103, or the key client 104. The first node may be configured to: receive the first key information from the key server 101, and generate a first key based on the first key information. This process is specifically described in the following embodiments shown in FIG. 4 to FIG. 6. In the foregoing process, the key server 101 may configure a key for nodes in one or more communication domains in the key management system 10, so that nodes in a same communication domain can communicate with each other by using the key configured by the key server 101. In an aspect, in the key configuration process, a device other than the key management system 10 does not need to participate. Therefore, information security of the key management system 10 can be improved. In addition, the key management system of a vehicle manufacture does not need to manage a key of each vehicle. This reduces a burden of the key management system of the vehicle manufacturer. In another aspect, the key server 101 can update the key at any time, which is quite convenient. In addition, the first key occupies small storage space, and does not increase software and hardware costs of the node in the key management system 10. The first key does not need to be managed by the vehicle manufacturer, and management costs of the vehicle manufacturer are not increased.

Optionally, the key management system 10 further includes a key manager tool (not shown in FIG. 1A). The key manager tool may be in a communication connection to the key server 101, and is configured to trigger the key server 101 to configure the key for the nodes in the one or more communication domains in the key management system 10.

The key management system 10 shown in FIG. 1A is merely used as an example, and is not intended to limit the technical solutions of this application. A person skilled in the art should understand that, in a specific implementation process, the key management system 10 may alternatively include another node, and a quantity of key servers or key clients may alternatively be determined based on a specific requirement. This is not limited.

In the key management system shown in FIG. 1A, the key client may directly communicate with the key server. During specific application, the key client may alternatively communicate with the key server by using a key proxy. FIG. 1B shows another key management system according to an embodiment of this application. FIG. 1B is only a schematic diagram, and does not constitute a limitation on the key management system provided in this application.

In FIG. 1B, the key management system 11 includes a key server 111, a key client 112 in a communication connection to the key server 111, a key proxy 113 and a key proxy 114, a key client 115 and a key client 116 that are in a communication connection to the key proxy 113, and a key client 117 in a communication connection to the key proxy 114. Optionally, the key client 115 and the key client 116 are in a communication connection. The key server 111 may be configured to configure a key for a node in the key management system 11, for example, the key proxy 113, the key client 115, or the key client 112. Optionally, the key server 111 may alternatively allocate configuration information related to the node to the node in the key management system 11, for example, an identifier of the node or a connection manner of the node. The key proxy in FIG. 1A may be configured to receive information sent by the key server. The key proxy in FIG. 1A may be further configured to forward the information sent by the key server to the key client. The key proxy in FIG. 1A may be further configured to generate a key of a communication domain in which the key proxy is located. The key clients in FIG. 1A, for example, the key client 102 to the key client 104, may be configured to generate a key of a communication domain in which the key clients are located.

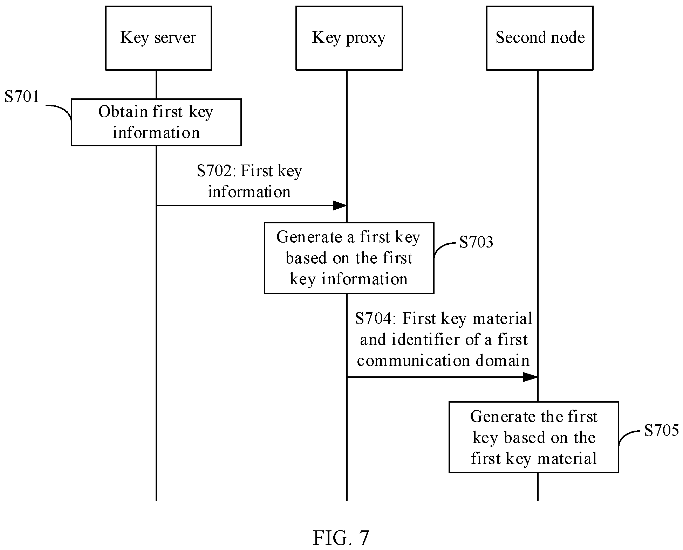

For example, the key server 111 may be configured to: obtain first key information, and send the first key information to a first node in a first communication domain. The first node may be the key client 112, the key proxy 113, or the key proxy 114. The first node may be configured to: receive the first key information from the key server 111, and generate a first key based on the first key information. The first node may be further configured to send the first key information to a second node in the first communication domain. The second node is a node in a communication connection to the first node. For example, if the first node is the key proxy 113, the second node may be the key client 115 or the key client 116; or if the first node is the key proxy 114, the second node may be the key client 117. The second node may be configured to: receive the first key information from the first node, and generate the first key based on the first key information. This process is specifically described in the following embodiments shown in FIG. 7 to FIG. 11. In the foregoing process, the key server 111 may configure a key for nodes in one or more communication domains in the key management system 11, so that nodes in a same communication domain can communicate with each other by using the key configured by the key server 111. In an aspect, in the key configuration process, a device other than the key management system 11 does not need to participate. Therefore, information security of the key management system 11 can be improved. In addition, the key management system of a vehicle manufacture does not need to manage a key of each vehicle. This reduces a burden of the key management system of the vehicle manufacturer. In another aspect, the key server 111 can update the key at any time, which is quite convenient. In addition, the first key occupies small storage space, and does not increase software and hardware costs of the node in the key management system 11. The first key does not need to be managed by the vehicle manufacturer, and management costs of the vehicle manufacturer are not increased.

Optionally, the key management system 11 further includes a key manager tool (not shown in FIG. 1B). The key manager tool may be in a communication connection to the key server 111, and is configured to trigger the key server 111 to configure the key for the nodes in the one or more communication domains in the key management system 11.

The key management system 11 shown in FIG. 1B is merely used as an example, and is not intended to limit the technical solutions of this application. A person skilled in the art should understand that, in a specific implementation process, the key management system 11 may alternatively include another node, and a quantity of key servers, key proxies, or key clients may alternatively be determined based on a specific requirement. This is not limited.

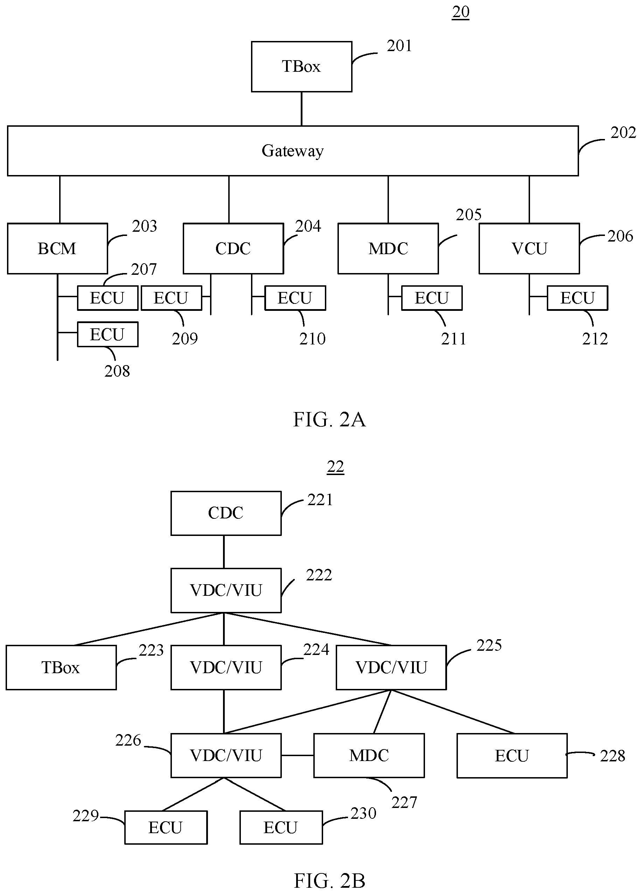

FIG. 2A and FIG. 2B show architectures of intelligent vehicles according to embodiments of this application. FIG. 2A and FIG. 2B are merely schematic diagrams, and do not constitute a limitation on the architectures of the intelligent vehicles provided in this application.

In FIG. 2A, the intelligent vehicle 20 includes a telematics box (telematics box, TBox) 201, a gateway 202 in a communication connection to the TBox 201, a body control module (body control module, BCM) 203, a cockpit domain controller (cockpit domain controller, CDC) 204, a multi domain controller (multi domain controller, MDC) 205, and a vehicle control unit (vehicle control unit, VCU) 206 that are in a communication connection to the gateway 202, an electronic control unit (electronic control unit, ECU) 207 and an ECU 208 that are in a communication connection to the BCM 203, an ECU 209 and an ECU 210 that are in a communication connection to the CDC 204, an ECU 211 in a communication connection to the MDC 205, and an ECU 212 in a communication connection to the VCU 206.

The TBox 201 and the gateway 202 may be connected through an Ethernet. Connections between the gateway 202 and the BCM 203, the CDC 204, the MDC 205, and the VCU 206, between the BCM 203 and the ECU 207 and the ECU 208, between the CDC 204 and the ECU 209 and the ECU 210, between the MDC 205 and the ECU 211, and between the VCU 206 and the ECU 212 may be performed through the Ethernet, a controller area network (controller area network, CAN), a CAN with flexible data-rate (CAN with flexible data-rate, CAN FD), a local interconnect network (local interconnect network, LIN), a media oriented system transport (media oriented system transport, MOST) bus, or an FlexRay. For example, connections between the gateway 202 and the BCM 203, and between the BCM 203 and the ECU 207 and the ECU 208 may be performed through the CAN, and connections between the gateway 202 and the CDC 204, and between the CDC 204 and the ECU 209 and the ECU 210 may be performed through the LIN.

The TBox 201 in FIG. 2A may have a capability of communicating with an external device of the intelligent vehicle 20 and an internal device of the intelligent vehicle 20. The gateway 202 is a core component of the intelligent vehicle 20, and the gateway 202 may route network data such as the CAN, the LIN, the MOST bus, or the FlexRay in different networks. The BCM 203 may be configured to control hardware devices such as a vehicle door, a vehicle window, a seat, and a vehicle light. The CDC 204 may have functions related to human-machine interaction (human-machine interaction, HMI) and an intelligent cockpit. The CDC 204 may further have a capability of communicating with an external device of the intelligent vehicle 20 and an internal device of the intelligent vehicle 20. The MDC 205 may access signals of different sensors, analyze and process the signals, and send a control command. The VCU 206 may be configured to coordinate and control a power system of the intelligent vehicle 20. The ECU in FIG. 2A may be a microcomputer controller of the intelligent vehicle 20, and may have a capability of executing a preset control function. For example, the ECU 212 may be configured to control an engine to run, and the ECU 211 may be configured to protect security of the intelligent vehicle.

The intelligent vehicle 20 shown in FIG. 2A is merely used as an example, and is not intended to limit the technical solutions of this application. A person skilled in the art should understand that, in a specific implementation process, the intelligent vehicle 20 may alternatively include another node, and a quantity of TBoxes, gateways, BCMs, CDCs, MDCs, VCUs, or ECUs may alternatively be determined based on a specific requirement. This is not limited.

In FIG. 2B, the intelligent vehicle 22 includes a CDC 221, a vehicle domain controller (vehicle domain controller, VDC)/vehicle integrated/integration unit (vehicle integrated/integration unit, VIU) 222 in a communication connection to the CDC 221, a TBox 223 in a communication connection to the VDC/VIU 222, a VDC/VIU 224 and a VDC/VIU 225, a VDC/VIU 226 in a communication connection to the VDC/VIU 224, an ECU 229 and an ECU 230 that are in a communication connection to the VDC/VIU 226, and an MDC 227 and an ECU 228 that are in a communication connection to the VDC/VIU 225. The VDC/VIU 226 is also in a communication connection to the VDC/VIU 225 and the MDC 227. The VDC/VIU may be understood as a VDC or a VIU.

In FIG. 2B, connections between the CDC and the VDC/VIU, between the VDCs/VIUs, between the VDC/VIU and the TBox, between the VDC/VIU and the MDC, and between the VDC/VIU and the ECU may be performed through an Ethernet, a CAN, a CAN FD, a LIN, a MOST bus, or an FlexRay. For example, a connection between the VDC/VIU 226 and the ECU 229 and the ECU 230 is performed through the CAN.

The VDC in FIG. 2B may divide each device in the intelligent vehicle 22 into a plurality of domains based on a function, and manage each domain. A plurality of VIUs in FIG. 2B may form a ring network to implement a high bandwidth (which may be specifically embodied as a high-definition camera, a high-definition display, or the like), a low delay, and a high-reliability processing capability. In addition, the ring network may also simplify configuration of a vehicle-mounted network, and improve upgrade and maintenance efficiency. For functions of the TBox, the CDC, the MDC, and the ECU in FIG. 2B, refer to descriptions of the TBox, the CDC, the MDC, and the ECU in FIG. 2A. Details are not described herein again.

The intelligent vehicle 22 shown in FIG. 2B is merely used as an example, and is not intended to limit the technical solutions of this application. A person skilled in the art should understand that, in a specific implementation process, the intelligent vehicle 22 may alternatively include another node, and a quantity of TBoxes, VDCs/VIUs, CDCs, MDCs, or ECUs may alternatively be determined based on a specific requirement. This is not limited.

It may be understood that the key management systems shown in FIG. 1A and FIG. 1B may be deployed in the intelligent vehicle shown in FIG. 2A or FIG. 2B. For example, the key server in FIG. 1A or FIG. 1B may be deployed on a device that is in the intelligent vehicle 20 or the intelligent vehicle 22 and that has a communication capability and sufficient storage resources, for example, the TBox, the gateway, the BCM, the CDC, the MDC, the VCU, the VDC, or the VIU. The key client in FIG. 1A or FIG. 1B may be deployed on the TBox, the gateway, the BCM, the CDC, the MDC, the VCU, the VDC, the VIU, or the ECU in the intelligent vehicle 20 or the intelligent vehicle 22. The key proxy in FIG. 1A or FIG. 1B may be deployed on the TBox, the gateway, the BCM, the CDC, the MDC, the VCU, the VDC, or the VIU in the intelligent vehicle 20 or the intelligent vehicle 22. Optionally, if the key management system in FIG. 1A or FIG. 1B alternatively includes a key manager tool, the key manager tool may be deployed on the TBox, the gateway, the BCM, the CDC, the MDC, the VCU, the VDC, or the VIU.

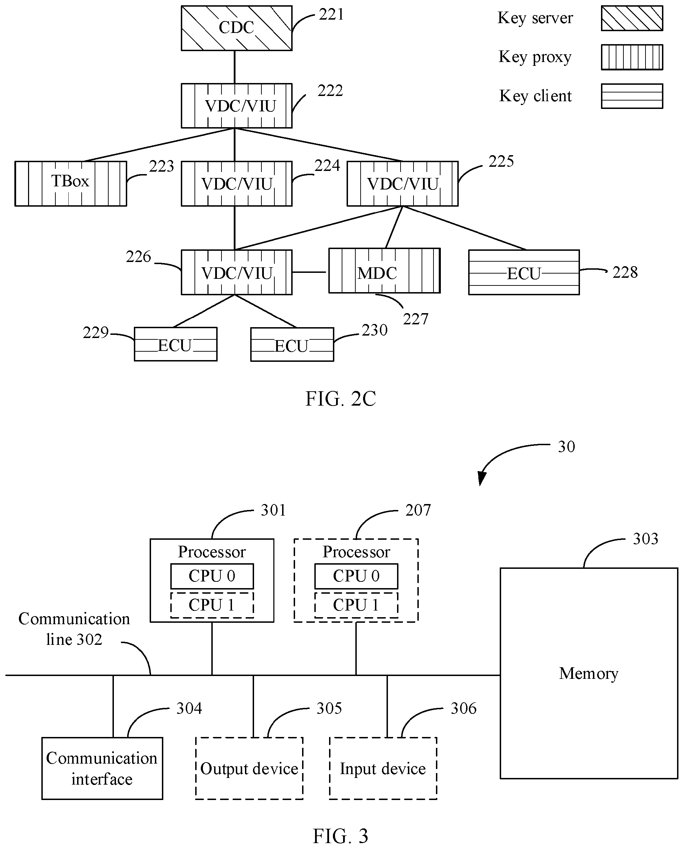

The following describes a deployment status of the key management system 11 by using an example in which the key management system 11 shown in FIG. 1B is deployed in the intelligent vehicle 22 shown in FIG. 2B. FIG. 2C is a schematic deployment diagram of a key management system. In FIG. 2C, a key server is deployed on a CDC 221, a key proxy is deployed on a VDC/VIU 222, a TBox 223, a VDC/VIU 224, a VDC/VIU 225, a VDC/VIU 226, and an MDC 227, and a key client is deployed on an ECU 228 to an ECU 230.

It may be understood that, in embodiments of this application, a specific device on which the key server, the key proxy, or the key client is deployed is an execution body of the key obtaining method provided in embodiments of this application. For example, if the key server is deployed on the CDC, the key proxy is deployed on the MDC, and the key client is deployed on the ECU, the key obtaining method provided in embodiments of this application is separately executed by the CDC, the MDC, and the ECU.

Optionally, in embodiments of this application, each node in FIG. 1A and FIG. 1B, for example, the key server, the key client, or the key proxy, may be a functional module in an apparatus. It may be understood that the functional module may be an element in a hardware device, for example, a communication chip or a communication component in an in-vehicle device, or may be a software functional module running on hardware or a virtualized function instantiated on a platform (for example, a cloud platform).

For example, each node in FIG. 1A and FIG. 1B may be implemented through a key obtaining apparatus 30 in FIG. 3. FIG. 3 is a schematic diagram of a hardware structure of a key obtaining apparatus applicable to an embodiment of this application. The key obtaining apparatus 30 includes at least one processor 301 and at least one communication interface 304, configured to implement the method provided in embodiments of this application. The key obtaining apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 302 may include a path, for example, a bus, for transmitting information between the foregoing components.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer. However, this is not limited herein. The memory may exist independently, and is coupled to the processor 301 through the communication line 302. The memory 303 may alternatively be integrated with the processor 301. The memory provided in embodiments of this application may be usually non-volatile. The memory 303 is configured to store computer-executable instructions for executing solutions provided in embodiments of this application, and the processor 301 controls execution. The processor 301 is configured to execute the computer-executable instructions stored in the memory 303, to implement the method provided in embodiments of this application.

The computer-executable instructions in embodiments of this application may also be referred to as application program code. This is not specifically limited in embodiments of this application.

The coupling in embodiments of this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the key obtaining apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the key obtaining apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive an input of a user in a plurality of manners. For example, the input device 306 may be a touchscreen device, a sensing device, or the like.

The key obtaining apparatus 30 may be a general-purpose device or a dedicated device. During specific implementation, the key obtaining apparatus 30 may be a wireless terminal device, an embedded device, or a device having a structure similar to that in FIG. 3. A type of the key obtaining apparatus 30 is not limited in embodiments of this application.

With reference to FIG. 1A to FIG. 3, the following describes in detail the key obtaining method provided in embodiments of this application.

It may be understood that the key obtaining method and apparatus, and the key management system that are provided in embodiments of this application may be applied to a plurality of fields, for example, an unmanned driving field, an autonomous driving field, an assisted driving field, an intelligent driving field, an internet-connected driving field, an intelligent internet-connected driving field, and an automobile sharing field.

It should be noted that, in the following embodiments of this application, names of messages or names of parameters in messages between nodes are merely examples, and the messages or the parameters may have other names during specific implementation. This is not specifically limited in embodiments of this application.

It should be noted that, in embodiments of this application, "/" may represent an "or" relationship between associated objects. For example, A/B may represent A or B. The term "and/or" may be used to represent that there are three relationships between associated objects. For example, A and/or B may represent the following three cases: Only A exists, both A and B exist, and only B exists, where A and B may be singular or plural.

To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term like "example" or "for example" is used to represent an example, an illustration, or a description. Any embodiment or design scheme described with "example" or "for example" should not be explained as being more preferred or having more advantages than another embodiment or design scheme. Use of the term like "example" or "for example" is intended to present a related concept in a specific manner for ease of understanding.

It should be noted that in embodiments of this application, for a technical feature, "first", "second", "third", "A", "B", "C", and "D" are used to distinguish between technical features in the technical feature, and there is no sequential order or size order between the technical features described by "first", "second", "third", "A", "B", "C", and "D".

It may be understood that a same step or a step or a technical feature having a same function in embodiments of this application may be mutually referenced in different embodiments.

It may be understood that embodiments of this application, the key server, and/or the key proxy, and/or the key client may perform some or all of the steps in embodiments of this application. These steps are merely examples. In embodiments of this application, other steps or variations of various steps may be further performed. In addition, the steps may be performed in different sequences presented in embodiments of this application, and not all the steps in embodiments of this application need to be performed.

In embodiments of this application, a specific structure of an execution body of the key obtaining method is not particularly limited in embodiments of this application, provided that the method provided in embodiments of this application can be implemented. For example, the execution body of the key obtaining method provided in embodiments of this application may be the key server, or may be a component used in the key server, for example, a chip. This is not limited in this application. Alternatively, the execution body of the key obtaining method provided in embodiments of this application may be the key proxy, or may be a component used in the key proxy, for example, a chip. This is not limited in this application. Alternatively, the execution body of the key obtaining method provided in embodiments of this application may be the key client, or may be a component used in the key client, for example, a chip. This is not limited in this application. The following embodiments are described by using an example in which the execution bodies of the key obtaining method are the key server, the key proxy, and the key client.

FIG. 4 shows a key obtaining method according to an embodiment of this application. The key obtaining method may be applied to a key management system. The key management system includes a key server and a first node in a communication connection to the key server. The first node is a key client. Further, the key management system may be the key management system 10 shown in FIG. 1A. In this case, the key server may be the key server 101 in FIG. 1A, and the first node may be the key client 102, the key client 103, or the key client 104 in FIG. 1A.

In a possible implementation, the key management system may be deployed on the intelligent vehicle 20 in FIG. 2A or the intelligent vehicle 22 in FIG. 2B. In this case, the key server may be deployed on a device that is in the intelligent vehicle 20 or the intelligent vehicle 22 and that has a communication capability and sufficient storage resources, for example, a TBox, a gateway, a BCM, a CDC, an MDC, a VCU, a VDC, or a VIU. The first node may be deployed on the TBox, the gateway, the BCM, the CDC, the MDC, the VCU, the VDC, the VIU, or the ECU of the intelligent vehicle 20 or the intelligent vehicle 22.

It may be understood that before the key obtaining method provided in this embodiment of this application is performed, one or more fixed keys may be configured for a node in the key management system. The fixed key may also be referred to as an initial key, and a use scope of the fixed key is the key management system. Before the key is obtained according to the key obtaining method provided in this embodiment of this application, nodes in the key management system may communicate with each other by using the fixed key, to improve information security of the key management system. The fixed key may alternatively be used as a basic key to derive a key in a communication domain in the key management system. It should be understood that the nodes in the key management system may not be configured with the fixed key, and directly obtain keys of a plurality of communication domains according to the key obtaining method provided in this embodiment of this application. The following describes a specific process in which one or more fixed keys are configured for the nodes in the key management system. For details, refer to S1 and S2 described below.

S1: A key manager tool sends first request information to a third node.

In S1, the key manager tool may be included in the key management system, or may not be included in the key management system. If the key manager tool is included in the key management system, the key manager tool may be the key manager tool described in FIG. 1A. If the key manager tool is not included in the key management system, the key manager tool may be a key manager tool set by a vehicle manufacturer.

In S1, the third node may be any node in the key management system. The key management system 10 shown in FIG. 1A is used as an example. The third node may be the key server 101, the key client 102, the key client 103, or the key client 104.

In S1, the first request information may be used to request to configure one or more fixed keys for the third node. The first request information may include an identifier of an intelligent vehicle on which the key management system is deployed and a second key material. The identifier of the intelligent vehicle on which the key management system is deployed may be a sequence number of the intelligent vehicle. The identifier of the intelligent vehicle on which the key management system is deployed may be locally read by the key manager tool, or may be manually input. Alternatively, the identifier of the intelligent vehicle on which the key management system is deployed may be obtained by the key manager tool from a cloud key manager center or the key server. For example, the key manager tool sends, to the key server or the cloud key manager center, request information for obtaining related information of the intelligent vehicle. After receiving the request information, the key server or the cloud key manager center sends, to the key manager tool, response information for obtaining the related information of the intelligent vehicle. The response information includes the related information of the intelligent vehicle on which the key management system is deployed, for example, the identifier and an architecture of the intelligent vehicle on which the key management system is deployed.

The second key material may be used to generate a second key. For example, the second key material includes one or more random numbers, and the one or more random numbers may be used to generate the second key; or the second key material includes the second key. Further, the first request information further includes type information of the second key. The type information of the second key may be used to indicate a type of the second key. For example, the type information of the second key may include an identifier of the type of the second key. The type of the second key may include the fixed key.

In a possible implementation, the key manager tool sends the first request information to the third node when a device on which the third node is deployed is delivered or in a case in which the second key needs to be updated.

In a possible implementation, before S 1, a first communication channel may alternatively be established between the key manager tool and the third node. For example, the first communication channel is established between the key manager tool and the third node by using an asymmetric algorithm. The asymmetric algorithm may include an elliptic curve Diffie-Hellman (elliptic curve Diffie-Hellman, ECDH) algorithm, a Diffie-Hellman algorithm, or the like. The first communication channel may be used to transmit information between the key manager tool and the third node, for example, the first request information, response information of the following first request information, and the following fifth verification code.

In a possible implementation, before S 1, the key manager tool obtains the second key material from the cloud key manager center. For example, the key manager tool sends second request information to the cloud key manager center. The second request information is used to request the second key material. The second request information may include the identifier of the intelligent vehicle on which the key management system is deployed. The cloud key manager center may be set by the vehicle manufacturer, and is configured to manage a key used by an intelligent vehicle managed by the vehicle manufacturer, for example, a fixed key used by each intelligent vehicle managed by the vehicle manufacturer. The fixed keys used by all intelligent vehicles managed by the vehicle manufacturer may be the same or may be different. After receiving the second request information, the cloud key manager center sends response information of the second request information to the key manager tool. The response information of the second request information includes the identifier of the intelligent vehicle on which the key management system is deployed and the second key material. In this way, the key manager tool may include, in the first request information, the identifier of the intelligent vehicle on which the key management system is deployed and the second key material, and send the first request information to the third node. Further, the second request information and the response information of the second request information may further include the type information of the second key.

It may be understood that a third secure channel may be established between the key manager tool and the cloud key manager center. The third secure channel may be established between the key manager tool and the cloud key manager center based on a first protocol. The first protocol may be a transport layer security (transport layer security, TLS) protocol, a hypertext transfer protocol secure (hypertext transfer protocol secure, HTTPs) protocol, a datagram transport layer security (datagram transport layer security, DTLS) protocol, a user-defined protocol, or another protocol. The third secure channel may be used to transmit information between the key manager tool and the cloud key manager center, for example, the second request information and the response information of the second request information.

It may be understood that the key manager tool may send the first request information to a plurality of third nodes at a time, or may send the first request information to one third node at a time. This is not limited.

Correspondingly, the third node receives the first request information from the key manager tool.

S2: The third node generates the second key based on the first request information.

In a possible implementation, the third node generates the second key based on the second key material. If the second key material includes one or more random numbers, the third node calculates the one or more random numbers by using one or more algorithms, to obtain the second key, and stores the second key. If the second key material includes the second key, the third node stores the second key. The type of the second key is a type indicated in the type information of the second key. It may be understood that, before the third node stores the second key, a storage area that is in the third node and that is used to store the key may be cleared.

In a possible implementation, after S2, the third node sends the response information of the first request information to the key manager tool. The response information of the first request information is used to indicate whether the third node successfully generates the second key.

In a possible implementation, after S2, the third node sends the fifth verification code to the key manager tool. The fifth verification code is obtained by performing calculation on fifth verification information based on one or more algorithms. The fifth verification information includes at least one of the following information: the second key, the identifier of the intelligent vehicle on which the key management system is deployed, or the type information of the second key. The fifth verification code may be used to verify whether the fifth verification information is modified. The fifth verification code may be a message authentication code (message authentication code, MAC).

Further, if the fifth verification information includes the second key, the third node may use the second key or may not use the second key in a process of calculating the fifth verification code. If the fifth verification information does not include the second key, the third node uses the second key in the process of calculating the fifth verification code.

It may be understood that the key manager tool verifies the fifth verification code after receiving the fifth verification code. For example, the key manager tool generates the fifth verification code based on the fifth verification information. If the fifth verification code generated by the key manager tool is the same as the received fifth verification code, the verification succeeds, that is, the second key is correctly generated. If the fifth verification code generated by the key manager tool is different from the received fifth verification code, the verification fails, that is, the second key is incorrectly generated or fails to be generated. It may be understood that the key manager tool calculates the fifth verification information by using the same algorithm as that used when the third node generates the fifth verification code, to obtain the fifth verification code.

It may be understood that, in addition to the methods shown in S 1 and S2, the third node may directly obtain the second key material from the cloud key manager center. For example, the cloud key manager center sends third request information to the third node. The third request information may include the identifier of the intelligent vehicle on which the key management system is deployed and the second key material. The third request information may further include the type information of the second key. After receiving the third request information, the third node may generate the second key based on the third request information. Subsequently, the third node may further send third notification information to the cloud key manager center. The third notification information is used to indicate whether the third node successfully generates the second key. The third node may further verify, with the cloud key manager center by using the MAC, whether the second key is correctly generated.

It may be understood that, after a node that needs to be configured with the second key in the key management system generates the second key and is assembled in an intelligent vehicle, the second key may be used for communication, to improve information security of the key management system. Nodes that need to be configured with the second key in the key management system may include all or a part of nodes in the key management system.

It may be understood that the second key is a basic key for deriving a key of a communication domain in the key management system. If an attacker may easily configure the second key for the key management system through the cloud key manager center or the key manager tool, the key managed by the key management system is no longer secure. To avoid that the attacker easily configures the second key for the key management system, when the second key is configured for the key management system through the cloud key manager center or the key manager tool, dedicated software may be used to perform S 1 and S2. After the execution is finished, the dedicated software is uninstalled or erased. The dedicated software is different from software for performing the key obtaining method provided in this embodiment of this application. Alternatively, when the second key is configured for the key management system through the cloud key manager center or the key manager tool, software in a compatible mode may be used. The software in the compatible mode may not only perform S 1 and S2, but also perform the method provided in this embodiment of this application. However, S 1 and S2 and the key obtaining method provided in this embodiment of this application correspond to different modes of the software in the compatible mode. In other words, in a case in which a fixed key needs to be installed, the software in the compatible mode is switched to a mode corresponding to S 1 and S2; and in a case in which the key of the communication domain needs to be obtained, the software in the compatible mode is switched to a mode corresponding to the key obtaining method provided in this embodiment of this application. It should be understood that a permission of the dedicated software and a permission of switching the software mode belong to the vehicle manufacturer. In this way, the attacker can be prevented from easily configuring the second key for the key management system.

In a possible implementation, to perform the key obtaining method provided in this embodiment of this application, related configuration information may be configured for the node in the key management system, and subsequently the node in the key management system may perform the key obtaining method based on the related configuration information. It should be understood that, if the related configuration information does not change after the related configuration information is configured for the node in the key management system, the related configuration information does not need to be reconfigured for the node in the key management system each time before the key obtaining method provided in this embodiment of this application is performed. If the related configuration information changes, updated related configuration information may be configured for the node in the key management system. A process of configuring the updated related configuration information for the node in the key management system is similar to the process of configuring the related configuration information for the node in the key management system. For a specific process of configuring the related configuration information for the node in the key management system, refer to S3 and S4 described below.

S3: The key server obtains first configuration information.

In S3, the first configuration information may be used to indicate the related configuration of the node in the key management system. For example, the first configuration information indicates at least one of the following information: an identifier of the node in the key management system, a connection manner of the node in the key management system, or information about another node that communicates with the node in the key management system.

The identifier of the node in the key management system is used to identify the device on which the node in the key management system is deployed. For example, if the key server is deployed on a CDC, an identifier of the key server may be an identifier of the CDC; and if the key client is deployed on an ECU, an identifier of the key client may be an identifier of the ECU. The identifier of the node in the key management system may be configured by the vehicle manufacturer. Further, the identifier of the node in the key management system may be a number, or may be a name of the device on which the node in the key management system is deployed. If the identifier of the node in the key management system is a number, the number may alternatively be allocated by the key server after the intelligent vehicle is assembled.

The connection manner of the node in the key management system may be used to indicate a connection manner of each port of the node. The connection manner of the node in the key management system includes a connection performed through an Ethernet, a CAN, a CAN FD, a LIN, a MOST bus, or an FlexRay. The connection manner of the node in the key management system may alternatively be used to indicate an address of each port of the node, for example, an internet protocol (Internet Protocol, IP) address and/or a media access control (media access control, MAC) address. Further, the IP address may be a transmission control protocol (transmission control protocol, TCP) and a port number 50001. It should be noted that, in this embodiment of this application, a connection manner between any two nodes or a connection manner of any node (namely, a connection manner between each port of any node and another node) includes the connection performed through the Ethernet, the CAN, the CAN FD, the LIN, the MOST bus, or the FlexRay. This is uniformly described herein, and details are not described below again.

Information about the another node that communicates with the node in the key management system may be used to indicate an identifier of the another node and a connection manner between the another node and the node in the key management system. The identifier of the another node is used to identify a device on which the another node is deployed. The information about the another node that communicates with the node in the key management system may alternatively be used to indicate an address, for example, an IP address and/or a MAC address, of a port that is of the another node and that is connected to the node in the key management system.

For example, the key management system 10 shown in FIG. 1Ais used as an example. The first configuration information may include information about the key server 101, information about the key client 102, information about the key client 103, and information about the key client 104. The information about the key server 101 may be shown in Table 1. In Table 1, the information about the key server 101 includes an identifier of the key server 101, information about a connection manner of each port of the key server 101, and information about another node that communicates with the key server 101. The information about the connection manner of each port of the key server 101 includes an identifier (a port 1, a port 2, and a port 3) of each port of the key server 101, an identifier (an Eth, a CAN, and a CAN) of the connection manner of each port of the key server 101, and an address (an IP 1, a CAN ID 1, and a CAN ID 2) of each port of the key server 101. The information about the another node that communicates with the key server 101 includes an identifier (an identifier of the key client 102, an identifier of the key client 103, and an identifier of the key client 104) of the another node that communicates with the key server 101 and information about a connection manner between the another node and the key server 101. The information about the connection manner between the another node and the key server 101 includes information about a connection manner between the key client 102 and the key server 101, information about a connection manner between the key client 103 and the key server 101, and information about a connection manner between the key client 104 and the key server 101. The information about the connection manner between the key client 102 and the key server 101 includes an identifier (an Eth) of the connection manner between the key client 102 and the key server 101 and an IP address (an IP 4) of a port that is of the key client 102 and that is connected to the key server 101. The information about the connection manner between the key client 103 and the key server 101 includes an identifier (a CAN) of the connection manner between the key client 103 and the key server 101 and an address (a CAN ID 3) of a port that is of the key client 103 and that is connected to the key server 101. The information about the connection manner between the key client 104 and the key server 101 includes an identifier (a CAN) of the connection manner between the key client 104 and the key server 101 and an address (a CAN ID 4) of a port that is of the key client 104 and that is connected to the key server 101.

**Table 1**

| Identifier of the key server 101 | | | |
|---|---|---|---|
| Information about the connection manner of each port of the key server 101 | Port 1 | Eth | IP 1 |
| | Port 2 | CAN | CAN ID 1 |
| | Port 3 | CAN | CAN ID 2 |
| Information about the another node that communicates with the key server 101 | Identifier of the key client 102 | Eth | IP 4 |
| | Identifier of the key client 103 | CAN | CAN ID 3 |
| | Identifier of the key client 104 | CAN | CAN ID 4 |

The information about the key client 102 may be shown in Table 2. In Table 2, the information about the key client 102 includes the identifier of the key client 102, information about a connection manner of each port of the key client 102, and information about another node that communicates with the key client 102. The information about the connection manner of each port of the key client 102 includes an identifier (an Eth) of the connection manner of each port of the key client 102 and an IP address (an IP 4) of each port of the key client 102. The information about the another node that communicates with the key client 102 includes an identifier (the identifier of the key server 101) of the another node that communicates with the key client 102 and information about a connection manner between the another node and the key client 102. The information about the connection manner between the another node and the key client 102 includes an identifier (a port 1) of a port that is of the key server 101 and that is connected to the key client 102, an identifier (an Eth) of the connection manner between the key server 101 and the key client 102, and an IP address (an IP 1) of the port that is of the key server 101 and that is connected to the key client 102.

**Table 2**

| Identifier of the key client 102 | | | | |
|---|---|---|---|---|
| Information about the connection manner of each port of the key client 102 | Eth | | | IP 4 |
| Information about the another node that communicates with the key client 102 | Identifier of the key server 101 | Port 1 | Eth | IP 1 |

The information about the key client 103 may be shown in Table 3. In Table 3, the information about the key client 103 includes the identifier of the key client 103, information about a connection manner of each port of the key client 103, and information about another node that communicates with the key client 103. The information about the connection manner of each port of the key client 103 includes an identifier (a CAN) of the connection manner of each port of the key client 103 and an address (a CAN ID 3) of each port of the key client 103. The information about the another node that communicates with the key client 103 includes an identifier (the identifier of the key server 101) of the another node that communicates with the key client 103 and information about a connection manner between the another node and the key client 103. The information about the connection manner between the another node and the key client 103 includes an identifier (a port 2) of a port that is of the key server 101 and that is connected to the key client 103, an identifier (a CAN) of the connection manner between the key server 101 and the key client 103, and an address (a CAN ID 1) of the port that is of the key server 101 and that is connected to the key client 103.

**Table 3**

| Identifier of the key client 103 | | | | |
|---|---|---|---|---|
| Information about the connection manner of each port of the key client 103 | CAN | | | CAN ID 3 |
| Information about the another node that communicates with the key client 103 | Identifier of the key server 101 | Port 2 | CAN | CAN ID 1 |

The information about the key client 104 may be shown in Table 4. In Table 4, the information about the key client 104 includes the identifier of the key client 104, information about a connection manner of each port of the key client 104, and information about another node that communicates with the key client 104. The information about the connection manner of each port of the key client 104 includes an identifier (a CAN) of the connection manner of each port of the key client 104 and an address (a CAN ID 4) of each port of the key client 104. The information about the another node that communicates with the key client 104 includes an identifier (the identifier of the key server 101) of the another node that communicates with the key client 104 and information about a connection manner between the another node and the key client 104. The information about the connection manner between the another node and the key client 104 includes an identifier (a port 3) of a port that is of the key server 101 and that is connected to the key client 104, an identifier (a CAN) of the connection manner between the key server 101 and the key client 104, and an address (a CAN ID 2) of the port that is of the key server 101 and that is connected to the key client 104.

**Table 4**

| Identifier of the key client 104 | | | | |
|---|---|---|---|---|
| Information about the connection manner of each port of the key client 104 | CAN | CAN ID 4 | | |
| Information about the another node that communicates with the key client 104 | Identifier of the key server 101 | Port 3 | CAN | CAN ID 2 |

It can be seen from Table 1 to Table 4 that, the port 1 of the key server 101 is connected to the key client 102, the port 2 of the key server 101 is connected to the key client 103, and the port 3 of the key server 101 is connected to the key client 104.

The foregoing Table 1 to Table 4 are merely examples of the first configuration information. The first configuration information may include less or more information than that in Table 1 to Table 4. This is not limited.

In a possible implementation, the key server receives the first configuration information from the key manager tool or the cloud key manager center. In other words, the key server may obtain the first configuration information from the key manager tool or the cloud key manager center.

For a case in which the key server obtains the first configuration information from the key manager tool, the key server may send fourth request information to the key manager tool. The fourth request information may be used to request the first configuration information. For example, the fourth request information includes a model of the intelligent vehicle on which the key management system is deployed. Further, the fourth request information may further include a version number of the key management system. After receiving the fourth request information, the key manager tool may send fifth request information to the cloud key manager center. The fifth request information may be used to request the first configuration information. For example, the fifth request information includes the model of the intelligent vehicle on which the key management system is deployed. Further, the fifth request information may further include the version number of the key management system. After receiving the fifth request information, the cloud key manager center may send response information of the fifth request information to the key manager tool. The response information of the fifth request information may include the first configuration information. After receiving the response information of the fifth request information, the key manager tool may send response information of the fourth request information to the key server. The response information of the fourth request information may include the first configuration information.

It may be understood that, in a case in which the key server obtains the first configuration information from the key manager tool, after an employee of the vehicle manufacturer configures, in the key manager tool, related information (for example, the model or architecture information of the intelligent vehicle) of the intelligent vehicle on which the key management system is deployed, or after the key manager tool reads the related information of the intelligent vehicle on which the key management system is deployed, the key manager tool sends fourth notification information to the key server. The fourth notification information is used to indicate the key server to start the process of obtaining the first configuration information. Subsequently, the key server sends the fourth request information to the key manager center.

It may be understood that a fourth secure channel may be established between the key manager tool and the key server. The fourth secure channel may be established between the key manager tool and the key server based on the first protocol. The fourth secure channel may be used to transmit information between the key manager tool and the key server, for example, the fourth request information and the response information of the fourth request information. A fifth secure channel may be established between the key manager tool and the cloud key manager center based on the first protocol. The fifth secure channel may be used to transmit information between the key manager tool and the cloud key manager center, for example, the fifth request information and the response information of the fifth request information.

In a case in which the key server obtains the first configuration information from the cloud key manager center, the key server may send sixth request information to the cloud key manager center. The sixth request information may be used to request the first configuration information. For example, the sixth request information includes the model of the intelligent vehicle on which the key management system is deployed. Further, the sixth request information may further include the version number of the key management system. After receiving the sixth request information, the cloud key manager center may send response information of the sixth request information to the key server. The response information of the sixth request information may include the first configuration information.

It may be understood that, in addition to the method shown in S3, the first configuration information may alternatively be included in the first request information or the third request information and sent to the key server.

S4: The key server sends second configuration information to the first node.

In S4, the second configuration information may be used to indicate at least one of the following information: an identifier of the first node, a connection manner of the first node, or information about another node that communicates with the first node.

The identifier of the first node is used to identify a device on which the first node is deployed. For example, if the first node is deployed on an ECU, the identifier of the first node may be an identifier of the ECU. The connection manner of the first node may be used to indicate a connection manner of each port of the first node. The connection manner of the first node may alternatively be used to indicate an address of each port of the first node, for example, an IP address and/or a MAC address. The information about the another node that communicates with the first node may be used to indicate an identifier of the another node and a connection manner between the another node and the first node. The identifier of the another node is used to identify a device on which the another node is deployed. The information about the another node that communicates with the first node may alternatively be used to indicate an address, for example, an IP address and/or a MAC address, of a port that is of the another node and that is connected to the first node.

For example, the first configuration information shown in Table 1 to Table 4 is used as an example. If the first node is the key client 102, the second configuration information may be shown in Table 2. If the first node is the key client 103, the second configuration information may be shown in Table 3. If the first node is the key client 104, the second configuration information may be shown in Table 4.

In a possible implementation, in a process of sending the second configuration information to the first node, the key server may alternatively send a first distribution progress notification to the key manager tool or the cloud key manager center. The first distribution progress notification may be used to indicate a progress of distributing the second configuration information by the key server to each node. After S4, the key server may alternatively send a distribution finish notification to the key manager tool or the cloud key manager center, to indicate that the key server finishes sending of the second configuration information.

In a possible implementation, after S4, the node in the key management system may determine, based on the configuration information received by the node, information about a communication domain in which the node is located. In this embodiment of this application, communication domains may be obtained through division based on different granularities. The communication domains obtained through division based on different granularities may cover a plurality of scenarios of communication between nodes in the key management system, for example, communication scenarios between nodes with a same connection manner, communication scenarios between nodes with a same function, or communication scenarios between nodes with a same type of communication information. Any one of the plurality of scenarios may correspond to one or more keys, so that communication security is improved. The communication domains in the key management system may have an intersection or may not have an intersection. That the communication domains have an intersection may be understood as that one communication domain and another communication domain include a common node. That the communication domains have no intersection may be understood as that a node included in one communication domain is completely different from a node included in another communication domain. The following uses the following three manners as an example to describe a communication domain division manner.

Manner 1: The communication domain may be determined based on the connection manner of the node in the key management system.

In a possible implementation, different communication domains may be obtained through division for nodes connected in different connection manners. For example, nodes connected through the Ethernet may be included in one communication domain; or nodes connected through the CAN may be included in one communication domain; or nodes connected through the LIN may be included in one communication domain; or nodes connected through the MOST bus may be included in one communication domain; or nodes connected through the FlexRay may be included in one communication domain.

For example, the first configuration information shown in Table 1 to Table 4 is used as an example. The key server 101 and the key client 102 may be included in one communication domain. At least two nodes of the key server 101, the key client 103, and the key client 104 may be included in one communication domain.

Manner 2: The communication domain may be determined based on a function of the device of the node in the key management system.

In a possible implementation, different communication domains may be obtained through division for devices with different functions. For example, the key management system 10 shown in FIG. 1A is deployed on the intelligent vehicle 20 shown in FIG. 2A. The key server 101 is deployed on the gateway 202, the key client 102 is deployed on the BCM 203, the key client 103 is deployed on the CDC 204, the key client 104 is deployed on the MDC 205, and the BCM 203, the CDC 204, and the MDC 205 have different functions. Therefore, the key server 101 and the key client 102 may be included in one communication domain, the key server 101 and the key client 103 may be included in one communication domain, and the key server 101 and the key client 104 may be included in one communication domain.

Manner 3: The communication domain may be determined based on a type of communication information between nodes in the key management system.

The type of the communication information between the nodes in the key management system includes privacy-related information or non-privacy-related information. For example, the key management system 10 shown in FIG. 1A is deployed on the intelligent vehicle 20 shown in FIG. 2A. The key server 101 is deployed on the gateway 202, the key client 102 is deployed on the BCM 203, the key client 103 is deployed on the VCU 206, and the key client 104 is deployed on the MDC 205, where the MDC 205 may access signals of different sensors, for example, signals of cameras. Therefore, information sent by the MDC 205 may be privacy-related, and information sent by the BCM 203 and the VCU 206 may be non-privacy-related. In this case, the key server 101 and the key client 104 may be included in one communication domain, and at least two nodes of the key server 101, the key client 102, and the key client 103 may be included in one communication domain.

Further, in one case, the privacy-related information may be obtained through division based on different users or accounts. Therefore, different communication domains may be further obtained through division for different users or accounts. For example, both a communication domain 1 and a communication domain 2 include the key server 101 and the key client 102, but users corresponding to the communication domain 1 and the communication domain 2 are different. In another case, the communication domain may alternatively be determined based on a level of privacy information. In other words, different communication domains may be obtained through division for nodes that transmit privacy information of different levels. For example, if a level of privacy information transmitted by the key server 101 and the key client 102 is 1, and a level of privacy information transmitted by the key server 101, the key client 103, and the key client 104 is 2, the key server 101 and the key client 102 may be included in one communication domain, and at least two nodes of the key server 101, the key client 103, and the key client 104 may be included in one communication domain.

It should be understood that, the foregoing three manners are merely examples, and during specific application, another division manner may alternatively be included. For example, division is performed based on a communication requirement, in other words, nodes that need communication are divided into one communication domain. Division may alternatively be performed based on an application, a logical port, a purpose of information that needs communication, or the like.

The following describes a specific process in which the node in the key management system determines, based on the configuration information received by the node, the information about the communication domain in which the node is located. For details, refer to S5 and S6 below.

S5: The key server determines, based on the first configuration information, information about a communication domain in which the key server is located.

In a possible implementation, the key server determines, in any one of Manner 1 to Manner 3 described above, the communication domain in which the key server is located, and determines information about each communication domain based on the first configuration information.

In S5, the information about the communication domain in which the key server is located may be used to indicate at least one of the following information: an application scope of the communication domain in which the key server is located, an identifier of the communication domain in which the key server is located, a communication manner of a node in the communication domain in which the key server is located, a connection manner between the key server and a node other than the key server in the communication domain in which the key server is located, an address of a port connected to the node other than the key server in the communication domain in which the key server is located, information about the node other than the key server in the communication domain in which the key server is located, or key information for building a key of the communication domain in which the key server is located.

The application scope of the communication domain in which the key server is located includes an entire vehicle, an intra-functional domain, a cross-functional domain, a primary device, and the like. The functional domain may be understood as being obtained through division based on a function of the device in the intelligent vehicle, for example, an electric power domain, a power domain, or an infotainment domain. The intra-functional domain may be understood as that a node included in the communication domain in which the key server is located is deployed in one functional domain, for example, deployed in the electric power domain. The cross-functional domain may be understood as that nodes included in the communication domain in which the key server is located are deployed in different functional domains, for example, deployed in the electric power domain and the power domain. The primary device may be a CDC, a BCM, an MDC, a VCU, a VDC, a VIU, a TBox, a gateway, or the like.

The communication manner of the node in the communication domain in which the key server is located includes point-to-point communication or point-to-multipoint communication. The point-to-point communication may be understood as that quantities of information senders and receivers are 1. The point-to-multipoint communication may be understood as that a quantity of information senders is 1, and a quantity of information receivers is greater than 1. The information sender or the information receiver may be any node in the communication domain.

The information about the node other than the key server in the communication domain in which the key server is located may be used to indicate at least one of the following information: an identifier of the another node, a port that is of the another node and that is connected to the key server, a node name of the another node, or a protocol or an algorithm supported by the another node. The node name of the another node includes a key server, a key proxy, or a key client. The protocol or the algorithm supported by the another node includes at least one of the following: a protocol of a packet supported by the another node (for example, a user data protocol (user data protocol, UDP) or a TCP), a plurality of algorithms supported by the another node (for example, an integrity algorithm, an encryption algorithm, an identity authentication algorithm, or a derivation algorithm of a temporary key), or information about a basic key used to derive the key of the communication domain in which the key server is located (for example, storage location information of the basic key or type information of the basic key).

The key information for building the key of the communication domain in which the key server is located may be used to indicate a storage location of the key of the communication domain in which the key server is located. Further, the key information for building the key of the communication domain in which the key server is located may be further used to indicate a type of the key of the communication domain in which the key server is located. The type of the key may include a fixed key or a long-term key.

For example, the key management system 10 shown in FIG. 1Ais used as an example. If the key server 101 and the key client 102 are included in the communication domain 1, and the key server 101, the key client 103, and the key client 104 are included in the communication domain 2, the information about the communication domain in which the key server 101 is located may include information about the communication domain 1 and information about the communication domain 2. The information about the communication domain 1 may be shown in Table 5. In Table 5, the information about the communication domain 1 includes an application scope (between primary devices) of the communication domain 1, an identifier of the communication domain 1, a communication manner (point-to-point) of a node in the communication domain 1, information about a connection manner between the key server 101 and the key client 102, information about the key client 102, and key information for building a key of the communication domain 1. The information about the connection manner between the key server 101 and the key client 102 includes an identifier (a port 1 of the key server 101) of a port that is of the key server 101 and that is connected to the key client 102, the connection manner (an Eth) between the key server 101 and the key client 102, and an IP address (an IP 1) of the port that is of the key server 101 and that is connected to the key client 102. The information about the key client 102 includes an identifier of the key client 102, an identifier (a port 2 of the key client 102) of a port that is of the key client 102 and that is connected to the key server 101, a name (a key client) of the key client 102, and a protocol or an algorithm (AES_CMAC_128 and AES_CBC_128) supported by the key client 102. The key information for building the key of the communication domain 1 includes a storage location (a storage location 1) of the key of the communication domain 1 and a type (a long-term key) of the key of the communication domain 1. AES_CMAC_128 is an integrity/message check code algorithm, and AES_CBC_128 is an encryption algorithm.

**Table 5**

| | | | | | |
|---|---|---|---|---|---|
| Application scope of the communication domain 1 | Between primary devices | | | | |

| Identifier of the communication domain 1 | | | | | |
|---|---|---|---|---|---|
| Communication manner of the node in the communication domain 1 | Point-to-point | | | | |
| Information about the connection manner between the key server 101 and the key client 102 | Port 1 of the key server 101 | Eth | | | IP 1 |
| Information about the key client 102 | Identifier of the key client 102 | Port 2 of the key client 102 | Key client | | AES_CMAC_128 and AES_CBC_128 |
| Key information for building the key of the communication domain 1 | Storage location 1 | | | Long-term key | |

The information about the communication domain 2 may be shown in Table 6. In Table 6, the information about the communication domain 2 includes an application scope (the cross-functional domain) of the communication domain 2, an identifier of the communication domain 2, a communication manner (point-to-multipoint) of a node in the communication domain 2, information about a connection manner between the key server 101 and the key client 103, information about a connection manner between the key server 101 and the key client 104, information about the key client 103, information about the key client 104, and key information for building a key of the communication domain 2. The information about the connection manner between the key server 101 and the key client 103 includes an identifier (a port 1 of the key server 101) of a port that is of the key server 101 and that is connected to the key client 103, the connection manner (a CAN) between the key server 101 and the key client 103, and an address (a CAN ID 1) of the port that is of the key server 101 and that is connected to the key client 103. The information about the connection manner between the key server 101 and the key client 104 includes an identifier (a port 3 of the key server 101) of a port that is of the key server 101 and that is connected to the key client 104, the connection manner (a CAN) between the key server 101 and the key client 104, and an address (a CAN ID 2) of the port that is of the key server 101 and that is connected to the key client 104. The information about the key client 103 includes an identifier of the key client 103, an identifier (a port 1 of the key client 103) of a port that is of the key client 103 and that is connected to the key server 101, a name (a key client) of the key client 103, and a protocol or an algorithm (AES_CMAC_128 andAES_CBC_128) supported by the key client 103. The information about the key client 104 includes an identifier of the key client 104, an identifier (a port 3 of the key client 104) of a port that is of the key client 104 and that is connected to the key server 101, a name (a key client) of the key client 104, and a protocol or an algorithm (AES_CMAC_128 and AES_CBC_128) supported by the key client 104. The key information for building the key of the communication domain 2 includes a storage location (a storage location 2) of the key of the communication domain 2 and a type (a long-term key) of the key of the communication domain 2.

**Table 6**

| | | | | | |
|---|---|---|---|---|---|
| Application scope of the communication domain 2 | Cross-functional domain | | | | |

| Identifier of the communication domain 2 | | | | | |
|---|---|---|---|---|---|
| Communication manner of the node in the communication domain 2 | Point-to-multipoint | | | | |
| Information about the connection manner between the key server 101 and the key client 103 | Port 2 of the key server 101 | CAN | | | CAN ID 1 |
| Information about the connection manner between the key server 101 and the key client 104 | Port 3 of the key server 101 | CAN | | | CAN ID 2 |
| Information about the key client 103 | Identifier of the key client 103 | Port 1 of the key client 103 | Key client | | AES_CMAC_128 and AES_CBC_128 |
| Information about the key client 104 | Identifier of the key client 104 | Port 3 of the key client 104 | Key client | | AES_CMAC_128 and AES_CBC_128 |
| Key information for building the key of the communication domain 2 | Storage location 2 | | | Long-term key | |

It should be understood that Table 5 and Table 6 are merely examples of the information about the communication domain in which the key server is located. During specific application, the information about the communication domain in which the key server is located may alternatively include more or less information than that in Table 5 and Table 6. This is not limited.

S6: The first node determines, based on the second configuration information, information about a communication domain in which the first node is located.

In a possible implementation, the first node determines, in any one of Manner 1 to Manner 3 described above, the communication domain in which the first node is located, and determines information about each communication domain based on the second configuration information.

In S6, the information about the communication domain in which the first node is located may be used to indicate at least one of the following information: an application scope of the communication domain in which the first node is located, an identifier of the communication domain in which the first node is located, a communication manner of a node in the communication domain in which the first node is located, a connection manner between the first node and a node other than the first node in the communication domain in which the first node is located, an interaction manner of the first node in the communication domain in which the first node is located, an address of a port that is of the first node and that is connected to the node other than the first node in the communication domain in which the first node is located, a protocol or an algorithm supported by the first node, information about the node other than the first node in the communication domain in which the first node is located, or key information for building a key of the communication domain in which the first node is located.

The application scope of the communication domain in which the first node is located includes an entire vehicle, an intra-functional domain, a cross-functional domain, a primary device, and the like. The communication manner of the node in the communication domain in which the first node is located includes point-to-point communication or point-to-multipoint communication. The interaction manner of the first node in the communication domain in which the first node is located includes direct communication with the key server or communication with the key server through the key proxy. The protocol or the algorithm supported by the first node includes at least one of the following: a protocol of a packet supported by the first node (for example, a UDP or a TCP), a plurality of algorithms supported by the first node (for example, an integrity algorithm, an encryption algorithm, an identity authentication algorithm, or a derivation algorithm of a temporary key), or information about a basic key used to derive the key of the communication domain in which the first node is located (for example, storage location information of the basic key or type information of the basic key). The information about the node other than the first node in the communication domain in which the first node is located may be used to indicate at least one of the following information: an identifier of the another node, a port that is of the another node and that is connected to the first node, or a protocol or an algorithm supported by the another node. The key information for building the key of the communication domain in which the first node is located may be used to indicate a storage location of the key of the communication domain in which the first node is located. Further, the key information for building the key of the communication domain in which the first node is located may be further used to indicate a type of the key of the communication domain in which the first node is located.

For example, the key management system 10 shown in FIG. 1Ais used as an example. If the key server 101 and the key client 102 are included in the communication domain 1, the key server 101, the key client 103, and the key client 104 are included in the communication domain 2, and the first node is the key client 102, information about the communication domain 1 (namely, information about a communication domain in which the key client 102 is located) determined by the key client 102 may be shown in Table 7. In Table 7, the information about the communication domain 1 includes an application scope (between primary devices) of the communication domain 1, an identifier of the communication domain 1, a communication manner (point-to-point) of a node in the communication domain 1, information about a connection manner between the key client 102 and the key server 101, an interaction manner of the key client 102 in the communication domain 1 (direct communication with the key server), a protocol or an algorithm (AES_CMAC_128 and AES_CBC_128) supported by the key client 102, information about the key server 101, and key information for building a key of the communication domain 1. The information about the connection manner between the key client 102 and the key server 101 includes an identifier (a port 2 of the key client 102) of a port that is of the key client 102 and that is connected to the key server 101, and a connection manner (an Eth) between the key client 102 and the key server 101. The information about the key server 101 includes an identifier of the key server 101 and an identifier (a port 1 of the key server 101) of a port that is of the key server 101 and that is connected to the key client 102. The key information for building the key of the communication domain 1 includes a storage location (a storage location 1) of the key of the communication domain 1 and a type (a long-term key) of the key of the communication domain 1.

**Table 7**

| | | |
|---|---|---|
| Application scope of the communication domain 1 | Between primary devices | |

| Identifier of the communication domain 1 | | |
|---|---|---|
| Communication manner of the node in the communication domain 1 | Point-to-point | |
| Information about the connection manner between the key client 102 and the key server 101 | Port 2 of the key client 102 | Eth |
| Interaction manner of the key client 102 in the communication domain 1 | Direct communication with the key server | |
| Protocol or algorithm supported by the key client 102 | AES_CMAC_128 and AES_CBC_128 | |
| Information about the key server 101 | Identifier of the key server 101 | Port 1 of the key server 101 |
| Key information for building the key of the communication domain 1 | Storage location 1 | Long-term key |

If the first node is the key client 103, information about the communication domain 2 (namely, information about a communication domain in which the key client 103 is located) determined by the key client 103 may be shown in Table 8. In Table 8, the information about the communication domain 2 includes an application scope (a cross-functional domain) of the communication domain 2, an identifier of the communication domain 2, a communication manner (point-to-multipoint) of a node in the communication domain 2, information about a connection manner between the key client 103 and the key server 101, an interaction manner of the key client 103 in the communication domain 1 (direct communication with the key server), a protocol or an algorithm (AES_CMAC_128 and AES_CBC_128) supported by the key client 103, information about the key server 101, and key information for building a key of the communication domain 2. The information about the connection manner between the key client 103 and the key server 101 includes an identifier (a port 1 of the key client 103) of a port that is of the key client 103 and that is connected to the key server 101, and a connection manner (a CAN) between the key client 103 and the key server 101. The information about the key server 101 includes an identifier of the key server 101 and an identifier (a port 2 of the key server 101) of a port that is of the key server 101 and that is connected to the key client 103. The key information for building the key of the communication domain 2 includes a storage location (a storage location 2) of the key of the communication domain 2 and a type (a long-term key) of the key of the communication domain 2.

**Table 8**

| | | |
|---|---|---|
| Application scope of the communication domain 2 | Cross-functional domain | |

| Identifier of the communication domain 2 | | |
|---|---|---|
| Communication manner of the node in the communication domain 2 | Point-to-multipoint | |
| Information about the connection manner between the key client 103 and the key server 101 | Port 1 of the key client 103 | CAN |
| Interaction manner of the key client 103 in the communication domain 2 | Direct communication with the key server | |
| Protocol or algorithm supported by the key client 103 | AES_CMAC_128 and AES_CBC_128 | |
| Information about the key server 101 | Identifier of the key server 101 | Port 2 of the key server 101 |
| Key information for building the key of the communication domain 2 | Storage location 2 | Long-term key |

If the first node is the key client 104, information about the communication domain 2 (namely, information about a communication domain in which the key client 104 is located) determined by the key client 104 may be shown in Table 9. In Table 9, the information about the communication domain 2 includes an application scope (a cross-functional domain) of the communication domain 2, an identifier of the communication domain 2, a communication manner (point-to-multipoint) of a node in the communication domain 2, information about a connection manner between the key client 104 and the key server 101, an interaction manner of the key client 104 in the communication domain 1 (direct communication with the key server), a protocol or an algorithm (AES_CMAC_128 and AES_CBC_128) supported by the key client 104, information about the key server 101, and key information for building a key of the communication domain 2. The information about the connection manner between the key client 104 and the key server 101 includes an identifier (a port 3 of the key client 104) of a port that is of the key client 104 and that is connected to the key server 101, and a connection manner (a CAN) between the key client 104 and the key server 101. The information about the key server 101 includes an identifier of the key server 101 and an identifier (a port 3 of the key server 101) of a port that is of the key server 101 and that is connected to the key client 104. The key information for building the key of the communication domain 2 includes a storage location (a storage location 2) of the key of the communication domain 2 and a type (a long-term key) of the key of the communication domain 2.

**Table 9**

| | | |
|---|---|---|
| Application scope of the communication domain 2 | Cross-functional domain | |

| Identifier of the communication domain 2 | | |
|---|---|---|
| Communication manner of the node in the communication domain 2 | Point-to-multipoint | |
| Information about the connection manner between the key client 104 and the key server 101 | Port 3 of the key client 104 | CAN |
| Interaction manner of the key client 104 in the communication domain 2 | Direct communication with the key server | |
| Protocol or algorithm supported by the key client 104 | AES_CMAC_128 and AES_CBC_128 | |
| Information about the key server 101 | Identifier of the key server 101 | Port 3 of the key server 101 |
| Key information for building the key of the communication domain 2 | Storage location 2 | Long-term key |

It should be understood that Table 7 to Table 9 are merely examples of the information about the communication domain in which the first node is located. During specific application, the information about the communication domain in which the first node is located may alternatively include more or less information than that in Table 7, Table 8, or Table 9. This is not limited.

It may be understood that, after S6, the node in the key management system may obtain a key of each communication domain. The following describes in detail the key obtaining method provided in this embodiment of this application. The key obtaining method includes S401 to S403.

S401: The key server obtains first key information.

The first key information may be used to configure a key for a node in a first communication domain. For example, the first key information may include a first key material. Further, the first key information may further include an identifier of the first communication domain and/or type information of a first key.

The first key material may be used to generate the first key. For example, the first key material includes one or more random numbers, and the one or more random numbers may be used to generate the first key; or the first key material includes the first key. The first key may have at least one of the following functions: used to encrypt information about communication between nodes in the first communication domain, used to verify integrity of information about communication between nodes in the first communication domain, or used as a basic key to derive another key. The another key may include a temporary key or another long-term key for communication between nodes in the first communication domain. Optionally, the first key material is obtained based on the second key.

The identifier of the first communication domain may be used to indicate the first communication domain. The first key may be applied to the first communication domain, in other words, a use scope of the first key is the first communication domain. In other words, the first key may be applied to a communication domain indicated by the identifier of the first communication domain. The first communication domain is any communication domain in the key management system, for example, a communication domain indicated in the information about the communication domain in which the first node is located, or a communication domain indicated in the information about the communication domain in which the key server is located. The first communication domain includes at least two nodes in the key management system, and the at least two nodes include the first node, namely, the key client. For a method for dividing the first communication domain, refer to corresponding descriptions in Manner 1 to Manner 3 described above. The key management system 10 shown in FIG. 1A is used as an example. The first communication domain includes at least two key clients of the key client 102 to the key client 104; or the first communication domain includes the key server 101 and at least one key client of the key client 102 to the key client 104. It may be understood that the first key may alternatively be applied to an entire vehicle, in other words, a use scope of the first key is the entire vehicle.

The type information of the first key may be used to indicate a type of the first key. For example, the type information of the first key may include an identifier of the type of the first key. The type of the first key may include a fixed key, a long-term key, or a temporary key.

It may be understood that, in this embodiment of this application, the first key and/or the second key are/is critical sensitive information in the device, need/needs to be stored in a secure non-volatile manner, and cannot be randomly updated or deleted, or even need/needs to be disabled from reading. Hardware mechanisms that can provide secure non-volatile storage include: a hardware security module (hardware security module, HSM), secure hardware extension (secure hardware extension, SHE), a persistent secure storage area in a trust execution environment (trust execution environment, TEE), and the like.

In a possible implementation, before S401, the key server receives first acknowledgment information from the key manager tool; the key server receives first acknowledgment information from a first terminal; the key server receives first acknowledgment information from a second terminal, and the key server obtains the first key information; or the key server receives first acknowledgment information from the cloud key manager center. The first acknowledgment information may be used to trigger the key server to obtain the first key information. In other words, the key server may be triggered, through the key manager tool, the first terminal, the second terminal, or the cloud key manager center, to configure the key for the node in the first communication domain.

For example, when detecting that the key of the first communication domain has expired or is about to expire, the key server sends first request trigger information to the key manager tool, the first terminal, the second terminal, or the cloud key manager center, to indicate that the key of the first communication domain has expired or is about to expire. After receiving the first request trigger information, the key manager tool or the cloud key manager center may notify an administrator, so that the administrator determines whether to trigger the key server to configure the key for the node in the first communication domain. After receiving a notification message, the first terminal or the second terminal may notify a user, so that the user determines whether to trigger the key server to configure the key for the node in the first communication domain. After receiving the first request trigger information, the key manager tool, the first terminal, the second terminal, or the cloud key manager center may further send response information of the first request trigger information to the key server. The response information of the first request trigger information may be used to indicate that the first request trigger information is received.

It may be understood that, after receiving the first acknowledgment information, the key server may send response information of the first acknowledgment information to the key manager tool, the first terminal, the second terminal, or the cloud key manager center, where the response information is used to indicate that the first acknowledgment information is received, or may be used to indicate that a build process of the key of the first communication domain is started, that is, start to perform S401.

If the key manager tool is a key manager tool set by the vehicle manufacturer, the key manager tool may be connected to the intelligent vehicle through a diagnostic port of the intelligent vehicle, to trigger the key server to configure the key for the node in the first communication domain. A sixth secure channel may be further established between the key manager tool and the key server based on the first protocol. The sixth secure channel is used to transmit information between the key server and the key manager tool, for example, the first confirmation information.

The first terminal may be user equipment (user equipment, UE). The UE includes a handheld device, a wearable device, or a computing device that has a wireless communication function. For example, the UE may be a mobile phone (mobile phone), a tablet computer, or a computer having a wireless transceiver function. The second terminal may be a vehicle-mounted device, or may be referred to as a device in the intelligent vehicle, for example, a TBox, a gateway, a BCM, a CDC, an MDC, a VCU, a VDC, or a VIU. Software that can communicate with the key server is installed on the first terminal or the second terminal. The second terminal is used as an example. The first acknowledgment information may be triggered and sent by an in-vehicle infotainment (in-vehicle infotainment, IVI) system deployed on the device in the intelligent vehicle. The IVI system may be a system having one or more of the following functions: navigation, music playing, video playing, voice recognition, call making, information exchange, and the like.

In a possible implementation, in a case in which the intelligent vehicle is used for the first time, or it is determined that the key of the first communication domain needs to be updated, or the device in the intelligent vehicle is replaced, the key server may be triggered, through the key manager tool, the first terminal, the second terminal, or the cloud key manager center, to configure the key for the node in the first communication domain. In a process of triggering the key server to configure the key for the node in the first communication domain, the first communication domain may be indicated through the key manager tool, the first terminal, the second terminal, or the cloud key manager center. For example, the first acknowledgment information may indicate the first communication domain. After receiving the first acknowledgment information, the key server may determine the type information of the first key and generate the first key material.

Further, after the key of the first communication domain is updated, for example, after S403, the node in the first communication domain may delete the key before update. In this case, the first key information may also include an identifier of the key before update. Alternatively, after the key of the first communication domain is updated, for example, after S403, the key server triggers the node in the first communication domain to delete the key before update. For example, the key server sends first request deletion information to the key client. The first request deletion information is used to request to delete the key before update. The first request deletion information may include the identifier of the key before update. The first request deletion information may further include the identifier of the first communication domain and/or a type of the key before update. After receiving the first request deletion information of the key server, the key client sends response information of the first request deletion information to the key server, to indicate that the first request deletion information is received. Subsequently, after deleting the key before update, the key client may send first finish information to the key server, to indicate that the key before update has been deleted. The first finish information may include the identifier of the key before update and indication information indicating that the key before update has been deleted. The first finish information may further include the identifier of the first communication domain and/or the type of the key before update. After receiving the first finish information, the key server may send response information of the first finish information to the key client, to indicate that the first finish information is received.

Further, in a process in which the node in the first communication domain deletes the key before update, the key server may indicate to stop deleting the key before update. For example, the key server sends first deletion stop information to the key client. The first deletion stop information is used to indicate to stop deleting the key before update. The first deletion stop information may include the identifier of the key before update. The first deletion stop information may further include the identifier of the first communication domain and/or the type of the key before update. After receiving the first deletion stop information, the key client stops deleting the key before update, and sends response information of the first deletion stop information to the key server, to indicate that deletion of the key before update has been stopped.

It may be understood that the foregoing manner of triggering the key server to configure the key for the node in the first communication domain is merely an example. During specific application, there may be another manner. For example, a cloud server of the vehicle manufacturer triggers the key server to configure the key for the node in the first communication domain. This is not specifically limited in this embodiment of this application.

In a possible implementation, after the key server obtains the first key information, the key server generates the first key based on the first key material. The type of the first key is a type indicated in the type information of the first key, and a communication domain on which the first key acts is the first communication domain.

S402: The key server sends the first key information to the key client.

A quantity of key clients is greater than or equal to 1. For example, the key management system shown in FIG. 1A is used as an example. If the first communication domain includes the key server 101 and the key client 102, the key server 101 sends the first key information to the key client 102; or if the first communication domain includes the key client 102 and the key client 103, the key server 101 sends the first key information to the key client 102 and the key client 103.

In a possible implementation, before S402, the key server establishes a first secure channel with the key client based on the first protocol. Correspondingly, the key client establishes the first secure channel with the key server based on the first protocol. The first secure channel is used to transmit information between the key server and the key client. Further, a key used by the key server and the key client in a process of establishing the first secure channel is the second key.

It may be understood that, if the quantity of key clients is equal to 1, the first secure channel includes a point-to-point secure channel between the key server and the key client. If the quantity of key clients is greater than 1, the first secure channel includes a point-to-point secure channel between the key server and each key client; the first secure channel includes a point-to-multipoint secure channel between the key server and each key client; or the first secure channel includes a point-to-point secure channel between the key server and a part of key clients and a point-to-multipoint secure channel between the key server and the other part of key clients. The point-to-point secure channel may be understood as that the secure channel may be used for communication between two nodes. The point-to-multipoint secure channel may be understood as that the secure channel may be used for communication between any two or more nodes in point-to-multipoint communication.

For example, if the key client includes the key client 102, the key client 103, and the key client 104, the first secure channel includes a secure channel between the key server 101 and the key client 102, a secure channel between the key server 101 and the key client 103, and a secure channel between the key server 101 and the key client 104. The secure channel between the key server 101 and the key client 102 is used for communication between the key server 101 and the key client 102, the secure channel between the key server 101 and the key client 103 is used for communication between the key server 101 and the key client 103, and the secure channel between the key server 101 and the key client 104 is used for communication between the key server 101 and the key client 104. Alternatively, the first secure channel includes a point-to-multipoint secure channel between the key server 101 and the key client 102 to the key client 104. The point-to-multipoint secure channel between the key server 101 and the key client 102 to the key client 104 is used for communication between any two or more nodes of the key server 101 and the key client 102 to the key client 104. Alternatively, the first secure channel includes a secure channel between the key server 101 and the key client 102 and a point-to-multipoint secure channel between the key server and the key client 103 and the key client 104. The secure channel between the key server 101 and the key client 102 is used for communication between the key server 101 and the key client 102, and the point-to-multipoint secure channel between the key server 101 and the key client 103 and the key client 104 is used for communication between any two or more nodes of the key server 101 and the key client 103 and the key client 104.

In a possible implementation, the key server sends the first key information to the key client through the first secure channel.

Correspondingly, the key client receives the first key information from the key server. Further, the key client receives the first key information from the key server through the first secure channel.

Optionally, after receiving the first key information from the key server, the key client may send response information of the first key information to the key server. The response information of the first key information may be used to indicate that the key client receives the first key information.

S403: The key client generates the first key based on the first key information.

In a possible implementation, the key client generates the first key based on the first key material. The type of the first key is a type indicated in the type information of the first key, and a communication domain on which the first key acts is the first communication domain.

In a possible implementation, after S403, the key client sends fifth notification information to the key server. The fifth notification information is used to indicate whether the key client successfully generates the first key.

It may be understood that, in the process of performing S401 to S403, the key server may alternatively periodically feed back a key obtaining progress to the key manager tool, the first terminal, the second terminal, or the cloud key manager center. For example, the key server sends first progress notification information to the key manager tool, the first terminal, the second terminal, or the cloud key manager center. The first progress notification information may be used to indicate the key obtaining progress. The first progress notification information may include the identifier of the intelligent vehicle, the identifier of the first communication domain, and progress information. The progress information is used to indicate the key obtaining progress.

It may be understood that the node in the key management system may perform S401 to S403 for a plurality of times, so that the key server may configure corresponding keys for a plurality of communication domains.

Based on the method shown in FIG. 4, the key server may configure a first key for each node in the first communication domain, and subsequently the node in the first communication domain may perform communication by using the first key. In an aspect, the first key is stored by the node in the first communication domain, and is not easily leaked. Even if the first key is leaked, security of another communication domain is not affected. Therefore, communication security can be improved. In another aspect, the key server can update the key at any time, which is quite convenient. In addition, the first key occupies small storage space, and does not increase software and hardware costs of the node in the key management system. The first key does not need to be managed by the vehicle manufacturer, and management costs of the vehicle manufacturer are not increased.

Actions of the key server or the key client in S401 to S403 may be performed by the processor 301 in the key obtaining apparatus 30 shown in FIG. 3 by invoking the application program code stored in the memory 303. This is not limited in this embodiment of this application.

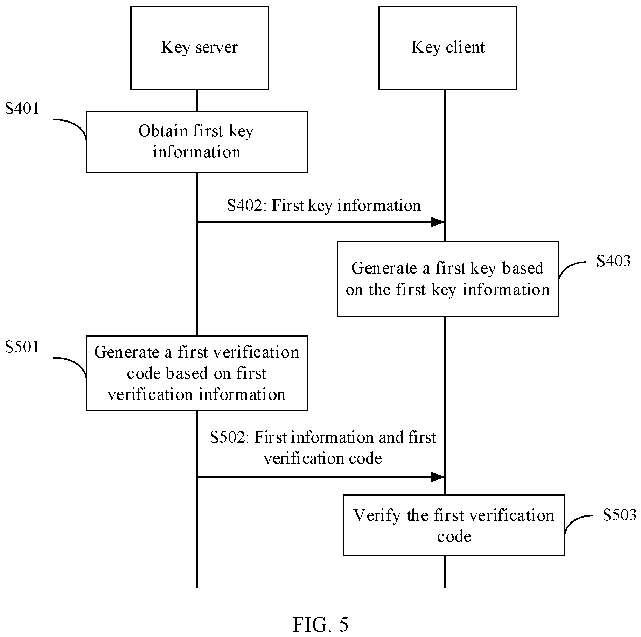

Optionally, in a possible implementation of the method shown in FIG. 4, the key client may verify availability of the first key between the key client and the key server, to avoid that normal communication cannot be performed between the key client and the key server due to a failure or an error in generating the first key. Specifically, as shown in FIG. 5, the method shown in FIG. 4 further includes S501 to S503.

S501: The key server generates a first verification code based on first verification information.

The first verification information may include at least one of the following information: the first key, the first key material, first information, or the identifier of the key server. The first information includes at least one of the following information: the identifier of the first communication domain, the identifier of the first key, or a first random number. The first verification code may be used to verify whether the first verification information is modified. The first verification code may be a MAC. The key server may calculate the first verification information by using one or more algorithms, to obtain the first verification code. The first random number is any random number generated by the key server.

Further, if the first verification information includes the first key, the key server may use the first key or may not use the first key in the process of calculating the first verification code. If the first verification information does not include the first key, the key server uses the first key in the process of calculating the first verification code.

S502: The key server sends the first information and the first verification code to the key client.

In a possible implementation, the key server sends the first information and the first verification code to the key client through the first secure channel.

Correspondingly, the key client receives the first information and the first verification code from the key server. Further, the key client receives the first information and the first verification code from the key server through the first secure channel.

S503: The key client verifies the first verification code.

In a possible implementation, that the key client verifies the first verification code includes: The key client generates the first verification code based on the first verification information, where if the first verification code generated by the key client is the same as the received first verification code, the verification succeeds; or if the first verification code generated by the key client is different from the received first verification code, the verification fails.

It may be understood that, the key client calculates the first verification information by using a same algorithm as that used when the key server generates the first verification code, to obtain the first verification code.

In a possible implementation, after S503, the key client sends second finish information to the key server. The second finish information is used to indicate whether the key client successfully verifies the first verification code. The second finish information may include the identifier of the first key and indication information indicating whether the verification succeeds. The second finish information may further include the identifier of the first communication domain and/or the type of the first key. After receiving the second finish information, the key server may send response information of the second finish information to the key client, to indicate that the second finish information is received. If the second finish information indicates that the key client successfully verifies the first verification code, the response information of the second finish information may further indicate that the key verification ends. It may be understood that, if the key client unsuccessfully performs verification, or the key server does not receive the second finish information within first preset duration, the key server may resend, to the key client, information used to configure the key.

It may be understood that the key client may send the second finish information to the key server through the first secure channel. If the first secure channel is a point-to-multipoint secure channel, another key client in the first communication domain may also receive the second finish information. The another key client may determine, based on the second finish information, whether the key client successfully verifies the first verification code, or may ignore the second finish information.

Based on the method shown in FIG. 5, the key client may verify availability of the first key between the key client and the key server by using the first verification code, to avoid that normal communication cannot be performed between the key client and the key server due to a failure or an error in generating the first key.

Actions of the key server or the key client in S501 to S503 may be performed by the processor 301 in the key obtaining apparatus 30 shown in FIG. 3 by invoking the application program code stored in the memory 303. This is not limited in this embodiment of this application.

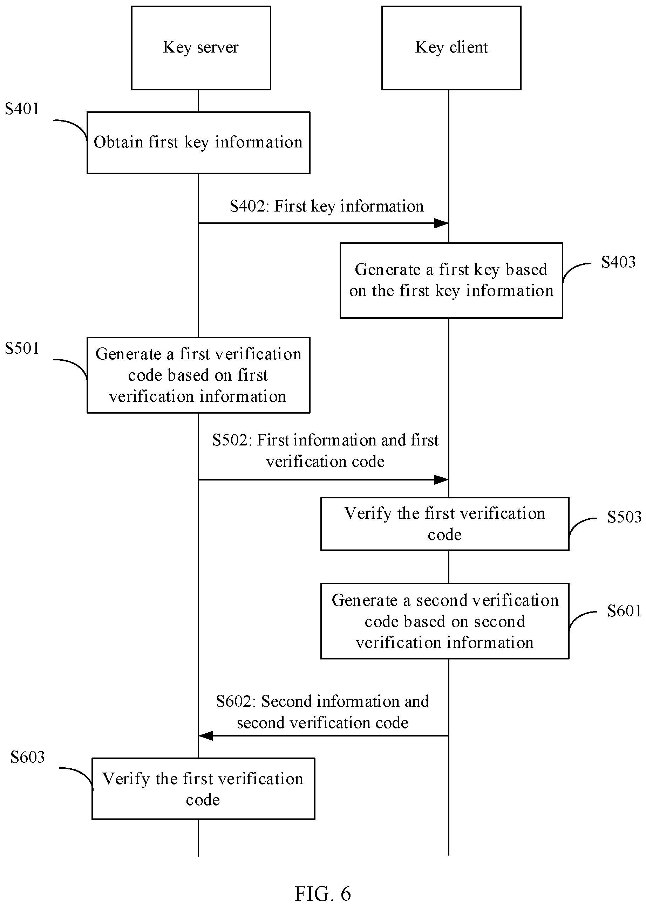

Optionally, in a possible implementation of the method shown in FIG. 5, the key server may verify availability of the first key between the key client and the key server, to avoid that normal communication cannot be performed between the key client and the key server due to a failure or an error in generating the first key. Specifically, as shown in FIG. 6, the method shown in FIG. 5 further includes S601 to S603.

S601: The key client generates a second verification code based on second verification information.

The second verification information may include at least one of the following information: the first key, the first key material, second information, the identifier of the key client, or the first random number. The second information includes the identifier of the first communication domain and/or the identifier of the first key. The second verification code may be used to verify whether the second verification information is modified. The second verification code may be a MAC. The key client may calculate the first verification information by using one or more algorithms, to obtain the first verification code.

Further, if the second verification information includes the first key, the key client may use the first key or may not use the first key in the process of calculating the second verification code. If the second verification information does not include the first key, the key client uses the first key in the process of calculating the second verification code.

It may be understood that the random number included in the second verification information may alternatively be a random number generated by the key client. In this case, the second verification information includes at least one of the following information: the first key, the first key material, the second information, or the identifier of the key client. The second information includes at least one of the following information: the identifier of the first communication domain, the identifier of the first key, or a third random number. The third random number is any random number generated by the key client. The third random number is the same as or different from the first random number.

S602: The key client sends the second information and the second verification code to the key server.

In a possible implementation, the key client sends the second information and the second verification code to the key server through the first secure channel.

Correspondingly, the key server receives the second information and the second verification code from the key client. Further, the key server receives the second information and the second verification code from the key client through the first secure channel.

S603: The key server verifies the second verification code.

In a possible implementation, that the key server verifies the second verification code includes: The key server generates the second verification code based on the second verification information, where if the second verification code generated by the key server is the same as the received second verification code, the verification succeeds; or if the second verification code generated by the key server is different from the received second verification code, the verification fails.

In a possible implementation, after S603, the key server sends seventh notification information to the key client. The seventh notification information is used to indicate whether the key server successfully verifies the second verification code. It may be understood that, if the key server unsuccessfully performs verification, the key server may resend, to the key client, information used to configure the key.

It may be understood that an execution sequence of S501 to S503 and S601 to S603 is not limited in this embodiment of this application. For example, S501 to S503 may be performed before S601 to S603, or S601 to S603 may be performed before S501 to S503.

It may be understood that, in this embodiment of this application, one of the key server and the key client verifies feasibility of the first key. In other words, this embodiment of this application may not include S501 to S503 or S601 to S603.

Based on the method shown in FIG. 6, the key server may verify availability of the first key between the key client and the key server by using the second verification code, to avoid that normal communication cannot be performed between the key client and the key server due to a failure or an error in generating the first key.

Actions of the key server or the key client in S601 to S603 may be performed by the processor 301 in the key obtaining apparatus 30 shown in FIG. 3 by invoking the application program code stored in the memory 303. This is not limited in this embodiment of this application.

In the method shown in FIG. 4 to FIG. 6, the key management system 10 shown in FIG. 1A is used as an example to describe the key obtaining method provided in this embodiment of this application. The following describes, by using the key management system 11 shown in FIG. 1B as an example, the key obtaining method provided in this embodiment of this application.

FIG. 7 shows another key obtaining method according to an embodiment of this application. The key obtaining method may be applied to a key management system. The key management system includes a key server and a first node in a communication connection to the key server. The first node is a key proxy or a key client. If the first node is the key proxy, the key management system further includes a second node in a communication connection to the first node, and the second node is a key client.

Further, the key management system may be the key management system 11 shown in FIG. 1B. In this case, the key server may be the key server 111 in FIG. 1B, and the first node may be the key client 112, the key proxy 113, or the key proxy 114 in FIG. 1B. If the first node is the key client 112 in FIG. 1B, for a specific process of the another key obtaining method provided in this embodiment of this application, refer to descriptions in the embodiments shown in FIG. 4 to FIG. 6. If the first node is the key proxy 113 in FIG. 1B, the second node may be the key client 115 or the key client 116. If the first node is the key proxy 114 in FIG. 1B, the second node may be the key client 117.

In a possible implementation, the key management system may be deployed on the intelligent vehicle 20 in FIG. 2A or the intelligent vehicle 22 in FIG. 2B. In this case, the key server may be deployed on a device that is in the intelligent vehicle 20 or the intelligent vehicle 22 and that has a communication capability and sufficient storage resources, for example, a TBox, a gateway, a BCM, a CDC, an MDC, a VCU, a VDC, or a VIU. The first node may be deployed on the TBox, the gateway, the BCM, the CDC, the MDC, the VCU, the VDC, the VIU, or the ECU of the intelligent vehicle 20 or the intelligent vehicle 22. The second node may be deployed on the TBox, the gateway, the BCM, the CDC, the MDC, the VCU, the VDC, the VIU, or the ECU of the intelligent vehicle 20 or the intelligent vehicle 22.

It may be understood that, similar to the embodiments shown in FIG. 4 to FIG. 6, before the another key obtaining method provided in this embodiment of this application is performed, one or more fixed keys may be configured for a node in the key management system. A use scope of the fixed key is in the key management system. Before the key is obtained according to the another key obtaining method provided in this embodiment of this application, nodes in the key management system may communicate with each other by using the fixed key, to improve information security of the key management system. The fixed key may alternatively be used as a basic key to derive a key in a communication domain in the key management system. It should be understood that the nodes in the key management system may not be configured with the fixed key, and directly obtain keys of a plurality of communication domains according to the key obtaining method provided in this embodiment of this application. For a specific process in which the node in the key management system is configured with one or more fixed keys, refer to descriptions in S1 and S2. It should be understood that the third node in S1 is any node in the key management system. The key management system 11 shown in FIG. 1B is used as an example. The third node may be the key server 111, the key client 112, the key proxy 113, the key proxy 114, the key client 115, the key client 116, or the key client 117.

In a possible implementation, to perform the another key obtaining method provided in this embodiment of this application, related configuration information may be configured for the node in the key management system, and subsequently the node in the key management system may perform the key obtaining method based on the related configuration information. It should be understood that, if the related configuration information does not change after the related configuration information is configured for the node in the key management system, the related configuration information does not need to be reconfigured for the node in the key management system each time before the key obtaining method provided in this embodiment of this application is performed. If the related configuration information changes, updated related configuration information may be configured for the node in the key management system. For a specific process of configuring the related configuration information for the node in the key management system, refer to S7 to S9 described below.

S7: The key server obtains first configuration information.

For descriptions of the first configuration information, refer to descriptions in S3.

For example, the key management system 11 shown in FIG. 1B is used as an example. The first configuration information may include information about the key server 111, information about the key client 112, information about the key proxy 113, information about the key proxy 114, information about the key client 115, information about the key client 116, and information about the key client 117. The information about the key server 111 may be shown in Table 10. In Table 10, the information about the key server 111 includes an identifier of the key server 111, information about a connection manner of each port of the key server 111, and information about another node that communicates with the key server 111. The information about the connection manner of each port of the key server 111 includes an identifier (a port 1, a port 2, and a port 3) of each port of the key server 111, an identifier (an Eth, a CAN, and a CAN) of the connection manner of each port of the key server 111, and an address (an IP 1, a CAN ID 1, and a CAN ID 2) of each port of the key server 111. The information about the another node that communicates with the key server 111 includes an identifier (an identifier of the key client 112, an identifier of the key proxy 113, and an identifier of the key proxy 114) of the another node that communicates with the key server 111 and information about a connection manner between the another node and the key server 111. The information about the connection manner between the another node and the key server 111 includes information about a connection manner between the key client 112 and the key server 111, information about a connection manner between the key proxy 113 and the key server 111, and information about a connection manner between the key proxy 114 and the key server 111. The information about the connection manner between the key client 112 and the key server 111 includes an identifier (an Eth) of the connection manner between the key client 112 and the key server 111 and an IP address (an IP 4) of a port that is of the key client 112 and that is connected to the key server 111. The information about the connection manner between the key proxy 113 and the key server 111 includes an identifier (a CAN) of the connection manner between the key proxy 113 and the key server 111 and an address (a CAN ID 3) of a port that is of the key proxy 113 and that is connected to the key server 111. The information about the connection manner between the key proxy 114 and the key server 111 includes an identifier (a CAN) of the connection manner between the key proxy 114 and the key server 111 and an address (a CAN ID 4) of a port that is of the key proxy 114 and that is connected to the key server 111.

**Table 10**

| Identifier of the key server 111 | | | |
|---|---|---|---|
| Information about the connection manner of each port of the key server 111 | Port 1 | Eth | IP 1 |
| | Port 2 | CAN | CAN ID 1 |
| | Port 3 | CAN | CAN ID 2 |
| Information about the another node that communicates with the key server 111 | Identifier of the key client 112 | Eth | IP 4 |
| | Identifier of the key proxy 113 | CAN | CAN ID 3 |
| | Identifier of the key proxy 114 | CAN | CAN ID 4 |

The information about the key client 112 may be shown in Table 11. In Table 11, the information about the key client 112 includes the identifier of the key client 112, information about a connection manner of each port of the key client 112, and information about another node that communicates with the key client 112. The information about the connection manner of each port of the key client 112 includes an identifier (an Eth) of the connection manner of each port of the key client 112 and an IP address (an IP 4) of each port of the key client 112. The information about the another node that communicates with the key client 112 includes an identifier (the identifier of the key server 111) of the another node that communicates with the key client 112 and information about a connection manner between the another node and the key client 112. The information about the connection manner between the another node and the key client 112 includes an identifier (a port 1) of a port that is of the key server 111 and that is connected to the key client 112, an identifier (an Eth) of the connection manner between the key server 111 and the key client 112, and an IP address (an IP 1) of the port that is of the key server 111 and that is connected to the key client 112.

**Table 11**

| Identifier of the key client 112 | | | | |
|---|---|---|---|---|
| Information about the connection manner of each port of the key client 112 | Eth | | | IP 4 |
| Information about the another node that communicates with the key client 112 | Identifier of the key server 111 | Port 1 | Eth | IP 1 |

The information about the key proxy 113 may be shown in Table 12. In Table 12, the information about the key proxy 113 includes the identifier of the key proxy 113, information about a connection manner of each port of the key proxy 113, and information about another node that communicates with the key proxy 113. The information about the connection manner of each port of the key proxy 113 includes an identifier (a port 1, a port 2, and a port 3) of each port of the key proxy 113, an identifier (a CAN, a CAN, and a CAN) of the connection manner of each port of the key proxy 113, and an address (a CAN ID 3, a CAN ID 5, and a CAN ID 6) of each port of the key proxy 113. The information about the another node that communicates with the key proxy 113 includes an identifier (an identifier of the key server 111, an identifier of the key client 115, and an identifier of the key client 116) of the another node that communicates with the key proxy 113 and information about a connection manner between the another node and the key proxy 113. The information about the connection manner between the another node and the key proxy 113 includes information about a connection manner between the key server 111 and the key proxy 113, information about a connection manner between the key client 115 and the key proxy 113, and information about a connection manner between the key client 116 and the key proxy 113. The information about the connection manner between the key server 111 and the key proxy 113 includes an identifier (a port 2) of a port that is of the key server 111 and that is connected to the key proxy 113, an identifier (a CAN) of the connection manner between the key server 111 and the key proxy 113, and an address (a CAN ID 1) of the port that is of the key server 111 and that is connected to the key proxy 113. The information about the connection manner between the key client 115 and the key proxy 113 includes an identifier (a CAN) of the connection manner between the key client 115 and the key proxy 113 and an address (a CAN ID 7) of a port that is of the key client 115 and that is connected to the key proxy 113. The information about the connection manner between the key client 116 and the key proxy 113 includes an identifier (a CAN) of the connection manner between the key client 116 and the key proxy 113 and an address (a CAN ID 8) of a port that is of the key client 116 and that is connected to the key proxy 113.

**Table 12**

| Identifier of the key proxy 113 | | | | | |
|---|---|---|---|---|---|
| Information about the connection manner of each port of the key proxy 113 | Port 1 | | CAN | | CAN ID 3 |
| | Port 2 | | CAN | | CAN ID 5 |
| | Port 3 | | CAN | | CAN ID 6 |
| Information about the another node that | Identifier of the key server 111 | Port 2 | | CAN | CAN ID 1 |
| communicates with the key proxy 113 | Identifier of the key client 115 | CAN | | | CAN ID 7 |
| | Identifier of the key client 116 | CAN | | | CAN ID 8 |

The information about the key proxy 114 may be shown in Table 13. In Table 13, the information about the key proxy 114 includes the identifier of the key proxy 114, information about a connection manner of each port of the key proxy 114, and information about another node that communicates with the key proxy 114. The information about the connection manner of each port of the key proxy 114 includes an identifier (a port 1 and a port 2) of each port of the key proxy 114, an identifier (a CAN and a CAN) of the connection manner of each port of the key proxy 114, and an address (a CAN ID 4 and a CAN ID 9) of each port of the key proxy 114. The information about the another node that communicates with the key proxy 114 includes an identifier (an identifier of the key server 111) of the another node that communicates with the key proxy 114, information about a connection manner between the key server 111 and the key proxy 114, and information about a connection manner between the key client 117 and the key proxy 114. The information about the connection manner between the key server 111 and the key proxy 114 includes an identifier (a port 3) of a port that is of the key server 111 and that is connected to the key proxy 114, an identifier (a CAN) of the connection manner between the key server 111 and the key proxy 114, and an address (a CAN ID 2) of the port that is of the key server 111 and that is connected to the key proxy 114. The information about the connection manner between the key client 117 and the key proxy 114 includes an identifier (a CAN) of the connection manner between the key client 117 and the key proxy 114 and an address (a CAN ID 10) of a port that is of the key client 117 and that is connected to the key proxy 114.

**Table 13**

| Identifier of the key proxy 114 | | | | |
|---|---|---|---|---|
| Information about the connection manner of each port of the key proxy 114 | Port 1 | CAN | CAN ID 4 | |
| | Port 2 | CAN | CAN ID 9 | |
| Information about the another node that communicates with the key proxy 114 | Identifier of the key server 111 | Port 3 | CAN | CAN ID 2 |
| | Identifier of the key client 117 | | CAN | CAN ID 10 |

The information about the key client 115 may be shown in Table 14. In Table 14, the information about the key client 115 includes the identifier of the key client 115, information about a connection manner of each port of the key client 115, and information about another node that communicates with the key client 115. The information about the connection manner of each port of the key client 115 includes an identifier (a CAN) of the connection manner of each port of the key client 115 and an address (a CAN ID 7) of each port of the key client 115. The information about the another node that communicates with the key client 115 includes an identifier (the identifier of the key proxy 113) of the another node that communicates with the key client 115 and information about a connection manner between the another node and the key client 115. The information about the connection manner between the another node and the key client 115 includes an identifier (a port 2) of a port that is of the key proxy 113 and that is connected to the key client 115, an identifier (a CAN) of the connection manner between the key proxy 113 and the key client 115, and an address (a CAN ID 5) of the port that is of the key proxy 113 and that is connected to the key client 115.

**Table 14**

| Identifier of the key client 115 | | | | |
|---|---|---|---|---|
| Information about the connection manner of each port of the key client 115 | CAN | | | CAN ID 7 |
| Information about the another node that communicates with the key client 115 | Identifier of the key proxy 113 | Port 2 | CAN | CAN ID 5 |

The information about the key client 116 may be shown in Table 15. In Table 15, the information about the key client 116 includes the identifier of the key client 116, information about a connection manner of each port of the key client 116, and information about another node that communicates with the key client 116. The information about the connection manner of each port of the key client 116 includes an identifier (a CAN) of the connection manner of each port of the key client 116 and an address (a CAN ID 8) of each port of the key client 116. The information about the another node that communicates with the key client 116 includes an identifier (the identifier of the key proxy 113) of the another node that communicates with the key client 116 and information about a connection manner between the another node and the key client 116. The information about the connection manner between the another node and the key client 116 includes an identifier (a port 3) of a port that is of the key proxy 113 and that is connected to the key client 116, an identifier (a CAN) of the connection manner between the key proxy 113 and the key client 116, and an address (a CAN ID 6) of the port that is of the key proxy 113 and that is connected to the key client 116.

**Table 15**

| Identifier of the key client 116 | | | | |
|---|---|---|---|---|
| Information about the connection manner of each port of the key client 116 | CAN | | | CAN ID 8 |
| Information about the another node that communicates with the key client 116 | Identifier of the key proxy 113 | Port 3 | CAN | CAN ID 6 |

The information about the key client 117 may be shown in Table 16. In Table 16, the information about the key client 117 includes the identifier of the key client 117, information about a connection manner of each port of the key client 117, and information about another node that communicates with the key client 117. The information about the connection manner of each port of the key client 117 includes an identifier (a CAN) of the connection manner of each port of the key client 117 and an address (a CAN ID 10) of each port of the key client 117. The information about the another node that communicates with the key client 117 includes an identifier (the identifier of the key proxy 114) of the another node that communicates with the key client 117 and information about a connection manner between the another node and the key client 117. The information about the connection manner between the another node and the key client 117 includes an identifier (a port 2) of a port that is of the key proxy 114 and that is connected to the key client 117, an identifier (a CAN) of the connection manner between the key proxy 114 and the key client 117, and an address (a CAN ID 9) of the port that is of the key proxy 114 and that is connected to the key client 117.

**Table 16**

| Identifier of the key client 117 | | | | |
|---|---|---|---|---|
| Information about the connection manner of each port of the key client 117 | CAN | | | CAN ID 10 |
| Information about the another node that communicates with the key client 117 | Identifier of the key proxy 114 | Port 2 | CAN | CAN ID 9 |

It can be seen from Table 10 to Table 16 that, the port 1 of the key server 111 is connected to the key client 112, the port 2 of the key server 111 is connected to the key proxy 113, and the port 3 of the key server 111 is connected to the key proxy 114. The port 1 of the key proxy 113 is connected to the key server 111, the port 2 of the key proxy 113 is connected to the key client 115, and the port 3 of the key proxy 113 is connected to the key client 116. The port 1 of the key proxy 114 is connected to the key server 111, and the port 2 of the key proxy 114 is connected to the key client 117.

The foregoing Table 10 to Table 16 are merely examples of the first configuration information. The first configuration information may include less or more information than that in Table 10 to Table 16. This is not limited.

In a possible implementation, the key server receives the first configuration information from the key manager tool or the cloud key manager center. In other words, the key server may obtain the first configuration information from the key manager tool or the cloud key manager center. For a specific process in which the key server obtains the first configuration information from the key manager tool or the cloud key manager center, refer to descriptions in S3. Details are not described herein again.

S8: The key server sends second configuration information to the first node.

In S8, the second configuration information may be used to indicate at least one of the following information: an identifier of the first node, a connection manner of the first node, or information about another node that communicates with the first node. Further, the second configuration information may be further used to indicate at least one of the following information: an identifier of the second node, a connection manner of the second node, or information about another node that communicates with the second node.

For descriptions of the identifier of the first node, the connection manner of the first node, and the information about the another node that communicates with the first node, refer to descriptions in S4.

The identifier of the second node is used to identify a device on which the second node is deployed. For example, if the second node is deployed on an ECU, the identifier of the second node may be an identifier of the ECU. The connection manner of the second node may be used to indicate a connection manner of each port of the second node. The connection manner of the second node may alternatively be used to indicate an address of each port of the second node, for example, an IP address and/or a MAC address. The information about the another node that communicates with the second node may be used to indicate an identifier of the another node and a connection manner between the another node and the second node. The identifier of the another node is used to identify a device on which the another node is deployed. The information about the another node that communicates with the second node may alternatively be used to indicate an address, for example, an IP address and/or a MAC address, of a port that is of the another node and that is connected to the second node.

For example, the first configuration information shown in Table 10 to Table 16 is used as an example. If the first node is the key client 112, the second configuration information may be shown in Table 11. If the first node is the key proxy 113, the second configuration information may include content shown in Table 12, Table 14, and Table 15. If the first node is the key proxy 114, the second configuration information may include content shown in Table 13 and Table 16.

In a possible implementation, in a process of sending the second configuration information to the first node, the key server may alternatively send a first distribution progress notification to the key manager tool or the cloud key manager center. The first distribution progress notification may be used to indicate a progress of distributing the second configuration information by the key server to each node.

S9: The first node sends third configuration information to the second node.

The third configuration information may be used to indicate at least one of the following information: an identifier of the second node, a connection manner of the second node, or information about another node that communicates with the second node.

For example, the second configuration information shown in Table 10 to Table 16 is used as an example. If the first node is the key proxy 113, and the second node is the key client 115, the third configuration information may be shown in Table 14. If the first node is the key proxy 113, and the second node is the key client 116, the third configuration information may be shown in Table 15. If the first node is the key proxy 114, and the second node is the key client 117, the third configuration information may be shown in Table 16.

In a possible implementation, in a process of sending the third configuration information to the second node, the first node may alternatively send a second distribution progress notification to the key manager tool or the cloud key manager center through the key server. The second distribution progress notification may be used to indicate a progress of distributing the third configuration information by the first node to each node. After S9, the key server may alternatively send a distribution finish notification to the key manager tool or the cloud key manager center, to indicate that all nodes in the key management system have received respective configuration information.

In a possible implementation, after S9, the node in the key management system may determine, based on the configuration information received by the node, information about a communication domain in which the node is located. For details, refer to S10 to S12 described below.

S10: The key server determines, based on the first configuration information, information about a communication domain in which the key server is located.

S11: The first node determines, based on the second configuration information, information about a communication domain in which the first node is located.

For a specific process of S10 and S11, refer to corresponding descriptions in S5 and S6.

S12: The second node determines, based on the third configuration information, information about a communication domain in which the second node is located.

In a possible implementation, the second node determines, in any one of Manner 1 to Manner 3 described above, the communication domain in which the second node is located, and determines information about each communication domain based on the third configuration information. For details, refer to corresponding descriptions for determining the information about the communication domain in S5 or S6.

In S12, the information about the communication domain in which the second node is located may be used to indicate at least one of the following information: an application scope of the communication domain in which the second node is located, an identifier of the communication domain in which the second node is located, a communication manner of a node in the communication domain in which the second node is located, a connection manner between the second node and a node other than the second node in the communication domain in which the second node is located, an interaction manner of the second node in the communication domain in which the second node is located, an address of a port that is of the second node and that is connected to the node other than the second node in the communication domain in which the second node is located, a protocol or an algorithm supported by the second node, information about the node other than the second node in the communication domain in which the second node is located, or key information for building a key of the communication domain in which the second node is located.

The application scope of the communication domain in which the second node is located includes an entire vehicle, an intra-functional domain, a cross-functional domain, a primary device, and the like. The communication manner of the node in the communication domain in which the second node is located includes point-to-point communication or point-to-multipoint communication. The interaction manner of the second node in the communication domain in which the second node is located includes direct communication with the key server or communication with the key server through the key proxy. The protocol or the algorithm supported by the second node includes at least one of the following: a protocol of a packet supported by the second node (for example, a UDP or a TCP), a plurality of algorithms supported by the second node (for example, an integrity algorithm, an encryption algorithm, an identity authentication algorithm, or a derivation algorithm of a temporary key), or information about a basic key used to derive the key of the communication domain in which the second node is located (for example, storage location information of the basic key or type information of the basic key). The information about the node other than the second node in the communication domain in which the second node is located may be used to indicate at least one of the following information: an identifier of the another node, a port that is of the another node and that is connected to the second node, or a protocol or an algorithm supported by the another node. The key information for building the key of the communication domain in which the second node is located may be used to indicate a storage location of the key of the communication domain in which the second node is located. Further, the key information for building the key of the communication domain in which the second node is located may be further used to indicate a type of the key of the communication domain in which the second node is located.

It may be understood that, after S12, the node in the key management system may obtain a key of each communication domain. The following describes in detail the key obtaining method provided in this embodiment of this application. The key obtaining method includes S701 to S705.

S701: The key server obtains first key information.

For a specific process of S701, refer to corresponding descriptions in S401. Three differences are as follows:
(1) The first key information in S701 further includes information about the second node. The information about the second node is used to indicate the second node, and the second node is a key client that is in the first communication domain and that is in a communication connection to the key proxy. It may be understood that the first key information includes the information about the second node, to indicate, to the key proxy, specific key clients to which information such as the first key material and the identifier of the first communication domain needs to be sent. During specific application, the first key information may not include the information about the second node. After receiving the first key information, the key proxy determines the second node.
(2) A node included in the first communication domain in S701 is different from the node included in the first communication domain in S401. In S701, the first communication domain includes at least two nodes in the key management system, and the at least two nodes include the second node. The at least two nodes may include the first node or may not include the first node. For example, the first communication domain includes at least two key clients; or the first communication domain includes at least one key client, at least one key proxy, and at least one key server; or the first communication domain includes at least one key client and at least one key server; or the first communication domain includes at least one key client and at least one key proxy. The key management system shown in FIG. 1B is used as an example. The first communication domain includes the key client 115 and the key client 116; or the first communication domain includes the key server 111, the key proxy 114, and the key client 117; or the first communication domain includes the key server 111 and the key client 112; or the first communication domain includes the key proxy 114 and the key client 117; or the first communication domain includes the key server 111 and the key client 115.
(3) After the key of the first communication domain is updated, a procedure in which the key server triggers the node in the first communication domain to delete the key before update is different.

For example, after the key of the first communication domain is updated, for example, after S705, the key server sends first request deletion information to the key proxy. The first request deletion information is used to request to delete the key before update. The first request deletion information may include the identifier of the key before update. The first request deletion information may further include the identifier of the first communication domain and/or a type of the key before update. After receiving the first request deletion information of the key server, the key proxy may send response information of the first request deletion information to the key server, to indicate that the first request deletion information is received. After receiving the first request deletion information of the key server, the key proxy may further send second request deletion information to the second node. The second request deletion information is used to request the second node to delete the key before update. The second request deletion information may include the identifier of the key before update. The second request deletion information may further include the identifier of the first communication domain and/or the type of the key before update. After receiving the second request deletion information of the key proxy, the second node deletes the key before update, and sends response information of the second request deletion information to the key proxy, to indicate that the key before update has been deleted.

Subsequently, if the key proxy is included in the first communication domain, after receiving the response information of the second request deletion information and deleting the key before update, the key proxy sends first finish information to the key server, to indicate that the key before update has been deleted. If the key proxy is not included in the first communication domain, after receiving the response information of the second request deletion information, the key proxy sends first finish information to the key server, to indicate that the key before update has been deleted. The first finish information may include the identifier of the key before update and indication information indicating that the key before update has been deleted. The first finish information may further include the identifier of the first communication domain and/or the type of the key before update. After receiving the first finish information, the key server may send response information of the first finish information to the key client, to indicate that the first finish information is received.

Further, in the process of deleting the key before update, the key proxy may further feed back a deletion progress to the key server periodically or aperiodically. For example, the key proxy sends second progress notification information to the key server. The second progress notification information may be used to indicate the progress of deleting the key before update. The second progress notification information may include the identifier of the key before update and progress information. The progress information is used to indicate the progress of deleting the key before update.

S702: The key server sends the first key information to the key proxy.

In a possible implementation, the key proxy is included in the first communication domain or is not included in the first communication domain. A quantify of key proxies is greater than or equal to 1. For example, the key management system shown in FIG. 1B is used as an example. If the first communication domain includes the key server 111 and the key proxy 113, the key server 111 sends the first key information to the key proxy 113; or if the first communication domain includes the key proxy 113 and the key proxy 114, the key server 111 sends the first key information to the key proxy 113 and the key proxy 114.

In a possible implementation, before S702, the key server establishes a first secure channel with the key proxy based on the first protocol. Correspondingly, the key proxy establishes the first secure channel with the key server based on the first protocol. For descriptions of the first protocol and the first secure channel, refer to corresponding descriptions in S402. A difference is that the first secure channel in S702 is used to transmit information between the key server and the key proxy.

In a possible implementation, the key server sends the first key information to the key proxy through the first secure channel.

Correspondingly, the key proxy receives the first key information from the key server. Further, the key proxy receives the first key information from the key server through the first secure channel.

Optionally, after receiving the first key information from the key server, the key proxy may send response information of the first key information to the key server. The response information of the first key information may be used to indicate that the key proxy receives the first key information.

S703: The key proxy generates the first key based on the first key information.

For a specific process of S703, refer to corresponding descriptions of generating the first key by the key client based on the first key information in S403. Details are not described herein again.

It may be understood that, if the key proxy is included in the first communication domain, the key proxy performs S703. If the key proxy is not included in the first communication domain, the key proxy may not perform S703. If the first key information includes the information about the second node, after receiving the first key information, the key proxy sends the first key material and the identifier of the first communication domain to the second node based on the information about the second node. If the first key information does not include the information about the second node, after receiving the first key information and determining the second node, the key proxy sends the first key information to the second node.

S704: The key proxy sends the first key material and the identifier of the first communication domain to the second node.

In a possible implementation, before S704, the key proxy establishes a second secure channel with the second node based on the first protocol. Correspondingly, the second node establishes the second secure channel with the key proxy based on the first protocol. The second secure channel may be used to transmit information between the key proxy and the second node.

It may be understood that, if a quantity of second nodes is equal to 1, the second secure channel includes a point-to-point secure channel between the key proxy and the second node. If a quantify of second nodes is greater than 1, the second secure channel includes a point-to-point secure channel between the key proxy and each second node; the second secure channel includes a point-to-multipoint secure channel between the key proxy and each second node; or the second secure channel includes a point-to-point secure channel between the key proxy and a part of second nodes and a point-to-multipoint secure channel between the key proxy and the other part of second nodes.

In a possible implementation, the key proxy sends the first key material and the identifier of the first communication domain to the second node through the second secure channel.

In a possible implementation, after S704, the key proxy sends third finish information to the key server. The third finish information may be used to indicate the key proxy to finish sending of the first key material and the identifier of the first communication domain. After receiving the third finish information, the key server may send response information of the third finish information to the key proxy. The response information of the third finish information is used to indicate that the key server receives the third finish information.

In a possible implementation, if the quantity of the second nodes is greater than 1, after S704, the key proxy sends third progress notification information to the key server, where the third progress notification information may be used to indicate a progress of sending, by the key proxy, the first key material and the identifier of the first communication domain to the second node. The third progress notification information may include the identifier of the first communication domain and indication information of the progress of sending the first key material and the identifier of the first communication domain. The third progress notification information may further include the type of the first key.

It may be understood that if the first key information includes type information of the first key, the key proxy sends the first key material, the identifier of the first communication domain, and the type information of the first key to the second node.

It may be understood that, in addition to the first key material and the identifier of the first communication domain, the key proxy may further send the information about the second node to the second node, so that the second node determines the node included in the first communication domain.

It may be understood that an execution sequence of S703 and S704 is not limited in this embodiment of this application. For example, S703 may be performed before S704, or S704 may be performed before S703, or S703 and S704 may be simultaneously performed.

Correspondingly, the second node receives the first key material and the identifier of the first communication domain from the key proxy. Further, the second node receives the first key material and the identifier of the first communication domain from the key proxy through the second secure channel.

Optionally, after receiving the first key material and the identifier of the first communication domain from the key proxy, the second node may send first response information to the key proxy. The first response information may be used to indicate that the second node receives the first key material and the identifier of the first communication domain.

S705: The second node generates the first key based on the first key material.

For a specific process of S705, refer to corresponding descriptions of generating the first key by the key client based on the first key information in S403. Details are not described herein again.

Based on the method shown in FIG. 7, the key server may configure a first key for each node in the first communication domain, and subsequently the node in the first communication domain may perform communication by using the first key. In an aspect, the first key is stored by the node in the first communication domain, and is not easily leaked. Even if the first key is leaked, security of another communication domain is not affected. Therefore, communication security can be improved. In another aspect, the key server can update the key at any time, which is quite convenient. In addition, the first key occupies small storage space, and does not increase software and hardware costs of the node in the key management system. The first key does not need to be managed by the vehicle manufacturer, and management costs of the vehicle manufacturer are not increased.

Actions of the key server, the key proxy, or the key client in S701 to S705 may be performed by the processor 301 in the key obtaining apparatus 30 shown in FIG. 3 by invoking the application program code stored in the memory 303. This is not limited in this embodiment of this application.

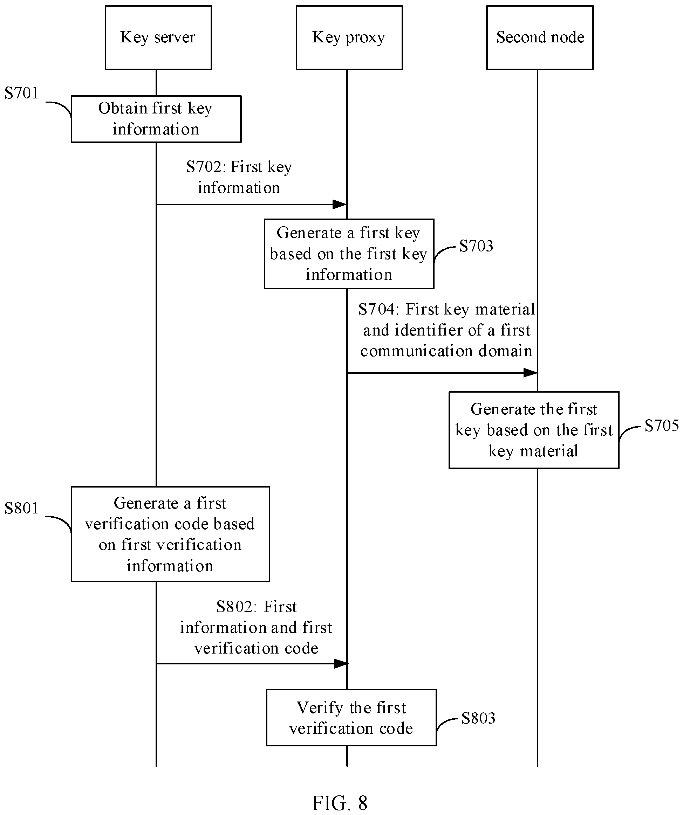

Optionally, in a possible implementation of the method shown in FIG. 7, if the key proxy is included in the first communication domain, the key proxy may verify availability of the first key between the key server and the key proxy, to avoid that normal communication cannot be performed between the key server and the key proxy due to a failure or an error in generating the first key. Specifically, as shown in FIG. 8, the method shown in FIG. 7 further includes S801 to S803.

S801: The key server generates a first verification code based on first verification information.

S802: The key server sends first information and the first verification code to the key client.

S803: The key proxy verifies the first verification code.

For a specific process of S801 to S803, refer to corresponding descriptions in S501 to S503. Details are not described herein again.

It may be understood that an execution sequence of S801 to S803 and S704 and S705 is not limited in this embodiment of this application. For example, S801 to S803 may be performed before S704 and S704, or S704 and S705 may be performed before S801 to S803, or S801 to S803 and S704 and S705 may be simultaneously performed. This is not limited.

Based on the method shown in FIG. 5, the key proxy may verify availability of the first key between the key server and the key proxy by using the first verification code, to avoid that normal communication cannot be performed between the key server and the key proxy due to a failure or an error in generating the first key.

Actions of the key server or the key proxy in S801 to S803 may be performed by the processor 301 in the key obtaining apparatus 30 shown in FIG. 3 by invoking the application program code stored in the memory 303. This is not limited in this embodiment of this application.

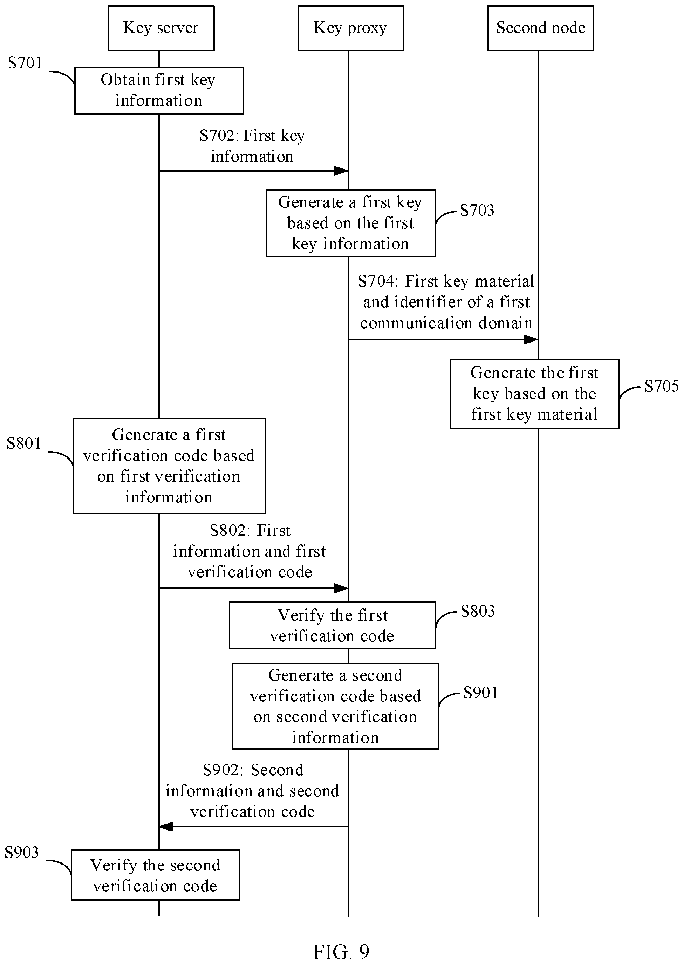

Optionally, in a possible implementation of the method shown in FIG. 8, the key server may verify availability of the first key between the key server and the key proxy, to avoid that normal communication cannot be performed between the key server and the key proxy due to a failure or an error in generating the first key. Specifically, as shown in FIG. 9, the method shown in FIG. 8 further includes S901 to S903.

S901: The key proxy generates a second verification code based on second verification information.

S902: The key proxy sends second information and the second verification code to the key server.

S903: The key server verifies the second verification code.

For a specific process of S901 to S903, refer to corresponding descriptions in S601 to S603. Details are not described herein again.

It may be understood that an execution sequence of S901 to S903 and S801 to S803 is not limited in this embodiment of this application. For example, S901 to S903 may be performed before S801 to S803, or S801 to S803 may be performed before S901 to S903, or S901 to S903 and S801 to S803 may be simultaneously performed. This is not limited.

It may be understood that, in this embodiment of this application, one of the key server and the key proxy may verify feasibility of the first key. In other words, this embodiment of this application may not include S801 to S803 or S901 to S903.

Based on the method shown in FIG. 9, the key server may verify availability of the first key between the key server and the key proxy by using the second verification code, to avoid that normal communication cannot be performed between the key server and the key proxy due to a failure or an error in generating the first key.

Actions of the key server or the key proxy in S901 to S903 may be performed by the processor 301 in the key obtaining apparatus 30 shown in FIG. 3 by invoking the application program code stored in the memory 303. This is not limited in this embodiment of this application.

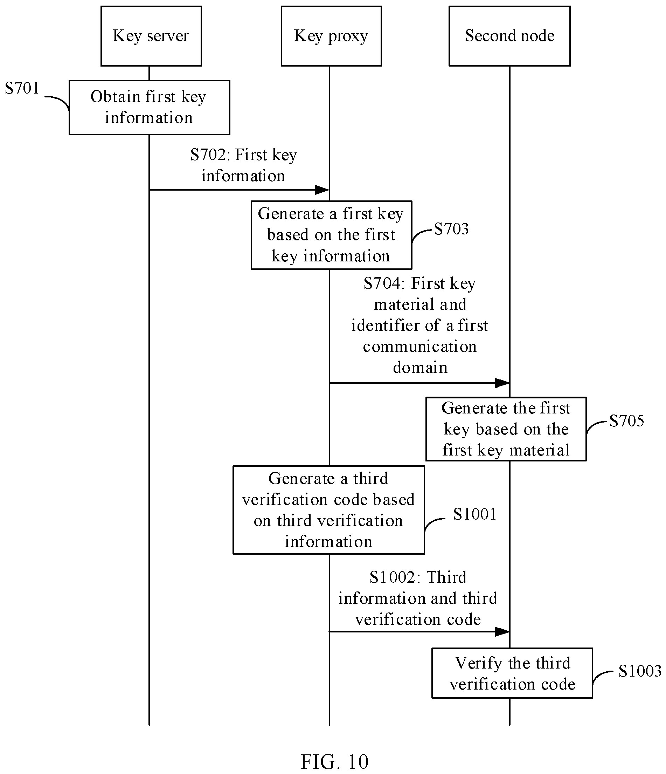

Optionally, in a possible implementation of the method shown in FIG. 7, the second node may verify availability of the first key between the key proxy and the second node, to avoid that normal communication cannot be performed between the key proxy and the second node due to a failure or an error in generating the first key. Specifically, as shown in FIG. 10, the method shown in FIG. 7 further includes S1001 to S1003.

S1001: The key proxy generates a third verification code based on third verification information.

The third verification information may include at least one of the following information: the first key, the first key material, third information, or the identifier of the key proxy. The third information includes at least one of the following information: the identifier of the first communication domain, the identifier of the first key, or a second random number. The third verification code may be used to verify whether the third verification information is modified. The third verification code may be a MAC. The key proxy may calculate the third verification information by using one or more algorithms, to obtain the third verification code. The second random number is any random number generated by the key proxy, and the second random number is the same as or different from the first random number; or the second random number is the first random number.

Further, if the third verification information includes the first key, the key proxy may use the first key or may not use the first key in the process of calculating the third verification code. If the third verification information does not include the first key, the key proxy uses the first key in the process of calculating the first verification code.

S 1002: The key proxy sends the third information and the third verification code to the second node.

In a possible implementation, the key proxy sends the third information and the third verification code to the second node through the second secure channel.

In a possible implementation, after S 1002, the key proxy feeds back a progress of key verification to the key server periodically or aperiodically. For example, the key proxy sends fourth progress notification information to the key server, where the fourth progress notification information may be used to indicate the progress of key verification performed between the second node and the key proxy. The fourth progress notification information may include the identifier of the first communication domain and indication information of the progress of verifying the first key. The fourth progress notification information may further include the type of the first key.

Correspondingly, the second node receives the third information and the third verification code from the key proxy. Further, the second node receives the third information and the third verification code from the key proxy through the second secure channel.

S 1003: The second node verifies the third verification code.

In a possible implementation, that the second node verifies the third verification code includes: The second node generates the third verification code based on the third verification information, where if the third verification code generated by the second node is the same as the received third verification code, the verification succeeds; or if the third verification code generated by the second node is different from the received third verification code, the verification fails.

It may be understood that the second node calculates the third verification information by using a same algorithm as that used when the key proxy generates the third verification code, to obtain the third verification code.

In a possible implementation, after S1003, the second node sends eighth notification information to the key proxy. The eighth notification information is used to indicate whether the second node successfully verifies the third verification code.

It may be understood that, the second node may send the eighth notification information to the key proxy through the second secure channel. If the second secure channel is a point-to-multipoint secure channel, another second node in the second communication domain may also receive the eighth notification information. The another second node may determine, based on the eighth notification information, whether the second node successfully verifies the third verification code, or may ignore the eighth notification information.

In a possible implementation, after receiving the eighth notification information from the one or more second nodes, the key proxy sends first notification information to the key server. The first notification information may be used to notify a verification result of the node in the first communication domain, for example, a verification result of the one or more second nodes. If a node in the one or more second nodes unsuccessfully performs verification, or the key server does not receive the first notification information within second preset duration, the key server may resend, to the key proxy, information used to configure the key.

In a possible implementation, after receiving the first notification information, the key server sends response information to the key proxy. The response information is used to indicate that the first notification information is received. If the response information is not received within third preset duration, the key proxy may resend the response information. The first preset duration, the second preset duration, and the third preset duration may be the same or different.

It may be understood that S1001 to S1003 may be performed before S801, after S803, before S901, or after S903. This is not limited in this embodiment of this application.

Further, if S1001 to S1003 are performed before S901 or after S903, S1001 and S901 may be combined. In other words, the key proxy may generate a verification code once. The verification code may be used to verify availability of the first key between the second node and the key proxy, and may also verify availability of the first key between the key server and the key proxy.

Based on the method shown in FIG. 10, the second node may verify availability of the first key between the second node and the key proxy by using the third verification code, to avoid that normal communication cannot be performed between the second node and the key proxy due to a failure or an error in generating the first key.

Actions of the key proxy or the key client in S1001 to S1003 may be performed by the processor 301 in the key obtaining apparatus 30 shown in FIG. 3 by invoking the application program code stored in the memory 303. This is not limited in this embodiment of this application.

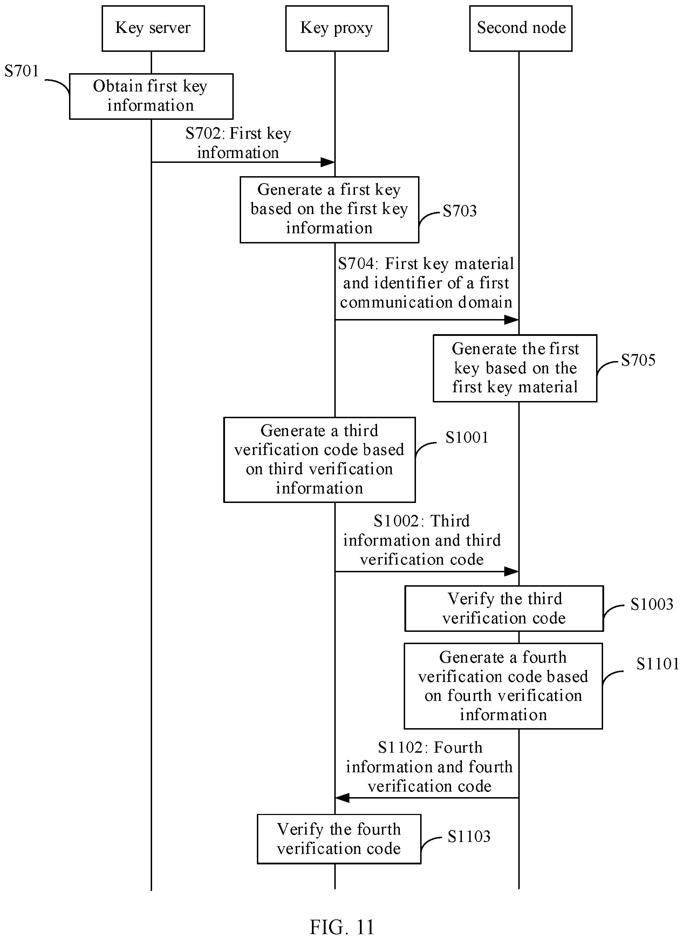

Optionally, in a possible implementation of the method shown in FIG. 10, if the key proxy is included in the first communication domain, the key proxy may verify availability of the first key between the second node and the key proxy, to avoid that normal communication cannot be performed between the second node and the key proxy due to a failure or an error in generating the first key. Specifically, as shown in FIG. 11, the method shown in FIG. 10 further includes S1101 to S1103.

S1101: The second node generates a fourth verification code based on fourth verification information.

The fourth verification information may include at least one of the following information: the first key, the first key material, fourth information, the identifier of the second node, or the second random number. The fourth information includes the identifier of the first communication domain and/or the identifier of the first key. The fourth verification code may be used to verify whether the fourth verification information is modified. The fourth verification code may be a MAC. The second node may calculate the fourth verification information by using one or more algorithms, to obtain the fourth verification code.

Further, if the fourth verification information includes the first key, the second node may or may not use the first key in the process of calculating the fourth verification code. If the fourth verification information does not include the first key, the second node uses the first key in the process of calculating the fourth verification code.

It may be understood that the random number included in the fourth verification information may alternatively be a random number generated by the second node. In this case, the fourth verification information includes the first key, the first key material, the fourth information, and/or the identifier of the second node. The fourth information includes at least one of the following information: the identifier of the first communication domain, the identifier of the first key, or a fourth random number. The fourth random number is any random number generated by the second node. The fourth random number is the same as or different from the second random number.

S1102: The second node sends the fourth information and the fourth verification code to the key proxy.

In a possible implementation, the second node sends the fourth information and the fourth verification code to the key proxy through the second secure channel.

Correspondingly, the key proxy receives the fourth information and the fourth verification code from the second node. Further, the key proxy receives the fourth information and the fourth verification code from the second node through the second secure channel.

S1103: The key proxy verifies the fourth verification code.

In a possible implementation, that the key proxy verifies the fourth verification code includes: The key proxy generates the fourth verification code based on the fourth verification information, where if the fourth verification code generated by the key proxy is the same as the received fourth verification code, the verification succeeds; or if the fourth verification code generated by the key proxy is different from the received fourth verification code, the verification fails.

In a possible implementation, after S1103, the key proxy sends the first notification information to the key server. The first notification information may be used to notify a verification result of the node in the first communication domain, for example, a verification result of the key proxy. It may be understood that if the node in the first communication domain unsuccessfully performs verification, or the key server does not receive the first notification information within second preset duration, the key server may resend, to the key proxy, the information used to configure the key.

In a possible implementation, after receiving the first notification information, the key server sends response information to the key proxy. The response information is used to indicate that the first notification information is received. If the response information is not received within third preset duration, the key proxy may resend the response information.

It may be understood that an execution sequence of S1001 to S1003 and S1101 to S1103 is not limited in this embodiment of this application. For example, S1001 to S1003 may be performed before S1101 to S1103, or S1101 to S1103 may be performed before S1001 to S1003.

It may be understood that, in this embodiment of this application, one of the key proxy and the second node may verify feasibility of the first key. In other words, this embodiment of this application may not include S1001 to S1003 or S1101 to S1103.

It may be understood that S1101 to S1103 may be performed before S801, after S803, before S901, or after S903. This is not limited in this embodiment of this application.

Based on the method shown in FIG. 11, the key proxy may verify availability of the first key between the second node and the key proxy by using the fourth verification code, to avoid that normal communication cannot be performed between the second node and the key proxy due to a failure or an error in generating the first key.

Actions of the key proxy or the key client in S 1101 to S 1103 may be performed by the processor 301 in the key obtaining apparatus 30 shown in FIG. 3 by invoking the application program code stored in the memory 303. This is not limited in this embodiment of this application.

In a possible implementation, in a process of performing the key obtaining method provided in this embodiment of this application, for example, after S402, S403, or S704, the key manager tool, the first terminal, the second terminal, or the cloud key manager center may send first request stop information to the key server. The first request stop information may be used to request to stop configuring the key for the node in the first communication domain, and the first request stop information may include an identifier of the intelligent vehicle and the identifier of the first communication domain. The first request stop information may further include a type of a key whose configuration is to be stopped. After receiving the first request stop information, the key server may send response information of the first request stop information to the key manager tool, the first terminal, the second terminal, or the cloud key manager center, where the response information of the first request stop information may be used to indicate that the key server receives the first request stop information. Alternatively, after receiving the first request stop information, the key server sends second request stop information to each node in the first communication domain. The second request stop information is used to indicate to stop configuring the key for the node in the first communication domain. After receiving the second request stop information, each node may send response information of the second request stop information to the key server. The response information of the second request stop information may be used to indicate that configuration of the key has been stopped. After receiving the response information of the second request stop information of each node, the key server sends the response information of the first request stop information to the key manager tool, the first terminal, the second terminal, or the cloud key manager center. The response information of the first request stop information may be used to indicate that each node in the first communication domain has stopped configuring the key. The response information of the first request stop information may include the identifier of the intelligent vehicle and the identifier of the first communication domain. Further, the response information of the first request stop information may further include the type of the key whose configuration is to be stopped and/or indication information indicating that configuration of the key has been stopped.

In a possible implementation, after finishing the key obtaining method provided in this embodiment of this application, the key server may send fourth finish information to the key manager tool, the first terminal, the second terminal, or the cloud key manager center. The fourth finish information may be used to indicate that the node in the first communication domain finishes configuration of the key. The fourth finish information may include the identifier of the intelligent vehicle and the identifier of the first communication domain. The fourth finish information may further include the type of the first key. After receiving the fourth finish information, the key manager tool, the first terminal, the second terminal, or the cloud key manager center may send response information of the fourth finish information to the key server. The response information of the fourth finish information is used to indicate that the fourth finish information is received. The response information of the fourth finish information may include the identifier of the intelligent vehicle and/or the indication information indicating that the node in the first communication domain finishes configuration of the key.

In a possible implementation, in a process in which the key server and the first node perform key verification, for example, after S502, S602, S803, or S901, the key server may send the third request stop information to the first node. The third request stop information may be used to request to stop key verification, and the third request stop information may include the identifier of the first communication domain and an identifier of the key whose verification is to be stopped. The third request stop information may further include the type of the key whose verification is to be stopped. After receiving the third request stop information, the first node may send response information of the third request stop information to the key server, where the response information of the third request stop information may be used to indicate that the third request stop information is received. Alternatively, after receiving the third request stop information, the first node sends fourth request stop information to the second node. The fourth request stop information is used to indicate to stop key verification. After receiving the fourth request stop information, the second node may send response information of the fourth request stop information to the first node. The response information of the fourth request stop information may be used to indicate that key verification has been stopped. After receiving the response information of the fourth request stop information of the second node, the first node sends the response information of the third request stop information to the key server. The response information of the third request stop information may be used to indicate that each node in the first communication domain has stopped verifying the key. The response information of the third request stop information may include the identifier of the first communication domain and the identifier of the key whose verification is to be stopped. Further, the response information of the third request stop information may further include the type of the key whose verification is to be stopped and/or the indication information indicating that key verification has been stopped.

The following specifically describes the key obtaining method provided in this embodiment of this application by using an example in which the first communication domain includes the key server, the key proxy, and the key client, the key server is deployed on the gateway 202 in FIG. 2A, the key proxy is deployed on the MDC 205 in FIG. 2A, and the key client is deployed on the ECU 211 in FIG. 2A.

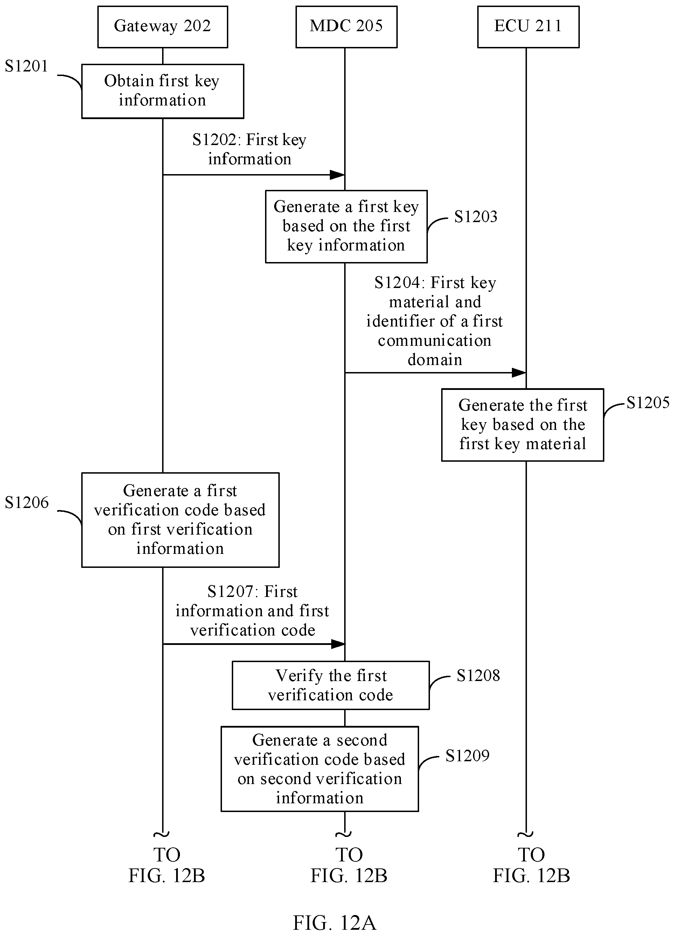

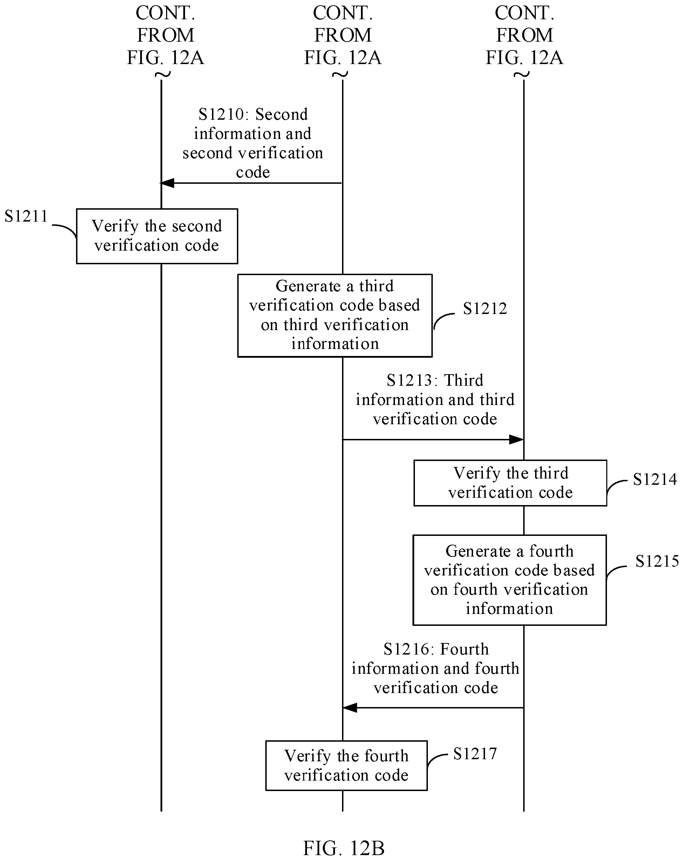

FIG. 12A and FIG. 12B show another key obtaining method according to an embodiment of this application. The method may be applied to the intelligent vehicle 20 in FIG. 2A. The key obtaining method includes S1201 to S1217.

S1201: The gateway 202 obtains first key information.

S1202: The gateway 202 sends the first key information to the MDC 205.

S1203: The MDC 205 generates the first key based on the first key information.

S1204: The MDC 205 sends a first key material and an identifier of a first communication domain to the ECU 211.

S1205: The ECU 211 generates the first key based on the first key material.

For a specific process of S1201 to S1205, refer to corresponding descriptions in S701 to S705. Details are not described herein.

S1206: The gateway 202 generates a first verification code based on first verification information.

S1207: The gateway 202 sends first information and the first verification code to the MDC 205.

S1208: The MDC 205 verifies the first verification code.

For a specific process of S1206 to S1208, refer to corresponding descriptions in S801 to S803. Details are not described herein again.

S1209: The MDC 205 generates a second verification code based on second verification information.

S1210: The MDC 205 sends second information and the second verification code to the gateway 202.

S1211: The gateway 202 verifies the second verification code.

For a specific process of S1209 to S1211, refer to corresponding descriptions in S901 to S903. Details are not described herein again.

S1212: The MDC 205 generates a third verification code based on third verification information.

S1213: The MDC 205 sends third information and the third verification code to the ECU 211.

S1214: The ECU 211 verifies the third verification code.

For a specific process of S1212 to S1214, refer to corresponding descriptions in S1001 to S1003. Details are not described herein again.

S1215: The ECU 211 generates a fourth verification code based on fourth verification information.

S1216: The ECU 211 sends fourth information and the fourth verification code to the MDC 205.

S1217: The MDC 205 verifies the fourth verification code.

For a specific process of S1215 to S1217, refer to corresponding descriptions in S1101 to S1103. Details are not described herein again.

Based on the method shown in FIG. 12A and FIG. 12B, the gateway 202 may configure the first key for the gateway 202, the MDC 205, and the ECU 211 in the first communication domain. Subsequently, the gateway 202, the MDC 205, and the ECU 211 may communicate with each other through the first key. In an aspect, the first key is stored by the gateway 202, the MDC 205, and the ECU 211, and is not easily leaked. Even if the first key is leaked, security of another communication domain is not affected. Therefore, communication security can be improved. In another aspect, the gateway 202 can update a key of each device at any time, which is quite convenient. In addition, the first key occupies small storage space, and does not increase software and hardware costs of a node in a key management system. The first key does not need to be managed by a vehicle manufacturer, and management costs of the vehicle manufacturer are not increased. In addition, the gateway 202, the MDC 205, and the ECU 211 may verify availability of the first key with each other, to avoid that normal communication cannot be performed between the gateway 202, the MDC 205, and the ECU 211 due to a failure or error in generating the first key.

In a possible implementation, in this embodiment of this application, the key server may further flag a current status of the key management system, so that a user knows the current status of the key management system. To avoid various exceptions, for example, loss of flagged status information caused by power-off and restart of an intelligent vehicle, the status information may be stored in a non-volatile storage area of the key server. Further, the status information may include build status information, build type (build type) information, and build stage (build stage) information. The build status information may be used to indicate a non-build state, a building state, or a build finished state. The build type information may be used to indicate initial build of the key management system, a key update stage of the communication domain, or a replacement stage of a device in the intelligent vehicle. The build stage information may be used to indicate a fixed key installing stage, a long-term key build stage of the communication domain, or a temporary key build stage of the communication domain.

For example, in a case in which the intelligent vehicle is used for the first time and S1 is to be performed, the build status information may indicate the non-build state, the build type information may indicate the initial build of the key management system, and the build stage information may indicate the fixed key installing stage. In a case in which the key of the first communication domain is updated and S402 or S703 is performed, the build status information may indicate the building state, the build type information may indicate the key update stage of the communication domain, and the build stage information may indicate the long-term key build stage of the communication domain or the temporary key build stage of the communication domain. In a process of replacing the device in the intelligent vehicle, when all devices, in the communication domain, for which a key needs to be configured perform S603 or S1103, the build status information may indicate the build finished state, the build type information may indicate the replacement stage of the device in the intelligent vehicle, and the build stage information may indicate the long-term key build stage of the communication domain or the temporary key build stage of the communication domain.

It may be understood that, in the building state, some status information may be further added, for example, a specific communication domain that is currently being built, or a specific node, of a specific communication domain, that is currently being built.

In the embodiments shown in FIG. 4 to FIG. 11, functions, message types (message types), operation types (operation types), and categories of information (for example, the first request information and the first key information) transmitted between the key server, the key client, the key manager tool, and the cloud key manager center are different. The information may be classified into request information, response information, and notification information based on different functions. The request information may be used to obtain some information. One piece of response information may correspond to one piece of request information, and is used to return requested information. The notification information may be used to notify a current status, a processing result of an operation, a progress of an operation, or the like. The message type, a value (value) of each message type, and a meaning of each message type in this embodiment of this application may be shown in Table 17.

**Table 17**

| Message type | Value of the message type | Meaning of the message type |
|---|---|---|
| AcquireInfo | 1 | is used to obtain a fixed key from an external node of the key management system, like a cloud key manager center or a key manager tool, and is applied to scenarios such as fixed key installing, fixed key update, and communication between the key server and the external node of the key management system. |
| InstallKeys | 2 | is used to install the fixed key for the device in the intelligent vehicle. |
| BuildLongTermKeys | 3 | is used to build a long-term key. With reference to the rows 2 to 5 in Table 11, the external node of the key management system may indicate the key server to start or stop building the long-term key. |
| UpdateLongTermKeys | 4 | is used to update the long-term key. With reference to the rows 2 to 5 in Table 11, the external node of the key management system may indicate the key server to start or stop updating the long-term key. |
| UpdateFixKeys | 5 | is used to update the fixed key. With reference to the rows 2 to 5 in Table 11, the external node of the key management system may indicate the key server to start or stop updating the fixed key. |
| DistributeKeys | 6 | is used to build the long-term key. With reference to the rows 2 to 5 in Table 11, the key server distributes or stops distributing a key material (or a key) to the node in the key management system. With reference to the key type, whether to distribute the fixed key or the long-term key is determined. |
| DistributeNewKeys | 7 | is used to update the long-term key or the fixed key. With reference to the rows 2 to 5 in Table 11, the key server distributes or stops distributing a new key material (or a new key) to the node in the key management system. With reference to the key type, whether to distribute the fixed key or the long-term key is determined. |
| DeleteOldKeys | 8 | is used to update the long-term key or the fixed key. With reference to the rows 2 to 5 in Table 11, the key server indicates the node in the key management system to delete the key before update. |
| ValidateKeys | 9 | is used for an operation of verifying availability of a generated key after the key is generated. With reference to the rows 2 to 5 in Table 11, the key server and the node in the key management system start or stop self-verification on key consistency and availability. |
| NeedConfirmUpdateKeys | 10 | is used by the key server to notify the external node of the key management system that the key of a specific communication domain needs to be updated. The update can be started only after being confirmed by a user. |

The operation type, a value of each operation type, and a meaning of each operation type in this embodiment of this application may be shown in Table 18.

**Table 18**

| Operation type | Value of the operation type | Meaning of the operation type |
|---|---|---|
| GetKeys | 1 | is used to obtain a fixed key from an external node of the key management system. |
| GetNewKeys | 2 | is used to obtain a new fixed key from the external node of the key management system, and is used in replacement of the device in the intelligent vehicle or a fixed key update scenario. |
| GetVehicleInfo | 3 | is used to obtain related information of the intelligent vehicle and version information of the key management system from the key server. |
| StartBuildKeys | 4 | is used by the external node of the key management system to notify an internal node of the key management system, for example, a key server, a key proxy, or a key client, of starting key build, including operations such as long-term key build, long-term key update, fixed key update, self-verification on key consistency and availability, and old key deletion. |
| StopBuildKeys | 5 | is used by the external node of the key management system to indicate the internal node of the key management system to stop, interrupt, or suspend the key build. |
| BuildKeysFinished | 6 | is used by the key server to notify the external node of the key management system, or used by the key proxy to notify the key server that the key build is finished. |
| BuildKeysProcess | 7 | is used by the key server to notify the external node of the key management system, or used by the key proxy to notify the key server of a key build progress. |

In this embodiment of this application, the information type includes first-type information and second-type information. The first-type information is information about communication between the internal node of the key management system and the external node of the key management system, and may be represented by 1. The second-type information is information about communication between internal nodes of the key management system, and may be represented by 2. The internal node of the key management system may include the key server, the key proxy, or the key client. The external node of the key management system may include the key manager tool, the cloud key manager center, a first terminal, or the like.

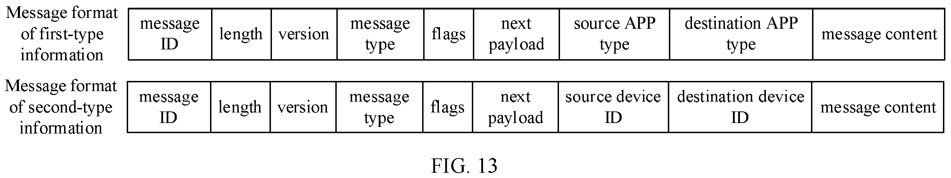

Further, the first-type information may include a plurality of fields, for example, a message identifier (message ID) field, a message length (length) field, a version (version) field of the key management system, a message type field, a message flag (flag) field, a next payload (next payload) field, a source application type (source APP type) field, a destination application type (destination APP type) field, and a message content (message content) field. The second-type information may include a plurality of fields, for example, a message identifier field, a message length field, a version field of the key management system, a message type field, a message flag (flag) field, a next payload (next payload) field, a source device identifier (source device ID) field, a destination device identifier (destination device ID) field, and a message content (message content) field. For example, a message format of the first-type information and a message format of the second-type information may be shown in FIG. 13. In this embodiment of this application, a quantity of bits included in each of the foregoing fields is not limited.

The message identifier field may indicate a message identifier. The message identifier may be a message sequence number of a service message of the key management system, and may assist in identifying request information corresponding to one piece of response information, or may identify the request information and retransmit the request information after the request information times out. The message length field may indicate a message length of the first-type information or the second-type information. The version field of the key management system may indicate a version number of the key management system. The message type field may indicate a message type. The message flag field may indicate a function of the information, for example, indicate whether the information is request information or response information, or the message flag field may indicate an operation type. For example, the first bit in the message flag field is used to indicate whether the information is the request information or the response information, and another bit in the message flag field is used to indicate the operation type. The next payload field may also be referred to as a next TLV (type, length, value) type field, and may indicate a TLV type (TLV type) of the first payload in the message content field. The source application type field may indicate a type of a source application. The destination application type field may indicate a type of a destination application. The type of the source application and the type of the destination application may include the cloud key manager center (CloudKeyManagerCenter), the key manager tool (KeyManagerTool), the first terminal (UserAppTool), or the node (InCarKMS) in the key management system. The message content field may indicate content of the first-type information or the second-type information. The source device identifier field may indicate an identifier of a source device. The destination device identifier field may indicate an identifier of a destination device. It may be understood that an identifier of the device in the intelligent vehicle is unique in the intelligent vehicle. In different intelligent vehicles, identifiers of a same device may be the same or may be different. For example, an identifier of a CDC in an intelligent vehicle 1 may be the same as or different from an identifier of a CDC in an intelligent vehicle 2.

Further, the destination device identifier field may further indicate a communication manner of the second-type information. The communication manner of the second-type information includes point-to-point communication or point-to-multipoint communication. The point-to-point communication may also be referred to as unicast communication, and the point-to-multipoint communication may also be referred to as broadcast communication. For example, if the destination device identifier field is all 0s or all Fs, it indicates that the communication manner of the second-type information includes the point-to-multipoint communication.

Further, if a sender sends one piece of request information to a receiver in a point-to-multipoint manner, after receiving the request information, the receiver may send one piece of response information to the sender in a point-to-multipoint manner. After receiving the response information, a receiver other than the receiver may ignore the response information. In the foregoing process, the destination device identifier field corresponding to the request information is all Os or all Fs, and the source device identifier field corresponding to the request information is an identifier of the sender. The destination device identifier field corresponding to the response information is an identifier of the sender, and the source device identifier field corresponding to the response information is an identifier of the receiver. Further, if the sender does not receive the response information within fourth preset duration, the sender may resend the request information to the receiver. In this case, the sender may still send the request information to the receiver in a point-to-multipoint manner, and the sender may also send the request information to the receiver in a point-to-point manner. In a case in which the sender sends the request information to the receiver in the point-to-multipoint manner, for the receiver that has sent the response information, the receiver may ignore the request information, or may resend the response information to the sender. In a case in which the sender sends the request information to the receiver in the point-to-point manner, for the receiver that has sent the response information, the sender may resend the request information to the receiver, or may not resend the request information to the receiver. If the sender resends the request information to the receiver, after receiving the request information, the receiver may ignore the request information, or may resend the response information to the sender. It may be understood that, if the sender does not receive the response information from the receiver after sending the request information to the receiver for a plurality of times in the point-to-point manner, it may be confirmed that the receiver is in an abnormal state.

It may be understood that, as TLV types are different, TLV formats vary. Therefore, after the next payload field indicates a TLV type of the first payload in the message content field, an information receiving node may parse the first payload in the message content field based on the TLV type indicated by the next payload field.

The TLV format may include a TLV header (TLV Header) and TLV data (TLV Data). The TLV format may be referred to as a TLV payload. The TLV header may include a TLV type field, a reserved (reserved) field, and a TLV length field. The TLV type field may indicate a TLV type of a next TLV, and the information receiving node may parse the next TLV based on the TLV type indicated by the TLV type field. The reserved field may be used for future extension of the TLV format. The TLV length field may indicate TLV lengths, namely, lengths of the TLV header and the TLV data. The TLV type, a value of each TLV type, and a meaning of each TLV type may be shown in Table 19. It may be understood that different TLV types correspond to different TLV data.

**Table 19**

| TLV type | Value of the TLV type | Meaning of the TLV type |
|---|---|---|
| Vehicle No | 1 | Vehicle number |
| Security Domain Info | 2 | Information about a communication domain, including a domain ID, a key type, and the like |
| Key Security Domain | 3 | Information about a communication domain corresponding to a key, including an identifier of the key, an identifier of the communication domain, a key type, and the like |
| Key Material | 4 | Payload of the key material |
| Key Confirmed | 5 | Key confirmation |
| Key Validate | 6 | Key consistency and availability verification |
| Key Remain Time | 7 | Key type, identifier of the key, and a remaining timeout time, and the like |
| Progress | 8 | Key build progress |
| Nonce | 9 | One-time random number |
| Result | 10 | Information such as a key build result, status, or progress |

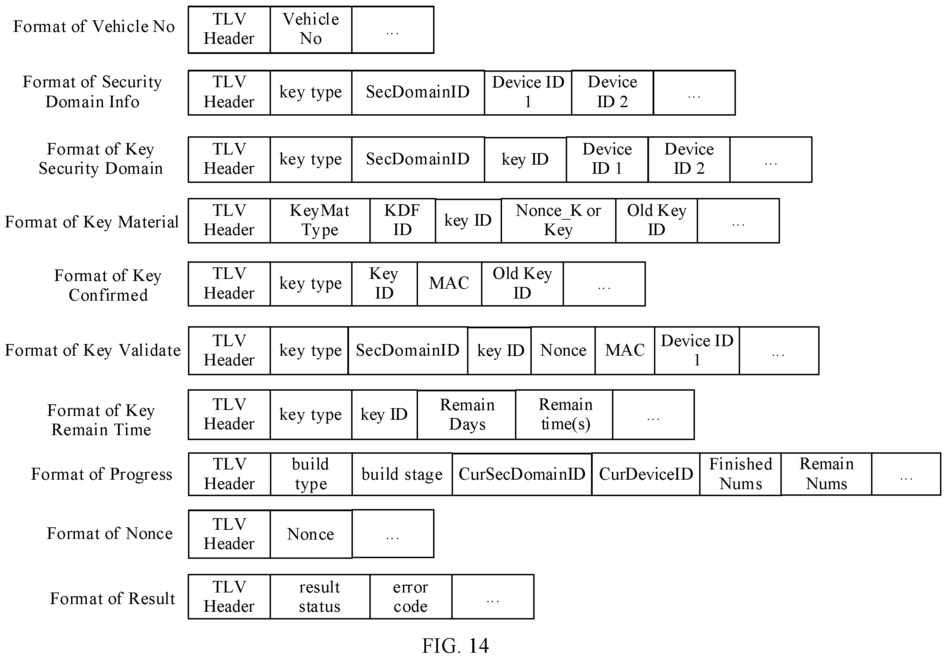

For example, the TLV format may be shown in FIG. 14. In FIG. 14, a format (VehicleNoPyld) of Vehicle No includes a TLV header field and a Vehicle No field. The Vehicle No field is used to indicate the vehicle number. The vehicle number may also be referred to as the vehicle identifier, an identifier of an intelligent vehicle, and the like. For different vehicle manufacturers, vehicle numbering rules may be different, and quantities of bits required for the vehicle numbers may also be different. Therefore, a separate TLV is defined by the vehicle number, and a specific number is determined by each vehicle manufacturer.

In FIG. 14, a format (SecDomainPyld) of Security Domain Info includes a TLV header, a key type (key type) field, and a communication domain identifier (SecDomainID) field. The key type field, a value of each key type, and a meaning of each key type may be shown in Table 20. The communication domain identifier field is used to indicate the identifier of the communication domain. Definition manners or values of identifiers of communication domains of different intelligent vehicles may be the same or may be different. Different communication domains in a same intelligent vehicle have different identifiers. The definition manner or the value of the identifier of the communication domain may be defined by the vehicle manufacturer. Further, the format of Security Domain Info may further include a device identifier (Device ID) field. The device identifier field is used to indicate a device identifier. For same devices in different intelligent vehicles, device identifiers may be the same or may be different. In a same intelligent vehicle, different devices have different device identifiers.

**Table 20**

| Key type | Value of the key type | Meaning of the key type |
|---|---|---|
| Reserved | 0 | indicates being reserved, and indicates that information does not need the key type |
| GlobalFixKey | 1 | indicates that a use scope is a fixed key of an entire vehicle |
| GlobalLongTermKey | 2 | indicates that the use scope is a long-term key of the entire vehicle |
| SecDomainFixKey | 3 | Fixed key corresponding to the communication domain |
| SecDomainLongTermKey | 4 | Long-term key corresponding to the communication domain |

In FIG. 14, a format (KeySecDomPyld) of Key Security Domain includes a TLV header, a key type field, a communication domain identifier field, and a key identifier (key ID) field. Further, the format of Key Security Domain may further include a device identifier field.

In FIG. 14, a format (KeyMatPyld) of Key Material includes a TLV header, a key material type (key material type, KeyMat Type) field, a KDF identifier (KDF ID) field, a key identifier field, and a random number or key (Nonce_K or Key) field. A key material type, a value of each key material type, and a meaning of each key material type may be shown in Table 21. The random number or key field is used to indicate a random number (for example, a first key material or a second key material) used for generating a key or a key (for example, a first key or a second key). Further, the format of Key Material may further include an identifier (Old Key ID) field of a key before update. The identifier field of the key before update is used to indicate an identifier of the key before update.

**Table 21**

| Key material type | Value of the key material type | Meaning of the key material type |
|---|---|---|
| Key Material | 1 | indicates that the key material is transferred in KeyMaterial Payload |
| Key Directly | 2 | indicates that the key is transferred in KeyMaterial Payload. In this case, a derivation algorithm identifier of a key derivation function (key derivation function, KDF) may be ignored |

In FIG. 14, a KDF identifier (KDF ID) field is used to indicate a KDF identifier. The KDF identifier, a value of the KDF identifier, and a meaning of the KDF identifier may be shown in Table 22.

**Table 22**

| KDF identifier | Value of the KDF identifier | Meaning of the KDF identifier |
|---|---|---|
| AES_CMAC_128 & KDF | 1 | indicates that an AES_CMAC_128 algorithm is used, and derivation is performed with reference to a derivation algorithm defined in the section 6.2.1 in 802.1X-2010 |
| AES_CMAC_256 & KDF | 2 | indicates that an AES_CMAC_256 algorithm is used, and derivation is performed with reference to a derivation algorithm defined in the section 6.2.1 in 802.1X-2010 |
| HMAC_SHA256 & Prf+ | 3 | indicates that an HMAC_SHA256 algorithm is used. Refer to the Prf+ algorithm defined in the section 2.13 in the IKEv2 (RFC7296), where the Prf algorithm uses the HMAC_SHA256, and the Prf+ algorithm is the HKDF algorithm defined in the RFC5869 (refer to descriptions of "introduction" in the section 1 in the RFC5869) |
| HMAC_SHA384 & Prf+ | 4 | indicates that an HMAC_SHA384 algorithm is used. Refer to the Prf+ algorithm defined in the section 2.13 in the IKEv2 (RFC7296), where the Prf algorithm uses the HMAC_SHA384, and the Prf+ algorithm is the HKDF algorithm defined in the RFC5869 (refer to descriptions of "introduction" in the section 1 in the RFC5869) |
| HMAC_SHA512 & Prf+ | 5 | indicates that an HMAC_SHA512 algorithm is used. Refer to the Prf+ algorithm defined in the section 2.13 in the IKEv2 (RFC7296), where the Prf algorithm uses the HMAC_SHA512, and the Prf+ algorithm is the HKDF algorithm defined in the RFC5869 (refer to descriptions of "introduction" in the section 1 in the RFC5869) |

In FIG. 14, a format (KeyConPyld) of Key Confirmed includes a TLV header, a key type field, a key identifier field, and a MAC field. The MAC field is used to indicate a MAC obtained through calculation. Further, the format of Key Confirmed may further include the identifier field of the key before update.

In FIG. 14, a format (KeyValidPyld) of Key Validate includes a TLV header, a key type field, a communication domain identifier field, a key identifier field, a random number field, and a MAC field. The random number field is used to indicate a random number (for example, a first random number or a second random number) used for key verification. The MAC field is used to indicate a MAC obtained through calculation. A method for calculating the MAC in the format of "Key Validate " may be the same as or may be different from a method for calculating the MAC in the format "Key Confirmed". Further, the format Key Validate may further include a device identifier field.

In FIG. 14, a format (KeyRemTmPyld) of Key Remain Time includes a TLV header, a key type field, a key identifier, a Remain Days (Remain Days) field, and a Remain times (Remain time(s)) field. The Remain Days field is used to indicate remaining valid days of the key. For example, if the Remain Days field indicates 30 days, it indicates that the key is invalid after 30 days. The Remain times field is used to indicate remaining valid duration of the key when the remaining valid days of the key is less than one day. For example, if the Remain times field indicates 5 hours and 30 minutes, it indicates that the key is invalid after 5 hours and 30 minutes.

In FIG. 14, a format (ProgPyld) of Progress includes a TLV header, a build type (build type) field, a build stage (build stage) field, a currently-built communication domain identifier (CurSecDomainID) field, a current device identifier (CurDeviceID) field, a finished quantity (Finished Nums) field, and a Remain Nums (Remain Nums) field. The build type field is used to indicate a build type, for example, initial build of the key management system, a key update stage of the communication domain, or a replacement stage of a device in the intelligent vehicle. The build stage field is used to indicate a build stage, for example, a fixed key installing stage, a long-term key build stage of the communication domain, or a temporary key build stage of the communication domain. The currently-built communication domain identifier is used to indicate an identifier of a communication domain in which a key is being built. The current device identifier field is used to indicate an identifier of a device that is building a key. The finished quantity field is used to indicate a quantity of communication domains or devices that have finished key build. The Remain Nums field is used to indicate a quantity of communication domains or devices that have not finished key build.

In FIG. 14, a format (NoncePyld) of Nonce includes a TLV header and a random number field. The random number field is used to indicate a random number. The random number may be used to generate a key, or may be used for key verification.

In FIG. 14, a format (ResultPyld) of Result includes a TLV header and a result status (result status) field. The result status field is used to indicate a key build result, for example, a build success or a build failure. Further, the format of "Result" may further include an error code (error code) field. The error code field may indicate an error code corresponding to a cause of the build failure in a case of a failure to build the key.

It may be understood that in this embodiment of this application, a quantity of fields included in the foregoing TLV formats is not limited, and a quantity of bits included in each field is not limited as well. For example, the TLV format may include more or fewer fields than those included in any format shown in FIG. 14. Quantities of bits in a same field included in different TLV formats may be the same or may be different. For example, a quantity of bits included in the key type field in the format of Key Security Domain may be the same as or different from a quantity of bits included in the key type field in the format of "Key Remain Time".

Refer to Table 23. Table 23 shows a correspondence between information transmitted between the key server, the key client, the key manager tool, and the cloud key manager center, a function of the information, a message type of the information, an operation type of the information, a type of the information, an application scenario of the information, and a TLV format of the information according to this embodiment of this application. NA in the operation type indicates that the information does not involve the operation type, or indicates that the information does not have a corresponding operation type. In this case, if the function of the information is a response, the information may be identified as response information by using a message flag field in the information. NULL indicates that the TLV format is not used.

**Table 23**

| Information name | Message type | Operation type | Category | Function | Application scenario | TLV format |
|---|---|---|---|---|---|---|
| Second request information | AcquireInfo | GetKeys | 1 | Request (used to request the second key material) | Fixed key installing | At least one of VehicleNoPyld or SecDomainPyld |
| Response information of the second request information | AcquireInfo | NA | 1 | Response | Fixed key installing | At least one of VehicleNoPyld, SecDomainPyld, or KeyMatPyld |
| First request information | InstallKeysBy Tool | NA | 1 | Request (used to request to configure one or more fixed keys for a third node) | Fixed key installing | At least one of VehicleNoPyld, SecDomainPyld, KeyMatPyld, or NoncePyld |
| Response information of the first request information | InstallKeysBy Tool | NA | 1 | Response | Fixed key installing | At least one of VehicleNoPyld, SecDomainPyld, KeyConPyld, or ResultPyld |
| First acknowledg ment information | BuildLongTer mKeys | StartBuildK eys | 1 or 2 | Request (used to trigger the key server to obtain the first key informati on) | Long-term key build | At least one of VehicleNoPyld or SecDomainPyld |
| Response information of the first acknowledg ment information | BuildLongTer mKeys | NA | 1 or 2 | Response | Long-term key build | At least one of VehicleNoPyld, SecDomainPyld, or ResultPyld |
| First request stop information | BuildLongTer mKeys | StopBuildK eys | 1 or 2 | Request (request to stop configuri ng a key for a node in the first communi cation domain) | Long-term key build | At least one of VehicleNoPyld or SecDomainPyld |
| Response information of the first request stop information | BuildLongTer mKeys | NA | 1 or 2 | Response | Long-term key build | At least one of VehicleNoPyld, SecDomainPyld, or ResultPyld |
| Fourth finish information | BuildLongTer mKeys | BuildKeysF inished | 1 | Request (used to indicate that the node in the first communi cation domain finishes configure tion of the key) | Long-term key build | At least one of VehicleNoPyld, SecDomainPyld, or ResultPyld |
| Response information of the fourth finish information | BuildLongTermKeys | NA | 1 | Response | Long-term key build | At least one of VehicleNoPyld |
| First progress notification information | BuildLongTer mKeys | BuildKeysP rocess | 1 | Notificati on (used to indicate a progress of obtaining the key) | Long-term key build | At least one of VehicleNoPyld, SecDomainPyld, or ProgPyld |
| First key information | Di stributeKey s | StartBuildK eys | 2 | Request (used to configure the key for the node in the first communi cation domain) | Long-term key build | At least one of SecDomainPyld or KeyMatPyld |
| Information that carries the first key material and/or the identifier of the first communicat ion domain in S704 | Di stributeKey s | StartBuildK eys | 2 | Request (used to configure a key for a second node) | Long-term key build | At least one of SecDomainPyld or KeyMatPyld |
| Response information of the first key information or information that carries the second information and/or the second verification code in S602 | Di stributeKey s | NA | 2 | Response | Long-term key build | At least one of SecDomainPyld, KeyConPyld, or ResultPyld |
| First response information | Di stributeKey s | NA | 2 | Response | Long-term key build | At least one of SecDomainPyld, KeyConPyld, or ResultPyld |
| Second request stop information | Di stributeKey s | StopBuildK eys | 2 | Request (indicate to stop configuri ng the key for the node in the first communi cation domain) | Long-term key build | At least one of SecDomainPyld |
| Response information of the second request stop information | Di stributeKey s | NA | 2 | Response | Long-term key build | At least one of SecDomainPyld or ResultPyld |
| Third finish information | Di stributeKey s | BuildKeysF inished | 2 | Request (used to indicate the key proxy to finish sending of the first key material and the identifier of the first communi cation domain) | Long-term key build | At least one of SecDomainPyld or ResultPyld |
| Response information of the third finish information | Di stributeKey s | NA | 2 | Response | Long-term key build | At least one of SecDomainPyld |
| Third progress notification information | Di stributeKey s | BuildKeysP rocess | 2 | Notificati on (used to indicate a progress of sending the first key material and the identifier of the first communi cation domain to the second node by the key proxy) | Long-term key build | At least one of SecDomainPyld or ProgPyld |
| First request trigger information | NeedConfirm UpdateKeys | NA | 1 or 2 | Request (used to indicate that the key of the first communi cation domain has expired or is about to expire) | Long-term key update | At least one of VehicleNoPyld or KeyRemTmPyld |
| Response information of the first request trigger information | NeedConfirm UpdateKeys | NA | 1 or 2 | Response | Long-term key update | At least one of VehicleNoPyld or a format that does not use a TLV |
| First acknowledg ment information | UpdateLongT ermKeys | StartBuildK eys | 1 or 2 | Request (used to trigger the key server to obtain the first key informati on) | Long-term key update | At least one of VehicleNoPyld or SecDomainPyld |
| Response information of the first acknowledg ment information | UpdateLongT ermKeys | NA | 1 or 2 | Response | Long-term key update | At least one of VehicleNoPyld, SecDomainPyld, or ResultPyld |
| First request stop information | UpdateLongT ermKeys | StopBuildK eys | 1 or 2 | Request (used to request to stop configuri ng the key for the node in the first communi cation domain) | Long-term key update | At least one of VehicleNoPyld or SecDomainPyld |
| Response information of the first request stop information | UpdateLongTermKeys | NA | 1 or 2 | Response | Long-term key update | At least one of VehicleNoPyld, SecDomainPyld, or ResultPyld |
| Fourth finish information | UpdateLongT ermKeys | BuildKeysF inished | 1 or 2 | Request (used to indicate that the node in the first communi cation domain finishes configure tion of the key) | Long-term key update | At least one of VehicleNoPyld, SecDomainPyld, or ResultPyld |
| Response information of the fourth finish information | UpdateLongT ermKeys | NA | 1 or 2 | Response | Long-term key update | VehicleNoPyld or format that does not use a TLV |
| First progress notification information | UpdateLongT ermKeys | BuildKeysP rocess | 1 or 2 | Notificati on (used to indicate the progress of obtaining the key) | Long-term key update | At least one of VehicleNoPyld, SecDomainPyld, or ProgPyld |
| First key information | DistNewKeys | StartBuildK eys | 2 | Request (used to configure the key for the node in the first communi cation domain) | Long-term/Fixed key update | At least one of SecDomainPyld or KeyMatPyld |
| Information that carries the first key material and/or the identifier of the first communicat ion domain in S704 | DistNewKeys | StartBuildK eys | 2 | Request (used to configure the key for the second node) | Long-term/Fixed key update | At least one of SecDomainPyld or KeyMatPyld |
| Response information of the first key information or information that carries the second information and/or the second verification code in S602 | DistNewKeys | NA | 2 | Response | Long-term/Fixed key update | At least one of SecDomainPyld, KeyConPyld, or ResultPyld |
| First response information | DistNewKeys | NA | 2 | Response | Long-term/Fixed key update | At least one of SecDomainPyld, KeyConPyld, or ResultPyld |
| Second request stop information | DistNewKeys | StopBuildK eys | 2 | Request (indicate to stop configuri ng the key for the node in the first communi cation domain) | Long-term/Fixed key update | At least one of KeySecDomPyl d |
| Response information of the second request stop information | DistNewKeys | NA | 2 | Response | Long-term/Fixed key update | At least one of SecDomainPyld or ResultPyld |
| Third finish information | DistNewKeys | BuildKeysF inished | 2 | Request (used to indicate the key proxy to finish sending of the first key material and the identifier of the first communi cation domain) | Long-term/Fixed key update | At least one of SecDomainPyld or ResultPyld |
| Response information of the third finish information | DistNewKeys | NA | 2 | Response | Long-term/Fixed key update | NULL |
| Third progress notification information | DistNewKeys | BuildKeysP rocess | 2 | Notificati on (used to indicate the progress of sending the first key material and the identifier of the first communi cation domain to the second node by the key proxy) | Long-term/Fixed key update | At least one of SecDomainPyld or ProgPyld |
| Request information for obtaining related information of the intelligent vehicle | AcquireInfo | GetVehicleI nfo | 1 | Request (used to obtain the related informati on of the intelligen t vehicle) | Fixed key update | At least one of SecDomainPyld or NoncePyld |
| Response information for obtaining the related information of the intelligent vehicle | AcquireInfo | NA | 1 | Response | Fixed key update | At least one of VehicleNoPyld, KeySecDomPyl d, NoncePyld, or KeyConPyld |
| Second request information | AcquireInfo | GetNewKey s | 1 | Request (used to request the second key material) | Fixed key update | At least one of VehicleNoPyld, KeySecDomPyl d, NoncePyld, or KeyConPyld |
| Response information of the second request information | AcquireInfo | NA | 1 | Response | Fixed key update | At least one of VehicleNoPyld, KeySecDomPyl d, NoncePyld, KeyMatPyld, or KeyConPyld |
| First acknowledg ment information | UpdateFixKeys | StartBuildKeys | 1 or 2 | Request (used to trigger the key server to obtain the first key informati on) | Fixed key update | At least one of VehicleNoPyld, KeySecDomPyl d, NoncePyld, KeyMatPyld, SecDomainPyld, or KeyConPyld |
| Response information of the first acknowledg ment information | UpdateFixKe ys | NA | 1 or 2 | Response | Fixed key update | VehicleNoPyld or SecDomainPyld At least one of KeyConPyld or ResultPyld |
| First request stop information | UpdateFixKe ys | StopBuildK eys | 1 or 2 | Request (used to request to stop configuri ng the key for the node in the first communi cation domain) | Fixed key update | At least one of VehicleNoPyld, SecDomainPyld, or KeySecDomPyl d |
| Response information of the first request stop information | UpdateFixKe ys | NA | 1 or 2 | Response | Fixed key update | At least one of VehicleNoPyld, SecDomainPyld, or ResultPyld |
| Fourth finish information | UpdateFixKe ys | BuildKeysF inished | 1 | Request (used to indicate that the node in the first communi cation domain finishes configure tion of the key) | Fixed key update | At least one of VehicleNoPyld, KeySecDomPyl d, or ResultPyld |
| Response information of the fourth finish information | UpdateFixKe ys | NA | 1 or 2 | Response | Fixed key update | VehicleNoPyld or format that does not use a TLV |
| First progress notification information | UpdateFixKe ys | StartUpdate KeysProc | 1 or 2 | Notificati on (used to indicate the progress of obtaining the key) | Fixed key update | At least one of KeySecDomPyl d, SecDomainPyld, or ProgPyld |
| Information that carries the first information and/or the first verification code in S502 or S802 | ValidateKeys | StartBuildK eys | 2 | Request (used to trigger key verificati on between the key server and the first node) | Key self-verification (stage 1) | KeyValidPyld |
| Information that carries the third information and/or the third verification code in S1002 | ValidateKeys | StartBuildK eys | 2 | Request (used to trigger key verificati on between the key proxy and the second node) | Key self-verification (stage 1) | KeyValidPyld |
| Information that carries the second information and/or the second verification code in S602 | ValidateKeys | NA | 2 | Response | Key self-verification (stage 1) | At least one of KeyValidPyld or ResultPyld |
| Information that carries the fourth information and/or the fourth verification code in S1102 | ValidateKeys | NA | 2 | Response | Key self-verification (stage 1) | At least one of KeyValidPyld or ResultPyld |
| Third request stop information | ValidateKeys | StopBuildK eys | 2 | Request (used to request to stop key verificati on) | Key self-verification (stage 1) | KeySecDomPyl d |
| Response information of the third request stop information | ValidateKeys | NA | 2 | Response | Key self-verification (stage 1) | KeySecDomPyl d |
| Second finish information | ValidateKeys | BuildKeysF inished | 2 | Request (used to indicate whether the key client successfu lly verifies the first verificati on code) | Key self-verification (stage 1) | At least one of KeySecDomPyl d or ResultPyld |
| Response information of the second finish information | ValidateKeys | NA | 2 | Response | Key self-verification (stage 1) | NULL |
| Fourth progress notification information | ValidateKeys | StartUpdate KeysProc | 2 | Notificati on (used to indicate the progress of key verificati on between the second node and the key proxy) | Key self-verification (stage 1) | At least one of KeySecDomPyl d or ProgPyld |
| First request deletion information | DeleteOldKey s | StartBuildK eys | 2 | Request (used to request to delete the key before update) | Long-term/Fixed key update | KeySecDomPyl d |
| Second request deletion information | DeleteOldKey s | StartBuildK eys | 2 | Request (used to request the second node to delete the key before update) | Long-term/Fixed key update | KeySecDomPyl d |
| Response information of the first request deletion information | DeleteOldKey s | NA | 2 | Response | Long-term/Fixed key update | At least one of KeySecDomPyl d or ResultPyld |
| Response information of the second request deletion information | DeleteOldKey s | NA | 2 | Response | Long-term/Fixed key update | At least one of KeySecDomPyl d or ResultPyld |
| First deletion stop information | DeleteOldKey s | StopBuildK eys | 2 | Request (used to indicate to stop deleting the key before update) | Long-term/Fixed key update | KeySecDomPyl d |
| Response information of the first deletion stop information | DeleteOldKey s | NA | 2 | Response | Long-term/Fixed key update | At least one of KeySecDomPyl d or ResultPyld |
| First finish information | DeleteOldKey s | BuildKeysF inished | 2 | Request (used to indicate that the key before update has been deleted) | Long-term/Fixed key update | At least one of KeySecDomPyl d or ResultPyld |
| Response information of the first finish information | DeleteOldKey s | NA | 2 | Response | Long-term/Fixed key update | NULL |
| Second progress notification information | DeleteOldKey s | StartUpdate KeysProc | 2 | Notificati on (used to indicate the progress of deleting the key before update) | Long-term/Fixed key update | At least one of KeySecDomPyl d or ProgPyld |

The foregoing mainly describes the methods provided in embodiments of this application from a perspective of interaction between network elements. It may be understood that, to implement the foregoing functions, the key server, the key proxy, the key client, or the like includes corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the key server, the key proxy, or the client may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

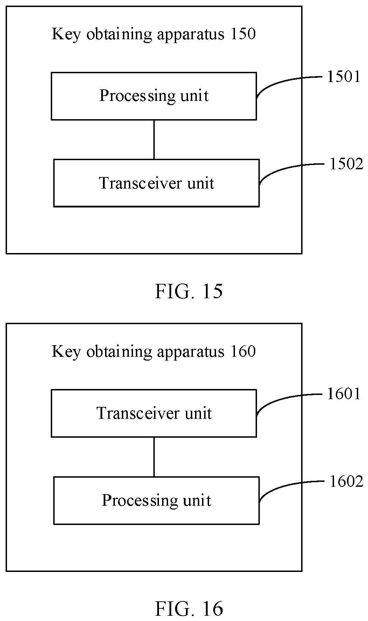

For example, in a case in which functional modules are obtained through division in an integrated manner, FIG. 15 is a schematic diagram of a structure of a key obtaining apparatus 150. The key obtaining apparatus 150 includes a processing unit 1501 and a transceiver unit 1502.

For example, the key obtaining apparatus 150 is configured to implement a function of a key server. The key obtaining apparatus 150 is, for example, the key server in the embodiment shown in FIG. 4 to the embodiment shown in FIG. 11.

In this embodiment of this application, the key obtaining apparatus 150 may be a key server, or may be a chip used in the key server or another combined device or component that has a function of the key server. When the key obtaining apparatus 150 is the key server, the processing unit 1501 may be a processor (or a processing circuit), for example, a baseband processor. The baseband processor may include one or more CPUs. The transceiver unit 1502 may be a transceiver, and the transceiver may include an antenna, a radio frequency circuit, and the like. When the key obtaining apparatus 150 is the component that has the function of the key server, the processing unit 1501 may be a processor (or a processing circuit), for example, a baseband processor. The transceiver unit 1502 may be a radio frequency unit. When the key obtaining apparatus 150 is a chip system, the processing unit 1501 may be a processor (or a processing circuit) of the chip system, and may include one or more central processing units. The transceiver unit 1502 may be an input/output interface of a chip (for example, a baseband chip). It should be understood that the processing unit 1501 in this embodiment of this application may be implemented by a processor or a processor-related circuit component (or referred to as a processing circuit), and the transceiver unit 1502 may be implemented by a transceiver or a transceiver-related circuit component.

For example, the processing unit 1501 may be configured to perform all operations, except receiving and sending operations, for example, S401, that are performed by the key server in the embodiment shown in FIG. 4, and/or configured to support another process of the technology described in this specification. The transceiver unit 1502 may be configured to perform all receiving and sending operations, for example, S402, that are performed by the key server in the embodiment shown in FIG. 4, and/or configured to support another process of the technology described in this specification.

The processing unit 1501 is configured to obtain first key information, where the first key information includes a first key material and an identifier of a first communication domain, the first key material is used to generate a first key, the identifier of the first communication domain is used to indicate the first communication domain, the first key is applied to the first communication domain, the first communication domain includes at least two nodes in a key management system, and the at least two nodes include a first node.

The transceiver unit 1502 is configured to send the first key information to the first node.

In a possible implementation, the first communication domain is determined based on at least one of the following information: a connection manner of a node in the key management system, a function of the node in the key management system, or a type of communication information in the key management system.

In a possible implementation, the processing unit 1501 is further configured to generate a first verification code based on first verification information, where the first verification information includes at least one of the following information: the first key, the first key material, first information, or an identifier of the key obtaining apparatus 150, and the first information includes at least one of the following information: the identifier of the first communication domain, an identifier of the first key, or a first random number; and the transceiver unit 1502 is further configured to send the first information and the first verification code to the first node.

In a possible implementation, the transceiver unit 1502 is further configured to receive second information and a second verification code from the first node, where the second verification code is generated based on second verification information, the second verification information includes at least one of the following information: the first key, the first key material, the second information, an identifier of the first node, or the first random number, and the second information includes the identifier of the first communication domain and/or the identifier of the first key; and the processing unit 1501 is further configured to verify the second verification code.

In a possible implementation, the processing unit 1501 is further configured to establish a first secure channel with the first node based on a first protocol, where the first secure channel is used to transmit information between the key obtaining apparatus 150 and the first node.

In a possible implementation, a quantity of first nodes is greater than 1, and the first secure channel includes a point-to-point secure channel between the key obtaining apparatus 150 and each first node; the first secure channel includes a point-to-multipoint secure channel between the key obtaining apparatus 150 and each first node; or the first secure channel includes a point-to-point secure channel between the key obtaining apparatus 150 and a part of first nodes and a point-to-multipoint secure channel between the key obtaining apparatus 150 and the other part of first nodes.

In a possible implementation, the first node is the key proxy, the key management system further includes a second node in a communication connection to the first node, and the second node is a key client.

In a possible implementation, the second node is included in the first communication domain.

In a possible implementation, the transceiver unit 1502 is further configured to receive first notification information from the first node, where the first notification information is used to notify a verification result of a node in the first communication domain.

In a possible implementation, the processing unit 1501 is further configured to obtain first configuration information, where the first configuration information is used to indicate at least one of the following information: an identifier of the node in the key management system, the connection manner of the node in the key management system, or information about another node that communicates with the node in the key management system.

In a possible implementation, the transceiver unit 1502 is further configured to send second configuration information to the first node, where the second configuration information is used to indicate at least one of the following information: the identifier of the first node, a connection manner of the first node, or information about another node that communicates with the first node.

In a possible implementation, the first node is the key proxy, the key management system further includes the second node in a communication connection to the first node, the second node is the key client, and the second configuration information is further used to indicate at least one of the following information: an identifier of the second node, a connection manner of the second node, or information about another node that communicates with the second node.

In a possible implementation, the processing unit 1501 is further configured to determine, based on the first configuration information, information about a communication domain in which the key obtaining apparatus 150 is located, where the information about the communication domain in which the key obtaining apparatus 150 is located is used to indicate at least one of the following information: an identifier of the communication domain in which the key obtaining apparatus 150 is located, a communication manner of a node in the communication domain in which the key obtaining apparatus 150 is located, a connection manner between the key obtaining apparatus 150 and a node other than the key obtaining apparatus 150 in the communication domain in which the key obtaining apparatus 150 is located, information about the node other than the key obtaining apparatus 150 in the communication domain in which the key obtaining apparatus 150 is located, or key information for building a key in the communication domain in which the key obtaining apparatus 150 is located.

In a possible implementation, the transceiver unit 1502 is further configured to receive first acknowledgment information from a key manager tool; the transceiver unit 1502 is further configured to receive first acknowledgment information from a first terminal; or the transceiver unit 1502 is further configured to receive first acknowledgment information from a second terminal, where the first acknowledgment information is used to trigger the key obtaining apparatus 150 to obtain the first key information.

In a possible implementation, the first protocol includes a transport layer security protocol, an internet key exchange protocol, a hypertext transfer protocol secure protocol, a datagram transport layer security protocol, or a user-defined protocol.

When the key obtaining apparatus 150 is configured to implement the function of the key server, for another function that can be implemented by the key obtaining apparatus 150, refer to related descriptions of the embodiment shown in FIG. 4 to the embodiment shown in FIG. 11. Details are not described.

For example, in a case in which functional modules are obtained through division in an integrated manner, FIG. 16 is a schematic diagram of a structure of a key obtaining apparatus 160. The key obtaining apparatus 160 includes a transceiver unit 1601 and a processing unit 1602.

For example, the key obtaining apparatus 160 is configured to implement a function of a first node. For example, the key obtaining apparatus 160 is the key client in the embodiment shown in FIG. 4 to the embodiment shown in FIG. 6. For another example, the key obtaining apparatus 160 is the key proxy in the embodiment shown in FIG. 7 to the embodiment shown in FIG. 11.

In this embodiment of this application, the key obtaining apparatus 160 may be a key client/key proxy, or may be a chip used in the key client/key proxy or another combined device or component that has a function of the key client/key proxy. When the key obtaining apparatus 160 is the key client/key proxy, the transceiver unit 1601 may be a transceiver, and the transceiver may include an antenna, a radio frequency circuit, and the like. The processing unit 1602 may be a processor (or a processing circuit), for example, a baseband processor, and the baseband processor may include one or more CPUs. When the key obtaining apparatus 160 is the component that has the function of the key client/key proxy, the transceiver unit 1601 may be a radio frequency unit, and the processing unit 1602 may be a processor (or a processing circuit), for example, a baseband processor. When the key obtaining apparatus 160 is a chip system, the transceiver unit 1601 may be an input/output interface of a chip (for example, a baseband chip). The processing unit 1602 may be a processor (or a processing circuit) of the chip system, and may include one or more central processing units. It should be understood that the transceiver unit 1601 in this embodiment of this application may be implemented by a transceiver or a transceiver-related circuit component, and the processing unit 1602 may be implemented by a processor or a processor-related circuit component (or referred to as a processing circuit).

For example, the transceiver unit 1601 may be configured to perform all receiving and sending operations, for example, S402, that are performed by the key client in the embodiment shown in FIG. 4, and/or configured to support another process of the technology described in this specification. The processing unit 1602 may be configured to perform all operations, except receiving and sending operations, for example, S403, that are performed by the key client in the embodiment shown in FIG. 4, and/or configured to support another process of the technology described in this specification.

For another example, the transceiver unit 1601 may be configured to perform all receiving and sending operations, for example, S702 and S704, that are performed by the key proxy in the embodiment shown in FIG. 7, and/or configured to support another process of the technology described in this specification. The processing unit 1602 may be configured to perform all operations, except receiving and sending operations, for example, S703, that are performed by the key proxy in the embodiment shown in FIG. 7, and/or configured to support another process of the technology described in this specification.

The transceiver unit 1601 is configured to receive first key information from a key server, where the first key information includes a first key material and an identifier of a first communication domain, and the identifier of the first communication domain is used to indicate the first communication domain.

The processing unit 1602 is configured to generate a first key based on the first key material, where the first key is applied to the first communication domain, the first communication domain includes at least two nodes in a key management system, and the at least two nodes include the key obtaining apparatus 160.

In a possible implementation, the first communication domain is determined based on at least one of the following information: a connection manner of a node in the key management system, a function of the node in the key management system, or a type of communication information in the key management system.

In a possible implementation, the transceiver unit 1601 is further configured to receive first information and a first verification code from the key server, where the first verification code is generated based on first verification information, the first verification information includes at least one of the following information: the first key, the first key material, the first information, or an identifier of the key server, and the first information includes at least one of the following information: the identifier of the first communication domain, an identifier of the first key, or a first random number; and the transceiver unit 1601 is further configured to verify the first verification code.

In a possible implementation, the processing unit 1602 is further configured to generate a second verification code based on second verification information, where the second verification information includes at least one of the following information: the first key, the first key material, second information, an identifier of the key obtaining apparatus 160, or the first random number, and the second information includes the identifier of the first communication domain and/or the identifier of the first key; and the transceiver unit 1601 is further configured to send the second information and the second verification code to the key server.

In a possible implementation, the processing unit 1602 is further configured to establish a first secure channel with the key server based on a first protocol, where the first secure channel is used to transmit information between the key server and the key obtaining apparatus 160.

In a possible implementation, a quantity of key obtaining apparatuses 160 is greater than 1, and the first secure channel includes a point-to-point secure channel between the key server and each key obtaining apparatus 160; the first secure channel includes a point-to-multipoint secure channel between the key server and each key obtaining apparatus 160; or the first secure channel includes a point-to-point secure channel between the key server and a part of key obtaining apparatuses 160 and a point-to-multipoint secure channel between the key server and the other part of key obtaining apparatuses 160.

In a possible implementation, the key obtaining apparatus 160 is a key proxy, the key management system further includes a second node in a communication connection to the key obtaining apparatus 160, and the second node is a key client.

In a possible implementation, the second node is included in the first communication domain. The transceiver unit 1601 is further configured to send the first key material and the identifier of the first communication domain to the second node.

In a possible implementation, the processing unit 1602 is further configured to generate a third verification code based on third verification information, where the third verification information includes at least one of the following information: the first key, the first key material, third information, or the identifier of the key obtaining apparatus 160, and the third information includes at least one of the following information: the identifier of the first communication domain, the identifier of the first key, or a second random number; and the transceiver unit 1601 is further configured to send the third information and the third verification code to the second node.

In a possible implementation, the transceiver unit 1601 is further configured to receive fourth information and a fourth verification code from the second node, where the fourth verification code is obtained based on fourth verification information, the fourth verification information includes at least one of the following information: the first key, the first key material, the fourth information, an identifier of the second node, or the second random number, and the fourth information includes the identifier of the first communication domain and/or the identifier of the first key; and the processing unit 1602 is further configured to verify the fourth verification code.

In a possible implementation, the transceiver unit 1601 is further configured to send first notification information to the key server, where the first notification information is used to notify a verification result of a node in the first communication domain.

In a possible implementation, the processing unit 1602 is further configured to establish a second secure channel with the second node based on the first protocol, where the second secure channel is used to transmit information between the key obtaining apparatus 160 and the second node.

In a possible implementation, a quantify of second nodes is greater than 1, and the second secure channel includes a point-to-point secure channel between the key obtaining apparatus 160 and each second node; the second secure channel includes a point-to-multipoint secure channel between the key obtaining apparatus 160 and each second node; or the second secure channel includes a point-to-point secure channel between the key obtaining apparatus 160 and a part of second nodes and a point-to-multipoint secure channel between the key obtaining apparatus 160 and the other part of second nodes.

In a possible implementation, the transceiver unit 1601 is further configured to receive second configuration information from the key server, where the second configuration information is used to indicate at least one of the following information: the identifier of the key obtaining apparatus 160, a connection manner of the key obtaining apparatus 160, or information about another node that communicates with the key obtaining apparatus 160.

In a possible implementation, the key obtaining apparatus 160 is a key proxy, the key management system further includes the second node in a communication connection to the key obtaining apparatus 160, the second node is a key client, and the second configuration information is further used to indicate at least one of the following information: the identifier of the second node, a connection manner of the second node, or information about another node that communicates with the second node; and the transceiver unit 1601 is further configured to send third configuration information to the second node, where the third configuration information is used to indicate at least one of the following information: the identifier of the second node, the connection manner of the second node, or the information about the another node that communicates with the second node.

In a possible implementation, the processing unit 1602 is further configured to determine, based on the second configuration information, information about a communication domain in which the key obtaining apparatus 160 is located, where the information about the communication domain in which the key obtaining apparatus 160 is located is used to indicate at least one of the following information: an identifier of the communication domain in which the key obtaining apparatus 160 is located, a communication manner of a node in the communication domain in which the key obtaining apparatus 160 is located, a connection manner between the key obtaining apparatus 160 and a node other than the key obtaining apparatus 160 in the communication domain in which the key obtaining apparatus 160 is located, information about the node other than the key obtaining apparatus 160 in the communication domain in which the key obtaining apparatus 160 is located, or key information for building a key in the communication domain in which the key obtaining apparatus 160 is located.

In a possible implementation, the first protocol includes a transport layer security protocol, an internet key exchange protocol, a hypertext transfer protocol secure protocol, a datagram transport layer security protocol, or a user-defined protocol.

When the key obtaining apparatus 160 is configured to implement the function of the first node, for another function that can be implemented by the key obtaining apparatus 160, refer to related descriptions of the embodiment shown in FIG. 4 to the embodiment shown in FIG. 11. Details are not described.

Alternatively, for example, the key obtaining apparatus 160 is configured to implement a function of the second node. The key obtaining apparatus 160 is, for example, the second node in the embodiment shown in FIG. 7 to the embodiment shown in FIG. 11.

In this embodiment of this application, the key obtaining apparatus 160 may be a second node, or may be a chip used in the second node or another combined device or component that has a function of the second node. When the key obtaining apparatus 160 is the second node, the transceiver unit 1601 may be a transceiver, and the transceiver may include an antenna, a radio frequency circuit, and the like. The processing unit 1602 may be a processor (or a processing circuit), for example, a baseband processor, and the baseband processor may include one or more CPUs. When the key obtaining apparatus 160 is the component that has the function of the second node, the transceiver unit 1601 may be a radio frequency unit, and the processing unit 1602 may be a processor (or a processing circuit), for example, a baseband processor. When the key obtaining apparatus 160 is a chip system, the transceiver unit 1601 may be an input/output interface of a chip (for example, a baseband chip). The processing unit 1602 may be a processor (or a processing circuit) of the chip system, and may include one or more central processing units. It should be understood that the transceiver unit 1601 in this embodiment of this application may be implemented by a transceiver or a transceiver-related circuit component, and the processing unit 1602 may be implemented by a processor or a processor-related circuit component (or referred to as a processing circuit).

For example, the transceiver unit 1601 may be configured to perform all receiving and sending operations, for example, S704, that are performed by the second node in the embodiment shown in FIG. 7, and/or configured to support another process of the technology described in this specification. The processing unit 1602 may be configured to perform all operations, except receiving and sending operations, for example, S705, that are performed by the second node in the embodiment shown in FIG. 7, and/or configured to support another process of the technology described in this specification.

The transceiver unit 1601 is configured to receive a first key material and an identifier of a first communication domain from a key proxy, where the identifier of the first communication domain is used to indicate the first communication domain.

The processing unit 1602 is configured to generate a first key based on the first key material, where the first key is applied to the first communication domain, the first communication domain includes at least two nodes in a key management system, and the at least two nodes include the key obtaining apparatus 160.

In a possible implementation, the first communication domain is determined based on at least one of the following information: a connection manner of a node in the key management system, a function of the node in the key management system, or a type of communication information in the key management system.

In a possible implementation, the transceiver unit 1601 is further configured to receive third information and a third verification code from the key proxy, where the third verification code is obtained based on third verification information, the third verification information includes at least one of the following information: the first key, the first key material, the third information, or an identifier of the key proxy, and the third information includes at least one of the following information: the identifier of the first communication domain, an identifier of the first key, or a second random number; and the processing unit 1602 is further configured to verify the third verification code.

In a possible implementation, the processing unit 1602 is further configured to generate a fourth verification code based on fourth verification information, where the fourth verification information includes at least one of the following information: the first key, the first key material, fourth information, an identifier of the key obtaining apparatus 160, or the second random number, and the fourth information includes the identifier of the first communication domain and/or the identifier of the first key; and the transceiver unit 1601 is further configured to send the fourth information and the fourth verification code to the key proxy.

In a possible implementation, the processing unit 1602 is further configured to establish a second secure channel with the key proxy based on a first protocol, where the second secure channel is used to transmit information between the key obtaining apparatus 160 and the key proxy.

In a possible implementation, a quantity of key obtaining apparatuses 160 is greater than 1, and the second secure channel includes a point-to-point secure channel between the key proxy and each key obtaining apparatus 160; the second secure channel includes a point-to-multipoint secure channel between the key proxy and each key obtaining apparatus 160; or the second secure channel includes a point-to-point secure channel between the key proxy and a part of key obtaining apparatuses 160 and a point-to-multipoint secure channel between the key proxy and the other part of key obtaining apparatuses 160.

In a possible implementation, the transceiver unit 1601 is further configured to receive third configuration information from the key proxy, where the third configuration information is used to indicate at least one of the following information: the identifier of the key obtaining apparatus 160, a connection manner of the key obtaining apparatus 160, or information about another node that communicates with the key obtaining apparatus 160.

In a possible implementation, the processing unit 1602 is further configured to determine, based on the third configuration information, information about a communication domain in which the key obtaining apparatus 160 is located, where the information about the communication domain in which the key obtaining apparatus 160 is located is used to indicate at least one of the following information: an identifier of the communication domain in which the key obtaining apparatus 160 is located, a communication manner of a node in the communication domain in which the key obtaining apparatus 160 is located, a connection manner between the key obtaining apparatus 160 and a node other than the key obtaining apparatus 160 in the communication domain in which the key obtaining apparatus 160 is located, information about the node other than the key obtaining apparatus 160 in the communication domain in which the key obtaining apparatus 160 is located, or key information for building a key in the communication domain in which the key obtaining apparatus 160 is located.

In a possible implementation, the first protocol is a transport layer security protocol, an internet key exchange protocol, a hypertext transfer protocol secure protocol, a datagram transport layer security protocol, or a user-defined protocol.

When the key obtaining apparatus 160 is configured to implement the function of the second node, for another function that can be implemented by the key obtaining apparatus 160, refer to related descriptions of the embodiment shown in FIG. 7 to the embodiment shown in FIG. 11. Details are not described.

The foregoing descriptions of implementations allow a person skilled in the art to clearly understand that, for the purpose of convenient and brief description, division of the foregoing functional modules is used as an example for illustration. During actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, like a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A key obtaining method, wherein the method is applied to a key management system, the key management system comprises a key server and a first node in a communication connection to the key server, the first node is a key client or a key proxy, and the method comprises:
obtaining, by the key server, first key information, wherein the first key information comprises a first key material and an identifier of a first communication domain, the first key material is used to generate a first key, the identifier of the first communication domain is used to indicate the first communication domain, the first key is applied to the first communication domain, the first communication domain comprises at least two nodes in the key management system, and the at least two nodes comprise the first node; and
sending, by the key server, the first key information to the first node.

2. The key obtaining method according to claim 1, wherein the first communication domain is determined based on at least one of the following information: a connection manner of a node in the key management system, a function of the node in the key management system, or a type of communication information in the key management system.

3. The method according to claim 1 or 2, wherein the method further comprises:
generating, by the key server, a first verification code based on first verification information, wherein the first verification information comprises at least one of the following information: the first key, the first key material, first information, or an identifier of the key server, and the first information comprises at least one of the following information: the identifier of the first communication domain, an identifier of the first key, or a first random number; and
sending, by the key server, the first information and the first verification code to the first node.

4. The method according to any one of claims 1 to 3, wherein the method further comprises:
receiving, by the key server, second information and a second verification code from the first node, wherein the second verification code is generated based on second verification information, the second verification information comprises at least one of the following information: the first key, the first key material, the second information, an identifier of the first node, or the first random number, and the second information comprises the identifier of the first communication domain and/or the identifier of the first key; and
verifying, by the key server, the second verification code.

5. The method according to any one of claims 1 to 4, wherein the method further comprises:
establishing, by the key server, a first secure channel with the first node based on a first protocol, wherein the first secure channel is used to transmit information between the key server and the first node.

6. The method according to claim 5, wherein a quantity of first nodes is greater than 1, and the first secure channel comprises a point-to-point secure channel between the key server and each first node;
the first secure channel comprises a point-to-multipoint secure channel between the key server and each first node; or
the first secure channel comprises a point-to-point secure channel between the key server and a part of first nodes and a point-to-multipoint secure channel between the key server and the other part of first nodes.

7. The method according to any one of claims 1 to 6, wherein the first node is the key proxy, the key management system further comprises a second node in a communication connection to the first node, and the second node is a key client.

8. The method according to claim 7, wherein the second node is comprised in the first communication domain.

9. The method according to claim 7 or 8, wherein the method further comprises:
receiving, by the key server, first notification information from the first node, wherein the first notification information is used to notify a verification result of a node in the first communication domain.

10. The method according to any one of claims 1 to 9, wherein the method further comprises:
obtaining, by the key server, first configuration information, wherein the first configuration information is used to indicate at least one of the following information: an identifier of the node in the key management system, the connection manner of the node in the key management system, or information about another node that communicates with the node in the key management system.

11. The method according to claim 10, wherein the method further comprises:
sending, by the key server, second configuration information to the first node, wherein the second configuration information is used to indicate at least one of the following information: the identifier of the first node, a connection manner of the first node, or information about another node that communicates with the first node.

12. The method according to claim 11, wherein the first node is the key proxy, the key management system further comprises the second node in a communication connection to the first node, the second node is the key client, and the second configuration information is further used to indicate at least one of the following information: an identifier of the second node, a connection manner of the second node, or information about another node that communicates with the second node.

13. The method according to any one of claims 10 to 12, wherein the method further comprises:
determining, by the key server based on the first configuration information, information about a communication domain in which the key server is located, wherein the information about the communication domain in which the key server is located is used to indicate at least one of the following information: an identifier of the communication domain in which the key server is located, a communication manner of a node in the communication domain in which the key server is located, a connection manner between the key server and a node other than the key server in the communication domain in which the key server is located, information about the node other than the key server in the communication domain in which the key server is located, or key information for building a key of the communication domain in which the key server is located.

14. The method according to any one of claims 1 to 13, wherein the method further comprises:
receiving, by the key server, first acknowledgment information from a key manager tool;
receiving, by the key server, first acknowledgment information from a first terminal; or
receiving, by the key server, first acknowledgment information from a second terminal, wherein
the first acknowledgment information is used to trigger the key server to obtain the first key information.

15. A key obtaining method, wherein the method is applied to a key management system, the key management system comprises a key server and a first node in a communication connection to the key server, the first node is a key client or a key proxy, and the method comprises:
receiving, by the first node, first key information from the key server, wherein the first key information comprises a first key material and an identifier of a first communication domain, and the identifier of the first communication domain is used to indicate the first communication domain; and
generating, by the first node, a first key based on the first key material, wherein the first key is applied to the first communication domain, the first communication domain comprises at least two nodes in the key management system, and the at least two nodes comprise the first node.

16. The key obtaining method according to claim 15, wherein the first communication domain is determined based on at least one of the following information: a connection manner of a node in the key management system, a function of the node in the key management system, or a type of communication information in the key management system.

17. The method according to claim 15 or 16, wherein the method further comprises:
receiving, by the first node, first information and a first verification code from the key server, wherein the first verification code is generated based on first verification information, the first verification information comprises at least one of the following information: the first key, the first key material, the first information, or an identifier of the key server, and the first information comprises at least one of the following information: the identifier of the first communication domain, an identifier of the first key, or a first random number; and
verifying, by the first node, the first verification code.

18. The method according to any one of claims 15 to 17, wherein the method further comprises:
generating, by the first node, a second verification code based on second verification information, wherein the second verification information comprises at least one of the following information: the first key, the first key material, second information, an identifier of the first node, or the first random number, and the second information comprises the identifier of the first communication domain and/or the identifier of the first key; and
sending, by the first node, the second information and the second verification code to the key server.

19. The method according to any one of claims 15 to 18, wherein the method further comprises:
establishing, by the first node, a first secure channel with the key server based on a first protocol, wherein the first secure channel is used to transmit information between the key server and the first node.

20. The method according to claim 19, wherein a quantity of first nodes is greater than 1, and
the first secure channel comprises a point-to-point secure channel between the key server and each first node;
the first secure channel comprises a point-to-multipoint secure channel between the key server and each first node; or
the first secure channel comprises a point-to-point secure channel between the key server and a part of first nodes and a point-to-multipoint secure channel between the key server and the other part of first nodes.

21. The method according to any one of claims 15 to 20, wherein the first node is the key proxy, the key management system further comprises a second node in a communication connection to the first node, and the second node is a key client.

22. The method according to claim 21, wherein the second node is comprised in the first communication domain; and
the method further comprises:
sending, by the first node, the first key material and the identifier of the first communication domain to the second node.

23. The method according to claim 22, wherein the method further comprises:
generating, by the first node, a third verification code based on third verification information, wherein the third verification information comprises at least one of the following information: the first key, the first key material, third information, or the identifier of the first node, and the third information comprises at least one of the following information: the identifier of the first communication domain, the identifier of the first key, or a second random number; and
sending, by the first node, the third information and the third verification code to the second node.

24. The method according to claim 22 or 23, wherein the method further comprises:
receiving, by the first node, fourth information and a fourth verification code from the second node, wherein the fourth verification code is obtained based on fourth verification information, the fourth verification information comprises at least one of the following information: the first key, the first key material, the fourth information, an identifier of the second node, or the second random number, and the fourth information comprises the identifier of the first communication domain and/or the identifier of the first key; and
verifying, by the first node, the fourth verification code.

25. The method according to claim 23 or 24, wherein the method further comprises:
sending, by the first node, first notification information to the key server, wherein the first notification information is used to notify a verification result of a node in the first communication domain.

26. The method according to any one of claims 21 to 25, wherein the method further comprises:
establishing, by the first node, a second secure channel with the second node based on the first protocol, wherein the second secure channel is used to transmit information between the first node and the second node.

27. The method according to claim 26, wherein a quantity of second nodes is greater than 1, and
the second secure channel comprises a point-to-point secure channel between the first node and each second node;
the second secure channel comprises a point-to-multipoint secure channel between the first node and each second node; or
the second secure channel comprises a point-to-point secure channel between the first node and a part of second nodes and a point-to-multipoint secure channel between the first node and the other part of second nodes.

28. The method according to any one of claims 15 to 27, wherein the method further comprises:
receiving, by the first node, second configuration information from the key server, wherein the second configuration information is used to indicate at least one of the following information: the identifier of the first node, a connection manner of the first node, or information about another node that communicates with the first node.

29. The method according to claim 28, wherein the first node is the key proxy, the key management system further comprises the second node in a communication connection to the first node, the second node is the key client, and the second configuration information is further used to indicate at least one of the following information: the identifier of the second node, a connection manner of the second node, or information about another node that communicates with the second node; and
the method further comprises:
sending, by the first node, third configuration information to the second node, wherein the third configuration information is used to indicate at least one of the following information: the identifier of the second node, the connection manner of the second node, or the information about the another node that communicates with the second node.

30. The method according to claim 28 or 29, wherein the method further comprises:
determining, by the first node based on the second configuration information, information about a communication domain in which the first node is located, wherein the information about the communication domain in which the first node is located is used to indicate at least one of the following information: an identifier of the communication domain in which the first node is located, a communication manner of a node in the communication domain in which the first node is located, a connection manner between the first node and a node other than the first node in the communication domain in which the first node is located, information about the node other than the first node in the communication domain in which the first node is located, or key information for building a key of the communication domain in which the first node is located.

31. A key obtaining method, wherein the method is applied to a key management system, the key management system comprises a key server, a key proxy in a communication connection to the key server, and a key client in a communication connection to the key proxy, and the method comprises:
receiving, by the key client, a first key material and an identifier of a first communication domain from the key proxy, wherein the identifier of the first communication domain is used to indicate the first communication domain; and
generating, by the key client, a first key based on the first key material, wherein the first key is applied to the first communication domain, the first communication domain comprises at least two nodes in the key management system, and the at least two nodes comprise the key client.

32. The key obtaining method according to claim 31, wherein the first communication domain is determined based on at least one of the following information: a connection manner of a node in the key management system, a function of the node in the key management system, or a type of communication information in the key management system.

33. The method according to claim 31 or 32, wherein the method further comprises:
receiving, by the key client, third information and a third verification code from the key proxy, wherein the third verification code is obtained based on third verification information, the third verification information comprises at least one of the following information: the first key, the first key material, the third information, or an identifier of the key proxy, and the third information comprises at least one of the following information: the identifier of the first communication domain, an identifier of the first key, or a second random number; and
verifying, by the key client, the third verification code.

34. The method according to any one of claims 31 to 33, wherein the method further comprises:
generating, by the key client, a fourth verification code based on fourth verification information, wherein the fourth verification information comprises at least one of the following information: the first key, the first key material, fourth information, an identifier of the key client, or the second random number, and the fourth information comprises the identifier of the first communication domain and/or the identifier of the first key; and
sending, by the key client, the fourth information and the fourth verification code to the key proxy.

35. The method according to any one of claims 31 to 34, wherein the method further comprises:
establishing, by the key client, a second secure channel with the key proxy based on a first protocol, wherein the second secure channel is used to transmit information between the key client and the key proxy.

36. The method according to claim 35, wherein a quantity of key clients is greater than 1, and the second secure channel comprises a point-to-point secure channel between the key proxy and each key client;
the second secure channel comprises a point-to-multipoint secure channel between the key proxy and each key client; or
the second secure channel comprises a point-to-point secure channel between the key proxy and a part of key clients and a point-to-multipoint secure channel between the key proxy and the other part of key clients.

37. The method according to any one of claims 31 to 36, wherein the method further comprises:
receiving, by the key client, third configuration information from the key proxy, wherein the third configuration information is used to indicate at least one of the following information: the identifier of the key client, a connection manner of the key client, or information about another node that communicates with the key client.

38. The method according to claim 37, wherein the method further comprises:
determining, by the key client based on the third configuration information, information about a communication domain in which the key client is located, wherein the information about the communication domain in which the key client is located is used to indicate at least one of the following information: an identifier of the communication domain in which the key client is located, a communication manner of a node in the communication domain in which the key client is located, a connection manner between the key client and a node other than the key client in the communication domain in which the key client is located, information about the node other than the key client in the communication domain in which the key client is located, or key information for building a key of the communication domain in which the key client is located.

39. A key obtaining apparatus, wherein the key obtaining apparatus is used in a key management system, the key management system comprises the key obtaining apparatus and a first node in a communication connection to the key obtaining apparatus, the first node is a key client or a key proxy, and the key obtaining apparatus comprises a processing unit and a transceiver unit;
the processing unit is configured to obtain first key information, wherein the first key information comprises a first key material and an identifier of a first communication domain, the first key material is used to generate a first key, the identifier of the first communication domain is used to indicate the first communication domain, the first key is applied to the first communication domain, the first communication domain comprises at least two nodes in the key management system, and the at least two nodes comprise the first node; and
the transceiver unit is configured to send the first key information to the first node.

40. The key obtaining apparatus according to claim 39, wherein the first communication domain is determined based on at least one of the following information: a connection manner of a node in the key management system, a function of the node in the key management system, or a type of communication information in the key management system.

41. The key obtaining apparatus according to claim 39 or 40, wherein
the processing unit is further configured to generate a first verification code based on first verification information, wherein the first verification information comprises at least one of the following information: the first key, the first key material, first information, or an identifier of the key obtaining apparatus, and the first information comprises at least one of the following information: the identifier of the first communication domain, an identifier of the first key, or a first random number; and
the transceiver unit is further configured to send the first information and the first verification code to the first node.

42. The key obtaining apparatus according to any one of claims 39 to 41, wherein
the transceiver unit is further configured to receive second information and a second verification code from the first node, wherein the second verification code is generated based on second verification information, the second verification information comprises at least one of the following information: the first key, the first key material, the second information, an identifier of the first node, or the first random number, and the second information comprises the identifier of the first communication domain and/or the identifier of the first key; and
the processing unit is further configured to verify the second verification code.

43. The key obtaining apparatus according to any one of claims 39 to 42, wherein
the processing unit is further configured to establish a first secure channel with the first node based on a first protocol, wherein the first secure channel is used to transmit information between the key obtaining apparatus and the first node.

44. The key obtaining apparatus according to claim 43, wherein a quantity of first nodes is greater than 1, and
the first secure channel comprises a point-to-point secure channel between the key obtaining apparatus and each first node;
the first secure channel comprises a point-to-multipoint secure channel between the key obtaining apparatus and each first node; or
the first secure channel comprises a point-to-point secure channel between the key obtaining apparatus and a part of first nodes and a point-to-multipoint secure channel between the key obtaining apparatus and the other part of first nodes.

45. The key obtaining apparatus according to any one of claims 39 to 44, wherein the first node is the key proxy, the key management system further comprises a second node in a communication connection to the first node, and the second node is a key client.

46. The key obtaining apparatus according to claim 45, wherein the second node is comprised in the first communication domain.

47. The key obtaining apparatus according to claim 45 or 46, wherein
the transceiver unit is further configured to receive first notification information from the first node, wherein the first notification information is used to notify a verification result of a node in the first communication domain.

48. The key obtaining apparatus according to any one of claims 39 to 47, wherein
the processing unit is further configured to obtain first configuration information, wherein the first configuration information is used to indicate at least one of the following information: an identifier of the node in the key management system, the connection manner of the node in the key management system, or information about another node that communicates with the node in the key management system.

49. The key obtaining apparatus according to claim 48, wherein
the transceiver unit is further configured to send second configuration information to the first node, wherein the second configuration information is used to indicate at least one of the following information: the identifier of the first node, a connection manner of the first node, or information about another node that communicates with the first node.

50. The key obtaining apparatus according to claim 49, wherein the first node is the key proxy, the key management system further comprises the second node in a communication connection to the first node, the second node is the key client, and the second configuration information is further used to indicate at least one of the following information: an identifier of the second node, a connection manner of the second node, or information about another node that communicates with the second node.

51. The key obtaining apparatus according to any one of claims 48 to 50, wherein
the processing unit is further configured to determine, based on the first configuration information, information about a communication domain in which the key obtaining apparatus is located, wherein the information about the communication domain in which the key obtaining apparatus is located is used to indicate at least one of the following information: an identifier of the communication domain in which the key obtaining apparatus is located, a communication manner of a node in the communication domain in which the key obtaining apparatus is located, a connection manner between the key obtaining apparatus and a node other than the key obtaining apparatus in the communication domain in which the key obtaining apparatus is located, information about the node other than the key obtaining apparatus in the communication domain in which the key obtaining apparatus is located, or key information for building a key of the communication domain in which the key obtaining apparatus is located.

52. The key obtaining apparatus according to any one of claims 39 to 51, wherein
the transceiver unit is further configured to receive first acknowledgment information from a key manager tool;
the transceiver unit is further configured to receive first acknowledgment information from a first terminal; or
the transceiver unit is further configured to receive first acknowledgment information from a second terminal, wherein
the first acknowledgment information is used to trigger the key obtaining apparatus to obtain the first key information.

53. A key obtaining apparatus, wherein the key obtaining apparatus is used in a key management system, the key management system comprises a key server and the key obtaining apparatus in a communication connection to the key server, the key obtaining apparatus is a key client or a key proxy, and the key obtaining apparatus comprises a transceiver unit and a processing unit;
the transceiver unit is configured to receive first key information from the key server, wherein the first key information comprises a first key material and an identifier of a first communication domain, and the identifier of the first communication domain is used to indicate the first communication domain; and
the processing unit is configured to generate a first key based on the first key material, wherein the first key is applied to the first communication domain, the first communication domain comprises at least two nodes in the key management system, and the at least two nodes comprise the key obtaining apparatus.

54. The key obtaining apparatus according to claim 53, wherein the first communication domain is determined based on at least one of the following information: a connection manner of a node in the key management system, a function of the node in the key management system, or a type of communication information in the key management system.

55. The key obtaining apparatus according to claim 53 or 54, wherein
the transceiver unit is further configured to receive first information and a first verification code from the key server, wherein the first verification code is generated based on first verification information, the first verification information comprises at least one of the following information: the first key, the first key material, the first information, or an identifier of the key server, and the first information comprises at least one of the following information: the identifier of the first communication domain, an identifier of the first key, or a first random number; and
the transceiver unit is further configured to verify the first verification code.

56. The key obtaining apparatus according to any one of claims 53 to 55, wherein
the processing unit is further configured to generate a second verification code based on second verification information, wherein the second verification information comprises at least one of the following information: the first key, the first key material, second information, an identifier of the key obtaining apparatus, or the first random number, and the second information comprises the identifier of the first communication domain and/or the identifier of the first key; and
the transceiver unit is further configured to send the second information and the second verification code to the key server.

57. The key obtaining apparatus according to any one of claims 53 to 55, wherein
the processing unit is further configured to establish a first secure channel with the key server based on a first protocol, wherein the first secure channel is used to transmit information between the key server and the key obtaining apparatus.

58. The key obtaining apparatus according to claim 57, wherein a quantity of key obtaining apparatuses is greater than 1, and
the first secure channel comprises a point-to-point secure channel between the key server and each key obtaining apparatus;
the first secure channel comprises a point-to-multipoint secure channel between the key server and each key obtaining apparatus; or
the first secure channel comprises a point-to-point secure channel between the key server and a part of key obtaining apparatuses and a point-to-multipoint secure channel between the key server and the other part of key obtaining apparatuses.

59. The key obtaining apparatus according to any one of claims 53 to 58, wherein the key obtaining apparatus is a key proxy, the key management system further comprises a second node in a communication connection to the key obtaining apparatus, and the second node is a key client.

60. The key obtaining apparatus according to claim 59, wherein the second node is comprised in the first communication domain; and
the transceiver unit is further configured to send the first key material and the identifier of the first communication domain to the second node.

61. The key obtaining apparatus according to claim 60, wherein
the processing unit is further configured to generate a third verification code based on third verification information, wherein the third verification information comprises at least one of the following information: the first key, the first key material, third information, or the identifier of the key obtaining apparatus, and the third information comprises at least one of the following information: the identifier of the first communication domain, the identifier of the first key, or a second random number; and
the transceiver unit is further configured to send the third information and the third verification code to the second node.

62. The key obtaining apparatus according to claim 60 or 61, wherein
the transceiver unit is further configured to receive fourth information and a fourth verification code from the second node, wherein the fourth verification code is obtained based on fourth verification information, the fourth verification information comprises at least one of the following information: the first key, the first key material, the fourth information, an identifier of the second node, or the second random number, and the fourth information comprises the identifier of the first communication domain and/or the identifier of the first key; and
the processing unit is further configured to verify the fourth verification code.

63. The key obtaining apparatus according to claim 61 or 62, wherein
the transceiver unit is further configured to send first notification information to the key server, wherein the first notification information is used to notify a verification result of a node in the first communication domain.

64. The key obtaining apparatus according to any one of claims 59 to 63, wherein
the processing unit is further configured to establish a second secure channel with the second node based on a first protocol, wherein the second secure channel is used to transmit information between the key obtaining apparatus and the second node.

65. The key obtaining apparatus according to claim 64, wherein a quantity of second nodes is greater than 1, and
the second secure channel comprises a point-to-point secure channel between the key obtaining apparatus and each second node;
the second secure channel comprises a point-to-multipoint secure channel between the key obtaining apparatus and each second node; or
the second secure channel comprises a point-to-point secure channel between the key obtaining apparatus and a part of second nodes and a point-to-multipoint secure channel between the key obtaining apparatus and the other part of second nodes.

66. The key obtaining apparatus according to any one of claims 53 to 65, wherein
the transceiver unit is further configured to receive second configuration information from the key server, wherein the second configuration information is used to indicate at least one of the following information: the identifier of the key obtaining apparatus, a connection manner of the key obtaining apparatus, or information about another node that communicates with the key obtaining apparatus.

67. The key obtaining apparatus according to claim 66, wherein the key obtaining apparatus is a key proxy, the key management system further comprises the second node in a communication connection to the key obtaining apparatus, the second node is a key client, and the second configuration information is further used to indicate at least one of the following information: the identifier of the second node, a connection manner of the second node, or information about another node that communicates with the second node; and
the transceiver unit is further configured to send third configuration information to the second node, wherein the third configuration information is used to indicate at least one of the following information: the identifier of the second node, the connection manner of the second node, or the information about the another node that communicates with the second node.

68. The key obtaining apparatus according to claim 66 or 67, wherein
the processing unit is further configured to determine, based on the second configuration information, information about a communication domain in which the key obtaining apparatus is located, wherein the information about the communication domain in which the key obtaining apparatus is located is used to indicate at least one of the following information: an identifier of the communication domain in which the key obtaining apparatus is located, a communication manner of a node in the communication domain in which the key obtaining apparatus is located, a connection manner between the key obtaining apparatus and a node other than the key obtaining apparatus in the communication domain in which the key obtaining apparatus is located, information about the node other than the key obtaining apparatus in the communication domain in which the key obtaining apparatus is located, or key information for building a key of the communication domain in which the key obtaining apparatus is located.

69. A key obtaining apparatus, wherein the key obtaining apparatus is used in a key management system, the key management system comprises a key server, a key proxy in a communication connection to the key server, and the key obtaining apparatus in a communication connection to the key proxy, and the key obtaining apparatus comprises a transceiver unit and a processing unit;
the transceiver unit is configured to receive a first key material and an identifier of a first communication domain from the key proxy, wherein the identifier of the first communication domain is used to indicate the first communication domain; and
the processing unit is configured to generate a first key based on the first key material, wherein the first key is applied to the first communication domain, the first communication domain comprises at least two nodes in the key management system, and the at least two nodes comprise the key obtaining apparatus.

70. The key obtaining apparatus according to claim 69, wherein the first communication domain is determined based on at least one of the following information: a connection manner of a node in the key management system, a function of the node in the key management system, or a type of communication information in the key management system.

71. The key obtaining apparatus according to claim 69 or 70, wherein
the transceiver unit is further configured to receive third information and a third verification code from the key proxy, wherein the third verification code is obtained based on third verification information, the third verification information comprises at least one of the following information: the first key, the first key material, the third information, or an identifier of the key proxy, and the third information comprises at least one of the following information: the identifier of the first communication domain, an identifier of the first key, or a second random number; and
the processing unit is further configured to verify the third verification code.

72. The key obtaining apparatus according to any one of claims 69 to 71, wherein
the processing unit is further configured to generate a fourth verification code based on fourth verification information, wherein the fourth verification information comprises at least one of the following information: the first key, the first key material, fourth information, an identifier of the key obtaining apparatus, or the second random number, and the fourth information comprises the identifier of the first communication domain and/or the identifier of the first key; and
the transceiver unit is further configured to send the fourth information and the fourth verification code to the key proxy.

73. The key obtaining apparatus according to any one of claims 69 to 72, wherein
the processing unit is further configured to establish a second secure channel with the key proxy based on a first protocol, wherein the second secure channel is used to transmit information between the key obtaining apparatus and the key proxy.

74. The key obtaining apparatus according to claim 73, wherein a quantity of key obtaining apparatuses is greater than 1, and
the second secure channel comprises a point-to-point secure channel between the key proxy and each key obtaining apparatus;
the second secure channel comprises a point-to-multipoint secure channel between the key proxy and each key obtaining apparatus; or
the second secure channel comprises a point-to-point secure channel between the key proxy and a part of key obtaining apparatuses and a point-to-multipoint secure channel between the key proxy and the other part of key obtaining apparatuses.

75. The key obtaining apparatus according to any one of claims 69 to 74, wherein
the transceiver unit is further configured to receive third configuration information from the key proxy, wherein the third configuration information is used to indicate at least one of the following information: the identifier of the key obtaining apparatus, a connection manner of the key obtaining apparatus, or information about another node that communicates with the key obtaining apparatus.

76. The key obtaining apparatus according to claim 75, wherein
the processing unit is further configured to determine, based on the third configuration information, information about a communication domain in which the key obtaining apparatus is located, wherein the information about the communication domain in which the key obtaining apparatus is located is used to indicate at least one of the following information: an identifier of the communication domain in which the key obtaining apparatus is located, a communication manner of a node in the communication domain in which the key obtaining apparatus is located, a connection manner between the key obtaining apparatus and a node other than the key obtaining apparatus in the communication domain in which the key obtaining apparatus is located, information about the node other than the key obtaining apparatus in the communication domain in which the key obtaining apparatus is located, or key information for building a key of the communication domain in which the key obtaining apparatus is located.

77. A computer-readable medium, wherein the computer-readable medium stores a computer program or instructions; and when the computer program or the instructions are executed, a computer is enabled to perform the method according to any one of claims 1 to 14, the method according to any one of claims 15 to 30, or the method according to any one of claims 31 to 38.

78. A computer program product, wherein the computer program product comprises computer program code; and when the computer program code is run on a computer, the computer is enabled to implement the method according to any one of claims 1 to 14, implement the method according to any one of claims 15 to 30, or implement the method according to any one of claims 31 to 38.

79. A key management system, wherein the key management system comprises a key server and a first node, the key server is configured to implement the method according to any one of claims 1 to 14, and the first node is configured to implement the method according to any one of claims 15 to 30.

80. The key management system according to claim 79, wherein the key management system further comprises a second node, and the second node is configured to implement the method according to any one of claims 31 to 38.
